(19) Europäisches Patentamt
European Patent Office
Office européen des brevets

(11) Veröffentlichungsnummer: **0 281 898 B1**

(12) **EUROPÄISCHE PATENTSCHRIFT**

(45) Veröffentlichungstag der Patentschrift: **10.07.91**

(51) Int. Cl.5: **C09B 62/503**, C09B 62/02, D06P 1/38

(21) Anmeldenummer: **88103052.2**

(22) Anmeldetag: **01.03.88**

Die Akte enthält technische Angaben, die nach dem Eingang der Anmeldung eingereicht wurden und die nicht in dieser Patentschrift enthalten sind.

(54) **Reaktivfarbstoffe.**

(30) Priorität: **10.03.87 DE 3707549**

(43) Veröffentlichungstag der Anmeldung:
**14.09.88 Patentblatt 88/37**

(45) Bekanntmachung des Hinweises auf die Patenterteilung:
**10.07.91 Patentblatt 91/28**

(84) Benannte Vertragsstaaten:
**CH DE FR GB LI**

(56) Entgegenhaltungen:
**BE-A- 628 728**
**DE-A- 3 305 881**
**FR-A- 2 167 635**
**JP-A-45 010 789**

(73) Patentinhaber: **BAYER AG**
**W-5090 Leverkusen 1 Bayerwerk(DE)**

(72) Erfinder: **Jäger, Horst, Dr.**
**Carl-Rumpff-Strasse 1**
**W-5090 Leverkusen(DE)**
Erfinder: **Stöhr, Frank-Michael, Dr.**
**Am Thelen-Siefen 10**
**W-5068 Odenthal(DE)**
Erfinder: **Herd, Karl Josef, Dr.**
**Gartenfeld 66**
**W-5068 Odenthal(DE)**
Erfinder: **Henk, Hermann, Dr.**
**Roggendorfstrasse 55**
**W-5000 Köln 80(DE)**
Erfinder: **Schwarz, Max, Dr.**
**Am Wasserturm 18**
**W-5090 Leverkusen 3(DE)**
Erfinder: **Köcher, Jürgen, Dr.**
**Rybniker Strasse 12**
**W-5000 Köln 80(DE)**

EP 0 281 898 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind metallfreie Farbstoffe der Formel

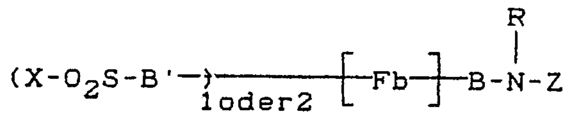

(1)

und deren Metallkomplexe
sowie metallfreie Farbstoffe der Formel

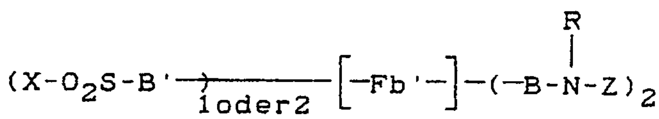

(2)

und deren Metallkomplexe
worin

Fb' = Rest eines Farbstoffes der Monoazo-, Anthrachinon-, Phthalocyanin-, Formazan-, Azomethin-, Dioxazin-, Phenazin-, Xanthen-, Thioxanthon-, Naphthochinon-, Stilben- oder Triphenylmethanreihe,

Fb = Rest eines Farbstoffes der Mono- oder Polyazo-, Anthrachinon-, Phthalocyanin-, Formazan-, Azomethin-, Dioxazin-, Phenazin-, Xanthen-, Thioxanthon-, Naphthochinon-, Stilben oder Triphenylmethanreihe,
wobei die Reste Fb' und Fb eine oder mehrere Sulfonsäuregruppen enthalten,

B bzw. B' = direkte Bindung oder Brückenglied an ein Ring C-Atom eines aromatisch-carbocyclischen oder an ein Ring C- oder N-Atom eines aromatisch-heterocyclischen Ringes in Fb bzw. Fb'.

X = $CH=CH_2$ oder $CH_2CH_2$-Y, worin

Y = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+A^-$ oder

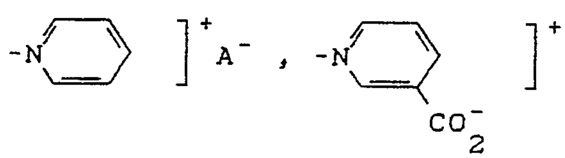

(A = Halogenid oder Sulfat)

R = H oder $C_1$-$C_4$-Alkyl, das gegebenenfalls substituiert sein kann durch Halogen, Hydroxy, Cyan, $C_1$-$C_4$-Alkoxy, Carboxy, Sulfo oder Sulfato.

Z = faserreaktiver Rest der Formel

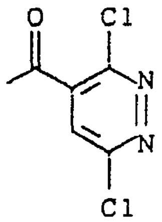 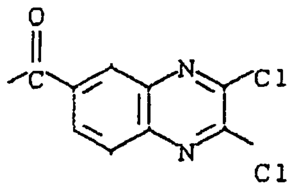 , 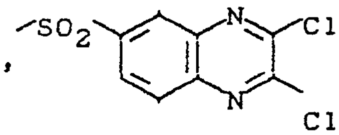 ,

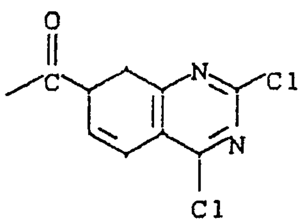 , 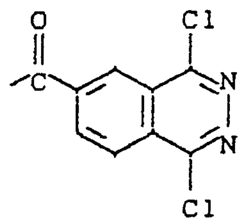 , 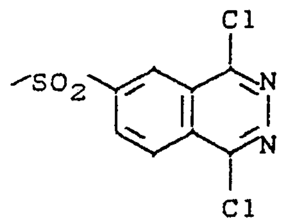 ,

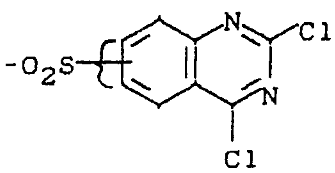 , 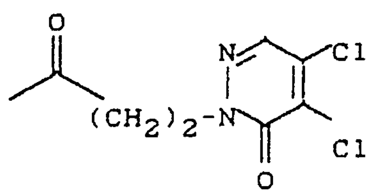 , 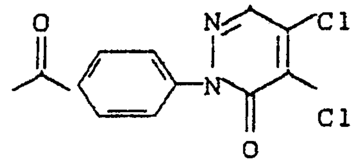 ,

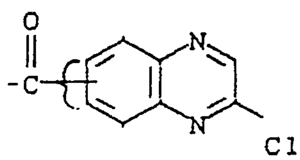 , 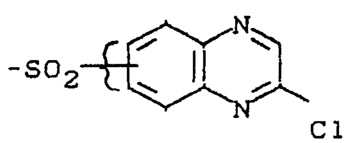 ,

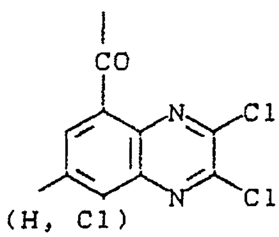 , 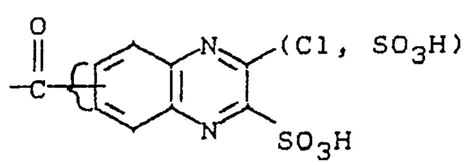 ,

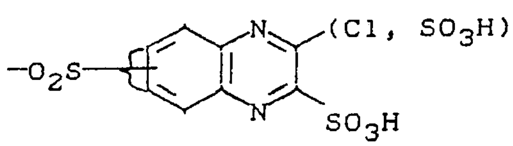 , 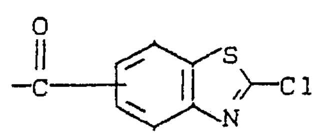 oder

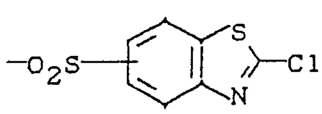

mit Ausnahme der Farbstoffe

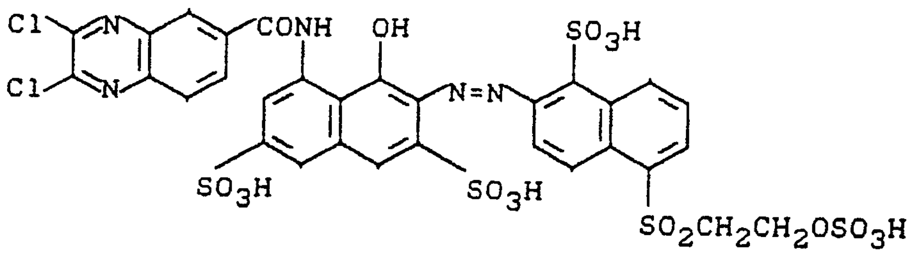

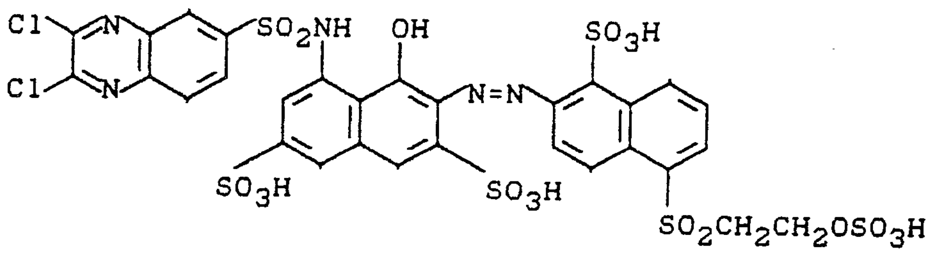

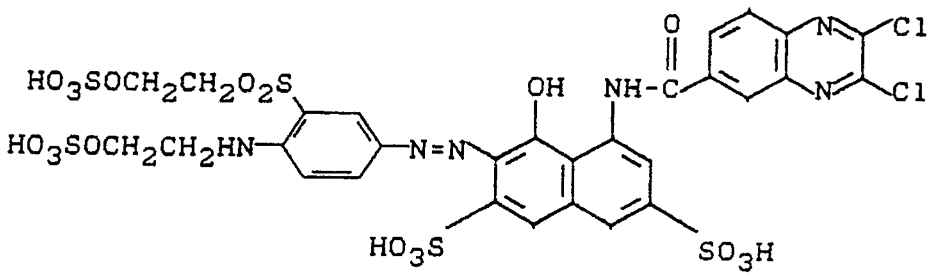

Die aus FR-A-1 332 772 bekannten Anthrachinone weisen keine Sulfonsäuregruppen am Anthrachinonkörper auf. Die aus EP-A- 0 197 418, Beispiel 25 bekannte Verbindung zeigt im Vergleich zu den erfindungsgemäßen Farbstoffen eine sehr schlechte Lichtechtheit.

Beispiele für die Brückenglieder B sind:

$^{*}$-$COCH_2$-, -$CH_2$-, -$CH_2$-$CH_2$-, -$CH_2$-$CH_2$-$CH_2$-, $^{*}$-$SO_2$-$CH_2$-$CH_2$-,
$^{*}$-$CONHCH_2CH_2$-, $^{*}$-$SO_2NH$-$CH_2CH_2$-, $^{*}$-NH-$CH_2CH_2$-, $^{*}$-O-$CH_2CH_2$-,

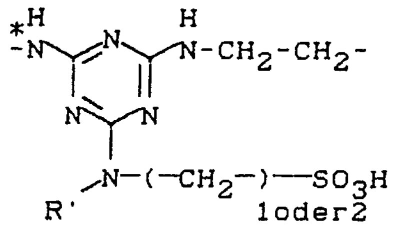

, wobei R' = H oder $CH_3$

R

Der Rest -B-N- kann beispielsweise auch folgende Bedeutung haben:

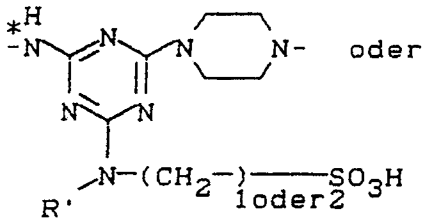

oder

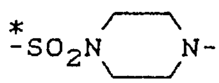

wobei R' = H oder $CH_3$.

Der Stern markiert jeweils die Verknüpfungsstelle des Brückengliedes mit dem Farbstoffrest Fb bzw. Fb'.

Beispiele für die Brückenglieder B' sind:

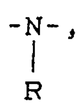, 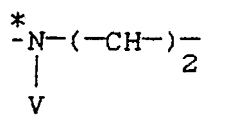, 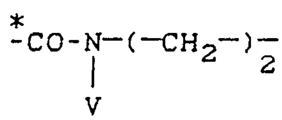, $^{*}$-NH-$CH_2$-$CH_2CH_2$- ,

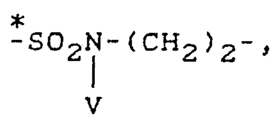

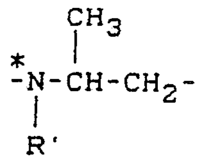 , $\overset{*}{-}NHCH_2CH_2O-CH_2CH_2-$ , $\overset{*}{-}O-CH_2CH_2-$ ,

$\overset{*}{-}NHCO-CH_2CH_2-$ , $\overset{*}{-}NH-CO-CH_2CH_2CH_2-$ ,

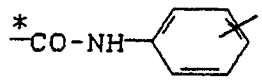 , 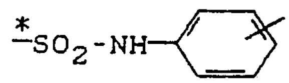 ,

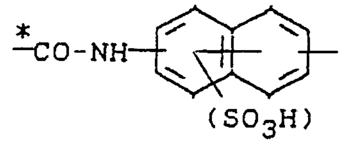 0 oder 1 , 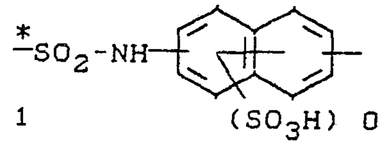 0 oder 1

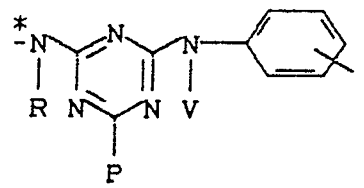 , 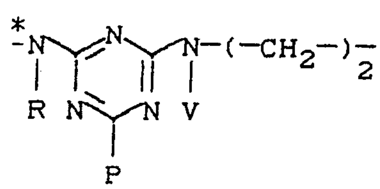 ,

wobei

P = F, Cl, Amino,

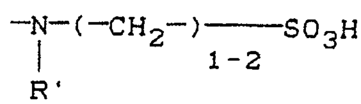

V = H, $CH_3$, $-CH_2CH_2SO_2-X$,

R' = H oder $CH_3$ und

R und X die obengenannte Bedeutung haben.

Die Brückenglieder B und B' können jeweils gleiche oder verschiedene Bedeutung haben.

Der Rest Fb in Formel (1) bzw. Fb' in Formel (2) kann in der üblichen Weise substituiert sein. Als Beispiel für weitere Substituenten an den Resten Fb bzw. Fb' seien genannt: Alkylgruppen mit 1 bis 4 Kohlenstoffatomen, wie Methyl, Ethyl, Propyl, Isopropyl oder Butyl, Alkoxygruppen mit 1 bis 4 Kohlenstoffatomen,
wie Methoxy, Ethoxy, Propoxy, Isopropoxy oder Butoxy, Acylaminogruppen mit 1 bis 8 Kohlenstoffatomen, wie Acetylamino, Propionylamino oder Benzoylamino, Aminogruppe, Alkylaminogruppen mit 1 bis 4 Kohlenstoffatomen, wie Methylamino, Ethylamino, Propylamino, Isopropylamino oder Butylamino, Phenylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo.

Reaktivfarbstoffe der Formel (1) bzw. (2), worin Fb bzw. Fb' der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest R ist, falls es sich um einen Alkylrest handelt, geradkettig oder verzweigt; er kann weitersubstituiert sein.

Als Beispiele für R seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, Sulfomethyl, β-Sulfoethyl, Aminosulfonylmethyl und β-Sulfatoethyl. Vorzugsweise ist R Wasserstoff, Methyl oder Ethyl.

Bevorzugte Farbstoffe (1) sind solche in denen B und B' für eine direkte Bindung steht, weiterhin solche in denen $-SO_2X$ für $-SO_2CH=CH_2$ oder $-SO_2CH_2CH_2OSO_3H$ und solche in denen Z für

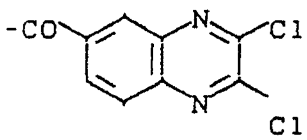 steht,

weiterhin solche die 1 bis 6 wasserlöslichmachende Gruppen, insbesondere Sulfogruppen aufweisen.

Bevorzugte Farbstoffe (1) sind Monoazo- und Polyazofarbstoffe der Formel (1a) sowie deren Metallkomplexe

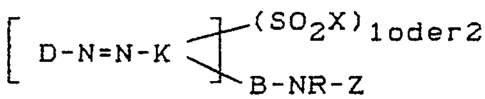 (1a)

worin

D = Rest einer Diazokomponente der Benzol- oder Naphthalinreihe und

K = Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

Die Reste D und K können dabei mit weiteren Azogruppen oder mit azogruppenhaltigen Resten und ebenso, wie es für den Rest Fb der Formel (1) weiter oben aufgeführt ist, substituiert sein.

Besonders bevorzugt sind dabei Farbstoffe der Formeln (1b) und (1c)

$X-SO_2-D-N=N-K-B-NR-W$ (1b)

$W-NR-B-D-N=N-K'-SO_2-X$ (1c)

worin

X = $-CH=CH_2$ oder $CH_2CH_2OSO_3H$,

W = 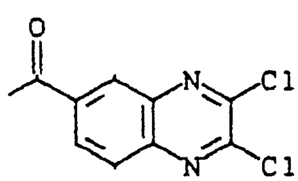 und

K' = Rest einer Kupplungskomponente aus der Pyrazolon-, Pyridon- oder Acetessigsäurearylid-Reihe ist, und

D, K, R und B die bereits obengenannte Bedeutung zukommt.

Beispiele für D sind vorzugsweise gegebenenfalls durch $SO_3H$, Chlor, $C_1$-$C_4$-Alkoxy, $C_1$-$C_4$-Alkyl, Carbalkoxy oder Sulfonamido substituiertes Phenyl bzw. Phenylen, gegebenenfalls durch $SO_3H$, Chlor, $C_1$-$C_4$-Alkoxy oder $C_1$-$C_4$-Alkyl substituiertes Naphthyl bzw. Naphthylen, gegebenenfalls durch $SO_3H$ substituiertes 4-(Phenylazo)phenyl und gegebenenfalls durch $SO_3H$ substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl(bzw. carboxy)-pyrazolon-, einen 6-Hydroxy-2-pyridon- oder einen gegebenenfalls $C_1$-$C_4$-Alkyl- bzw. $C_1$-$C_4$-Alkoxy-ringsubstituierten Acetessigsäurearylid-Rest. Die drei letztgenannten Rest sind auch geeignete Beispiele für K'. K und K' können die üblichen Substituenten, insbesondere Sulfonsäuregruppen aufweisen.

Bevorzugt sind die folgenden Farbstoffe der Formeln (3) bis (58a):

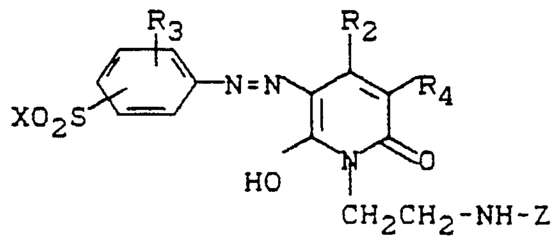

(3)

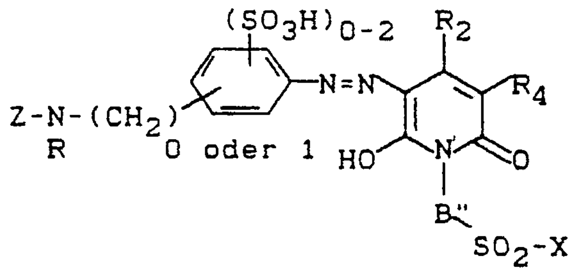

(3a)

B'' = $-(-CH_2-)_{2-3}-$ , 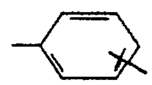

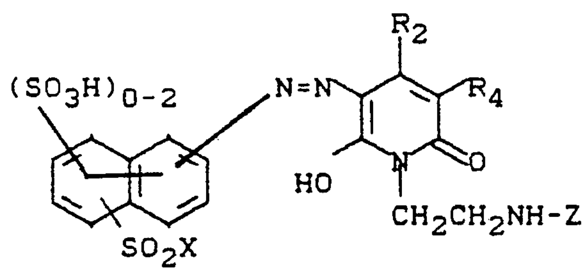

(4)

worin

$R_2$ = H, $C_1$-$C_4$-Alkyl, insbesondere $CH_3$ und $CH_2SO_3H$, COOH,

$R_3$ = H, $C_1$-$C_4$-Alkyl, $C_1$-$C_4$-Alkoxy, Cl, Br, COOH, $SO_3H$

$R_4$ = H, $SO_3H$, $CH_2SO_3H$, Cl, $C_1$-$C_4$-Alkylsulfonyl, Carbonamid, insbesondere $CONH_2$ sowie Carbonsäuremono- und -di-$C_1$-$C_4$-alkylamid.

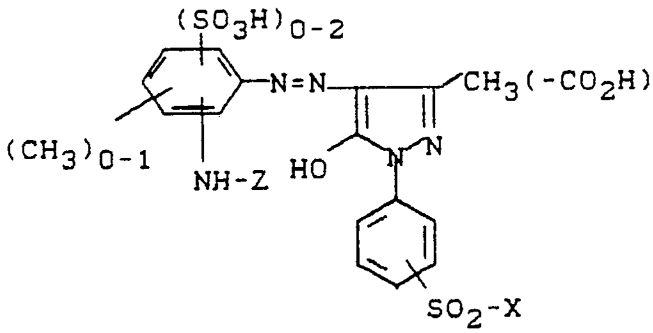

(5)

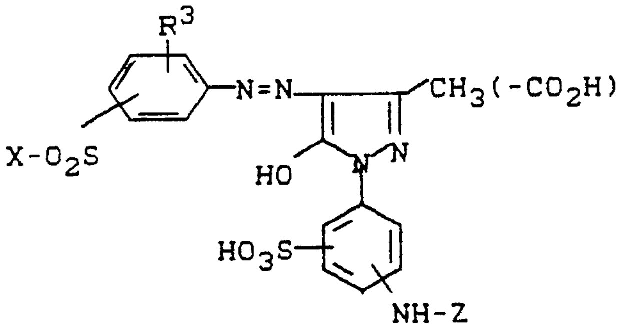

(6)

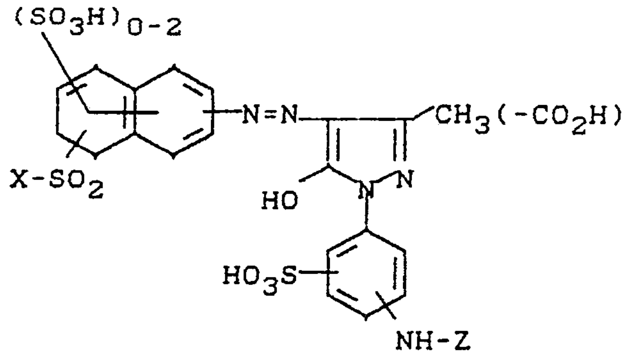

(7)

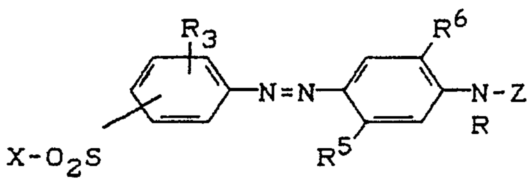

(8)

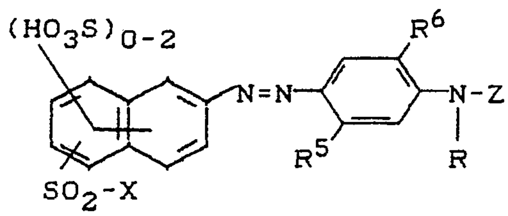

(9)

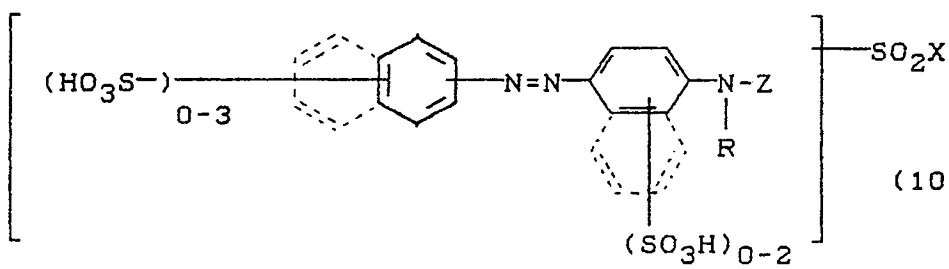

(10)

worin

$R^5$ = H, $C_1$-$C_4$-Alkyl, $C_1$-$C_4$-Alkoxy, Acylamino, insbesondere $C_1$-$C_4$-Alkylcarbonylamino oder Arylcarbonylamino wie Phenylcarbonylamino, $C_1$-$C_4$-Alkylsulfonylamino, Cl, Br, Aminocarbonylamino, $C_1$-$C_4$-Alkylsulfonylamino, Arylsulfonylamino,

$R^6$ = H, $C_1$-$C_4$-Alkyl, $C_1$-$C_4$-Alkoxy, OH, $SO_3H$

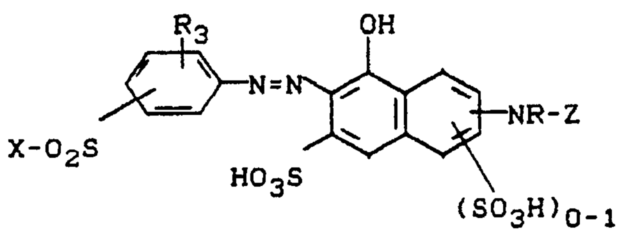

(11)

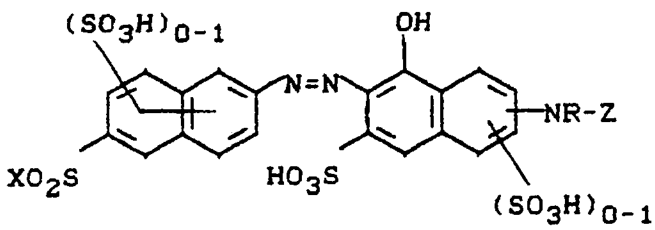

(12a)

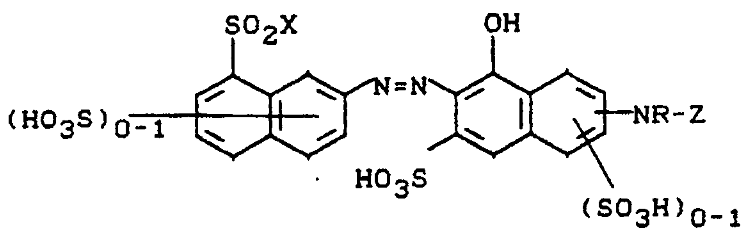

(12b)

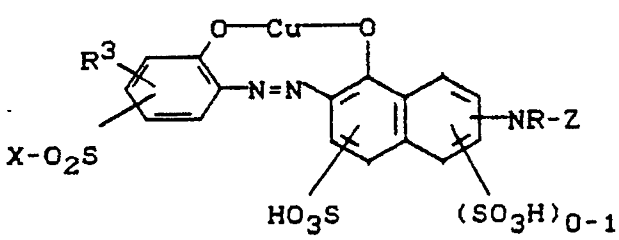

(13)

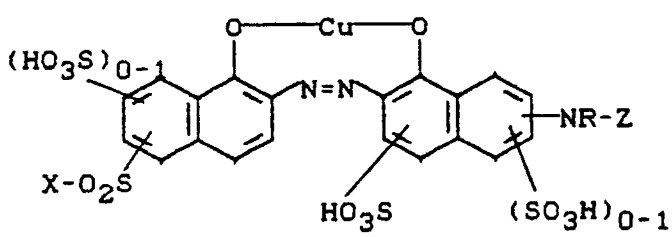

(14)

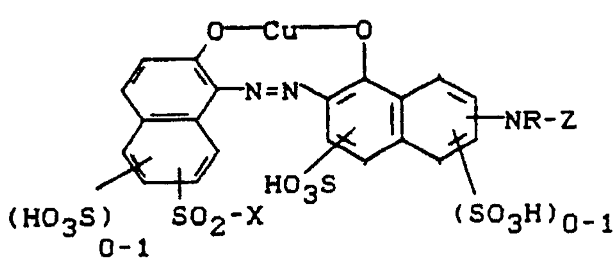

(15)

1:2-Metallkomplexe in Farbstoffen

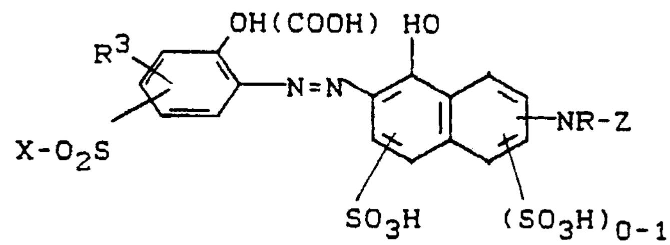

(16)

insbesondere die Cr- und Co-Komplexe, die zwei Farbstoffe (16) oder einen Farbstoff (16) und einen beliebigen anderen metallkomplexbildenden Farbstoff, insbesondere einen Azo- oder Azomethinfarbstoff enthalten.

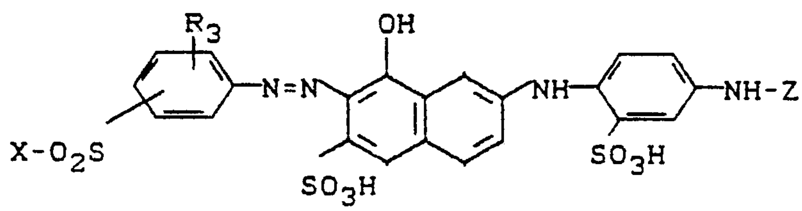

(17)

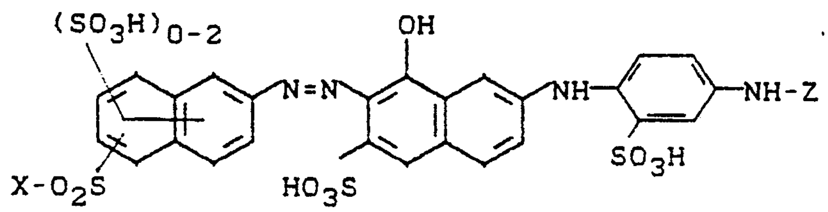

(18)

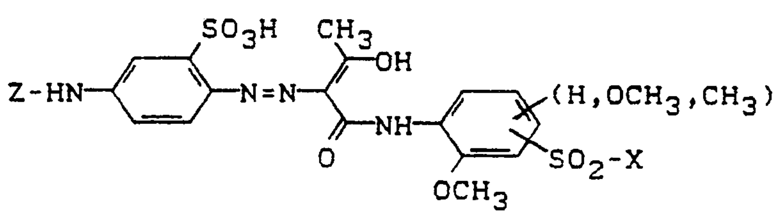

(19)

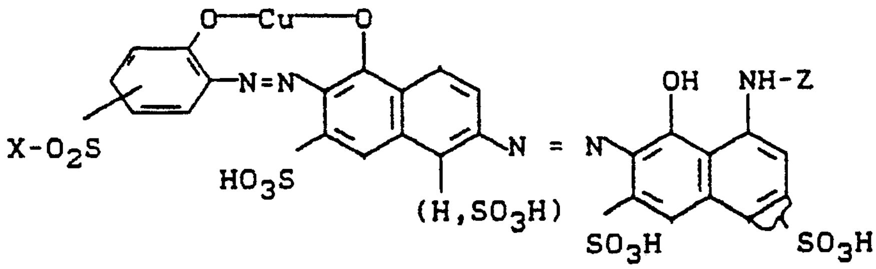

(20)

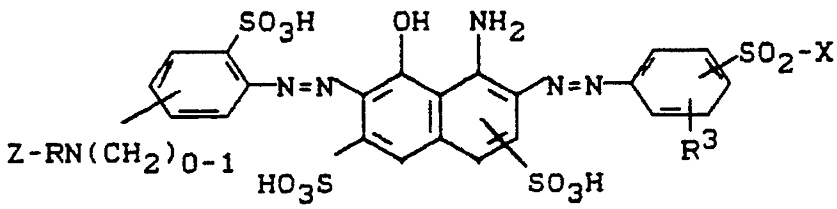

(21)

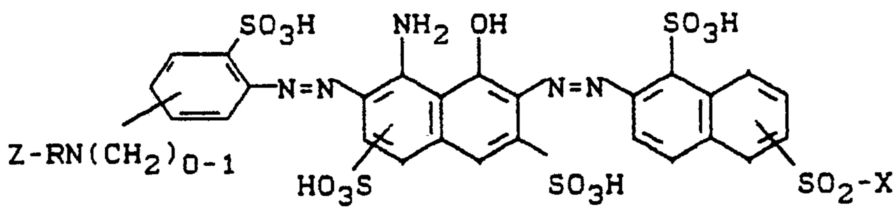

(22)

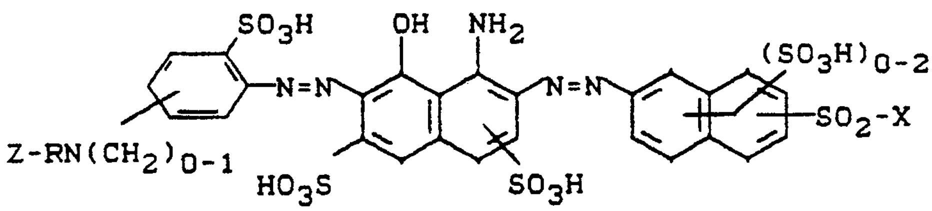

(23)

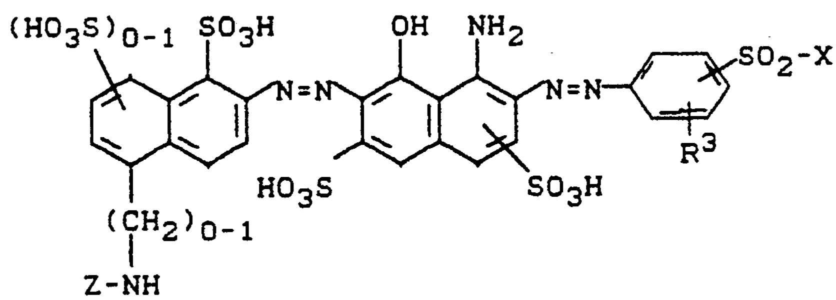

(24)

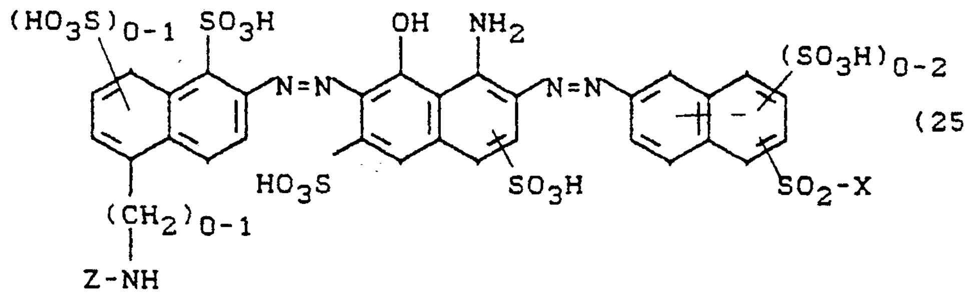

(25)

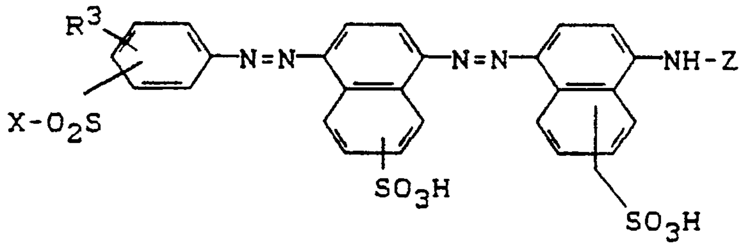

(26)

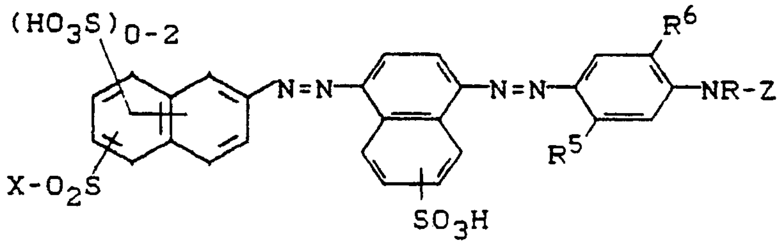

(27)

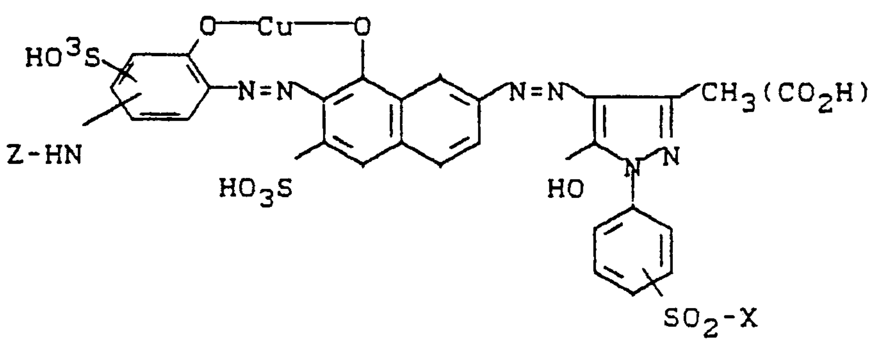

(28)

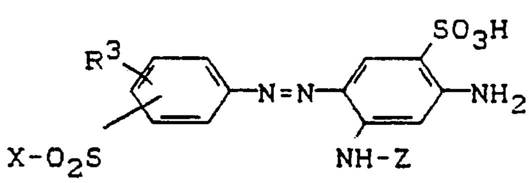

(29)

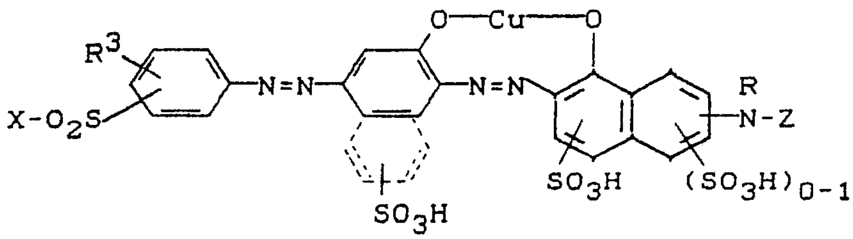

(30)

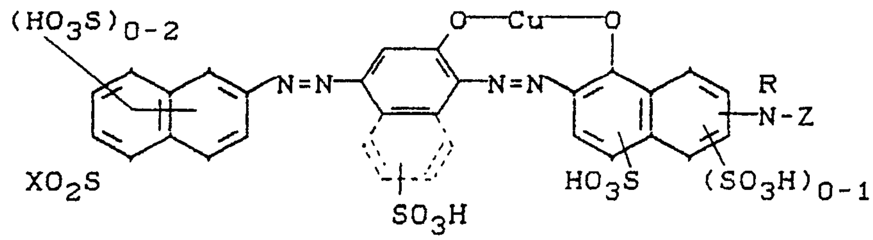

(31)

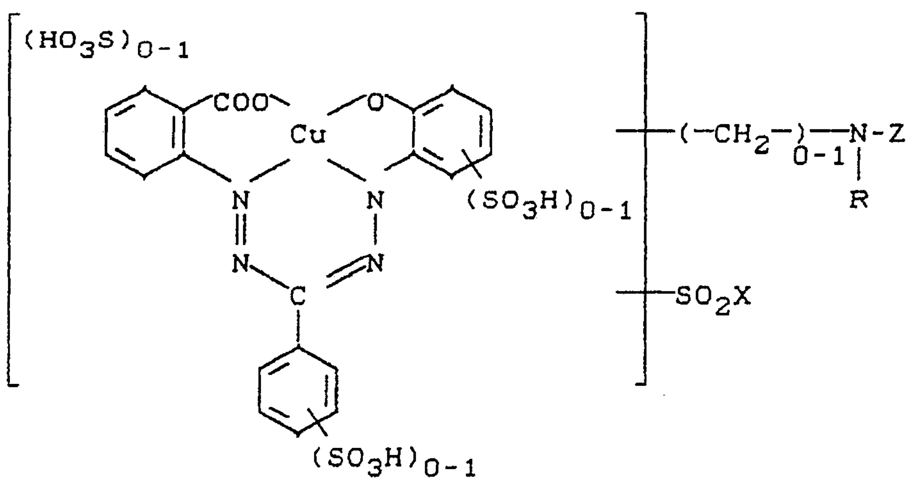

(32)

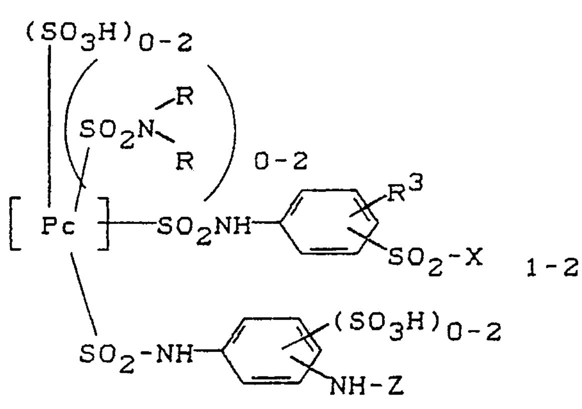

(33)

worin Pc für einen Cu- oder Ni-Phthalocyaninrest steht und die Gesamtzahl der Substituenten am Pc-Gerüst maximal 4 beträgt.

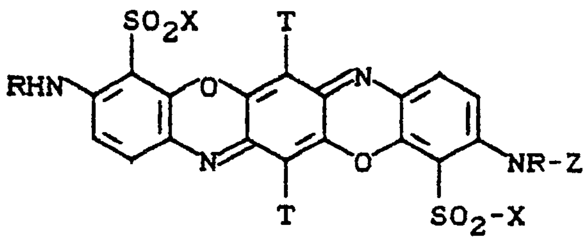

(34)

wobei T = Cl, Br, $OCH_3$

Besonders bevorzugte Farbstoffe (1) sind solche mit X = $CH_2CH_2OSO_3H$ oder $CH=CH_2$ und

W =

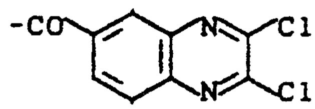

und dabei insbesondere solche mit 1-6 wasserlöslichmachenden Gruppen, vorzugsweise Sulfogruppen, insbesondere die folgenden:

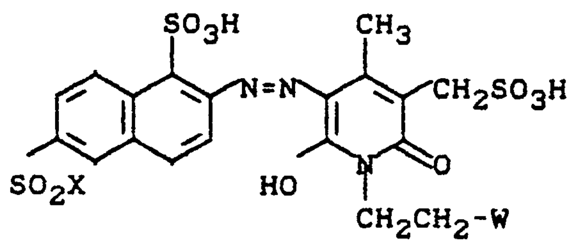

(36)

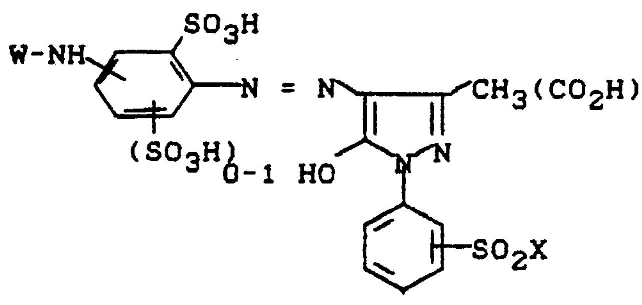

(37)

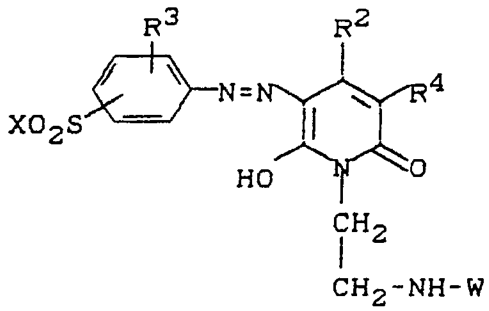

(38)

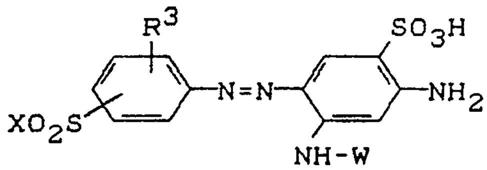

(39)

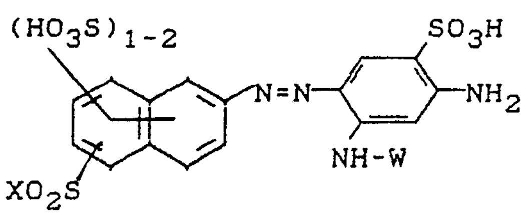

(40)

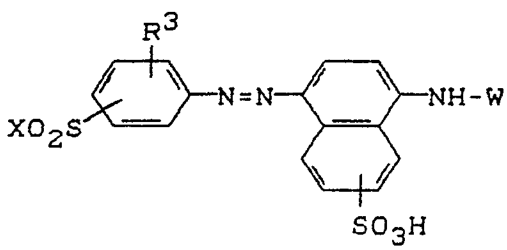

(41)

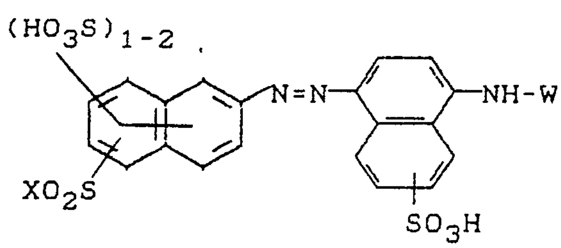

(42)

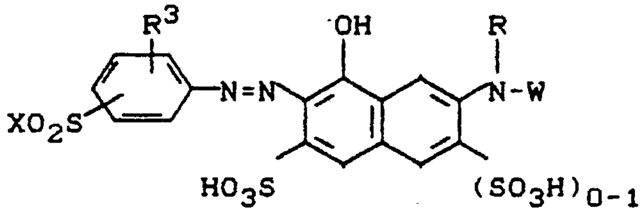

(43)

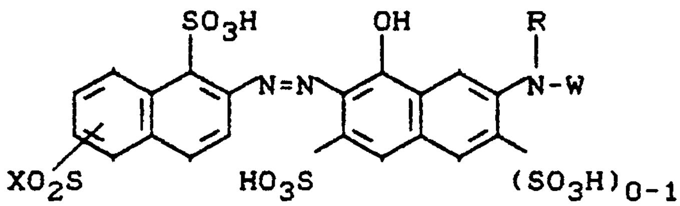

(44)

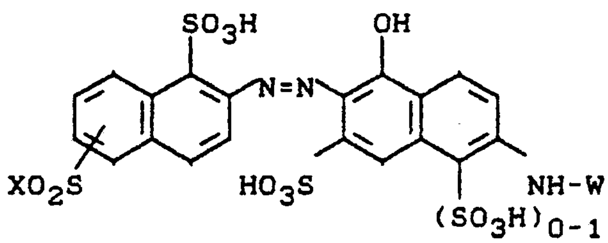

(45)

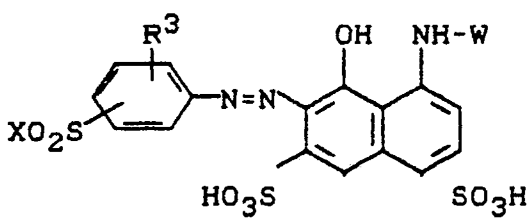

(46)

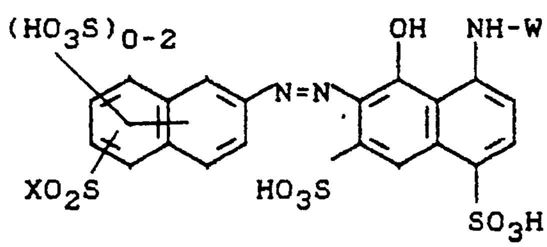

(47)

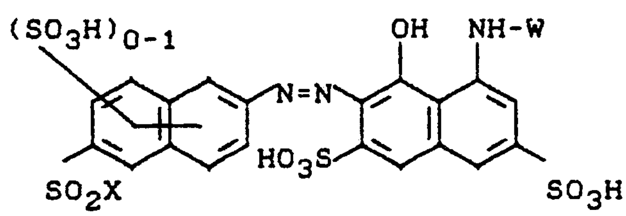

(47a)

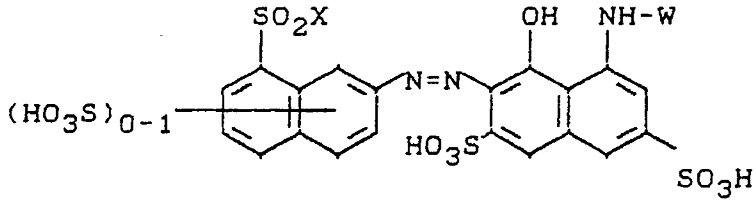

(47b)

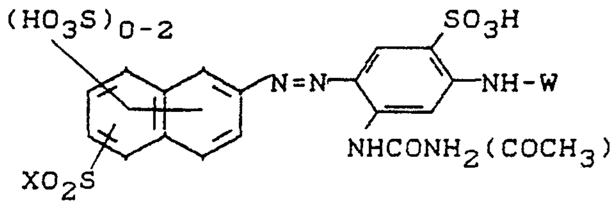

(48)

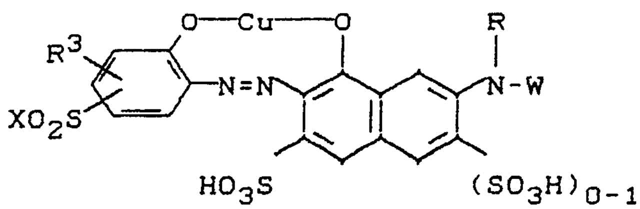

(49)

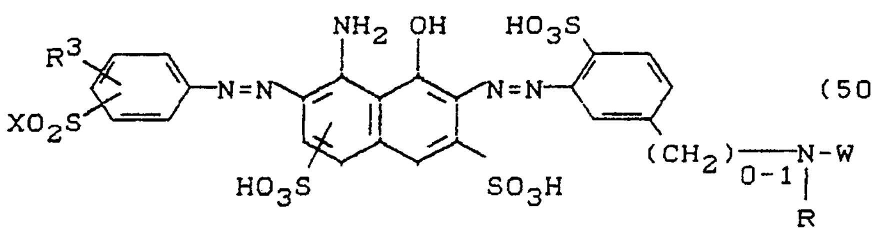

(50)

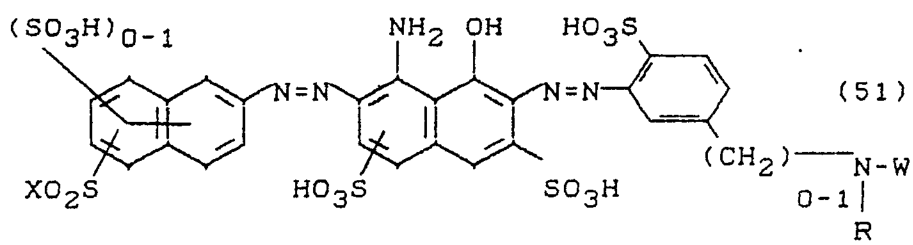

(51)

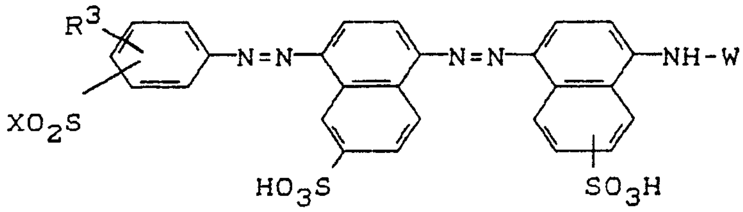

(52)

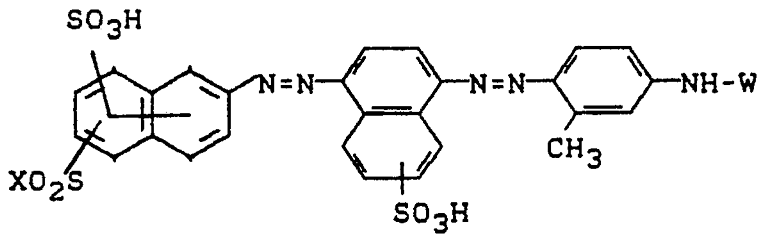

(53)

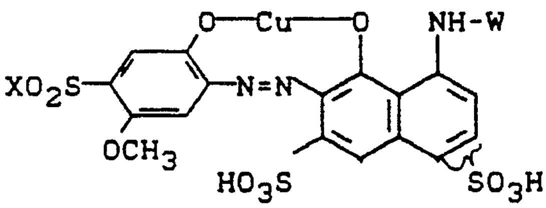

(54)

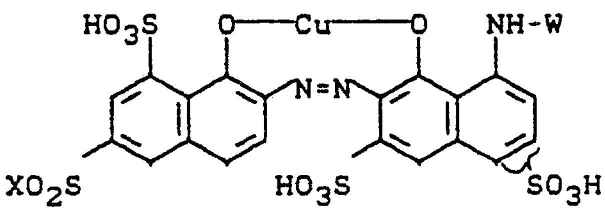

(55)

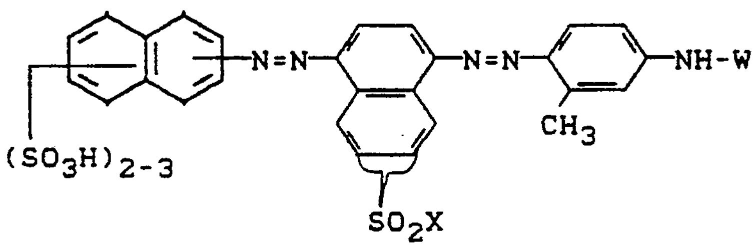

(56)

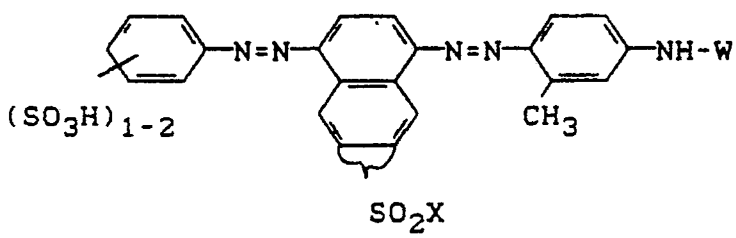

(57)

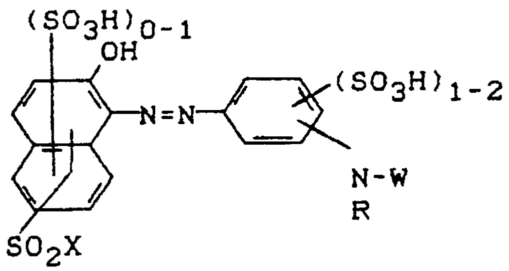

(58)

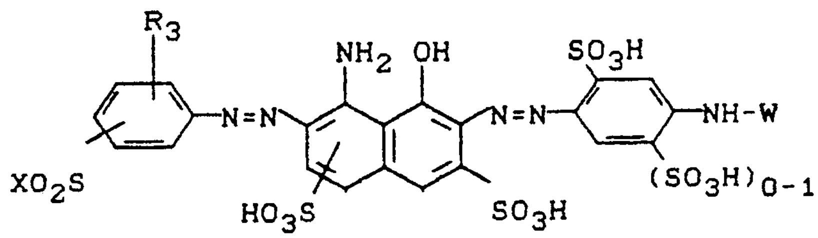

(58a)

Bevorzugte Farbstoffe (2) sind solche, in denen B und B' für eine direkte Bindung steht, weiterhin solche, in denen $-SO_2X$ für $-SO_2-CH=CH_2$ oder $-SO_2CH_2CH_2OSO_3H$, und solche, in denen Z für

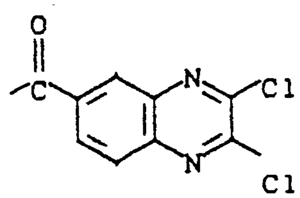

steht;

weiterhin solche, die 1 bis 6 wasserlöslichmachende Gruppen, insbesondere Sulfogruppen, aufweisen.

Bevorzugte Farbstoffe (2) sind weiterhin solche, bei denen Fb' für einen Farbstoffrest aus der Phthalocyanin-, Formazan- und insbesondere der Triphendioxazinreihe steht.

Besonders bevorzugt sind die Farbstoffe der Formeln (59) bis (63), in denen X für $-CH_2CH_2OSO_3H$ und

W für 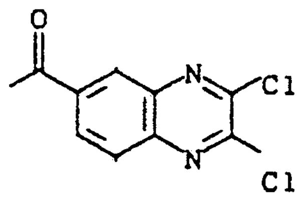 steht.

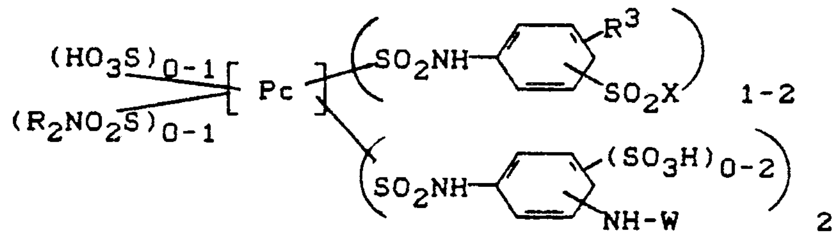

(59)

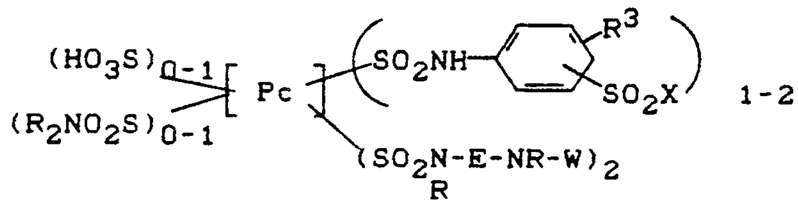

(59a)

worin Pc für einen Cu- oder Ni-Phthalocyaninrest steht und die Gesamtzahl der Substituenten am Pc-Gerüst maximal 4 beträgt; E = aliphatisches Brückenglied, insbesondere $C_2$-$C_4$-Alkylen und R die obengenannte Bedeutung besitzt.

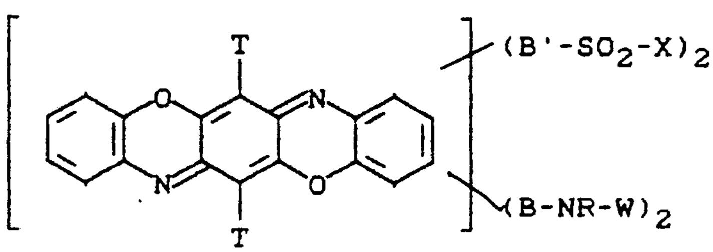

(60)

vorzugsweise

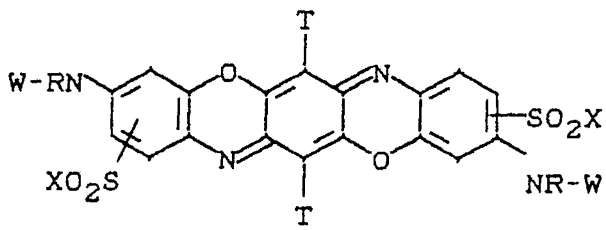

(61)

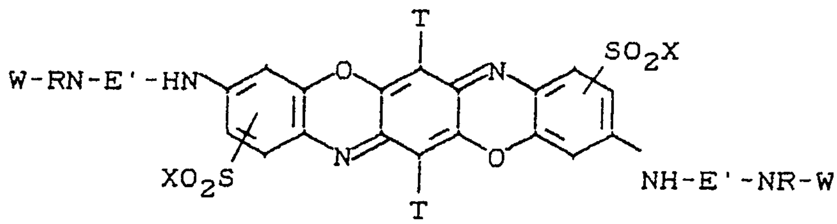

(62)

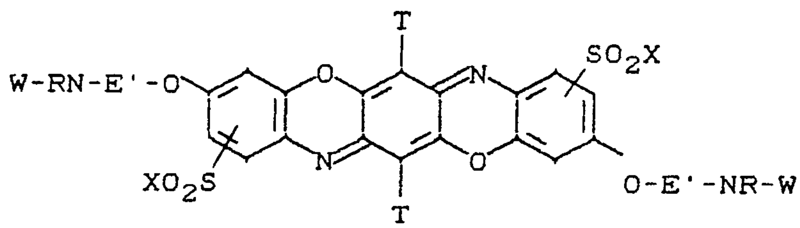

(63)

wobei E' = aliphatisches oder aromatisches Brückenglied, insbesondere $C_2$-$C_4$-Alkylen oder Phenylen und T, R, B, B', W, X die obengenannte Bedeutung haben.

Die neuen Farbstoffe lassen sich nach den verschiedenartigsten in der Farbstoffchemie üblichen Herstellungsverfahren erhalten, Beispielhaft seien die folgenden genannt:

1) Farbstoffe der Formeln

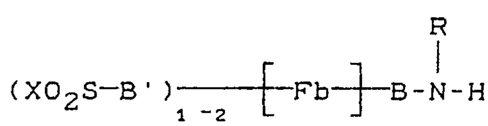

(64)

bzw.

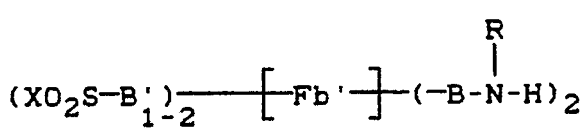

(65)

werden in an sich bekannter Weise mit 1 oder 2 Mol einer Reaktivkomponente

Z - Hal (66)

worin

Hal = Cl, Br, F

unter Abspaltung von H-Hal umgesetzt.

2) Farbstoffe der Formeln (1) und (2) mit dem Rest $-SO_2X$ = $SO_2CH_2CH_2OH$ werden in bekannter

Weise zu den Farbstoffen der Formeln (1) und (2) mit dem Rest $-SO_2X$ = $SO_2CH_2CH_2OSO_3H$ sulfatiert.
3) Vorprodukte von Fb bzw. Fb' mit 1 bis 2 Resten $-SO_2X$ bzw. 1 bis 2 Resten

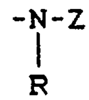

werden miteinander, beispielsweise durch Kondensation oder wie im Falle von Diazo- bzw. Kupplungskomponenten durch Kupplung, umgesetzt und anschließend gegebenenfalls metallisiert.

Solche Vorprodukte sind beispielsweise bekannte Diazokomponenten, Kupplungskomponenten, 1-Amino-4-bromanthrachinon-2-sulfonsäure-Verbindungen, aromatische oder aliphatische primäre oder sekundäre Amine, Phthalocyaninsulfochloride, Aminophenolverbindungen und Aminobenzoesäure-Verbindungen. Solche Ausgangsverbindungen und deren Reaktionsweisen sind in großer Zahl in der Literatur für die Herstellung von bekannten Farbstoffen beschrieben.

Als Diazokomponenten, die 1 bis 2 Gruppen $-SO_2X$ enthalten, seien genannt:
Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxy-anilin-5-vinylsulfon, 4-Methoxy-anilin-3-β-sulfatoethylsulfon, 4-Methoxy-anilin-3-β-vinylsulfon, 2,5-Dimethoxy-anilin-4-β-sulfatoethylsulfon, 2,5-Dimethoxy-anilin-4-vinylsulfon, 2,5-Dimethoxy-anilin-4-β-sulfatoethylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethylsulfon, 3-(3- oder 4-Aminobenzoyl)-aminophenyl-β-sulfatoethylsulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfoanilin-5-vinylsulfon, 2-Hydroxyanilin-5-β-sulfatoethylsulfon, 2-Hydroxy-anilin-4-β-sulfatoethylsulfon, 3-Sulfo-2-hydroxy-anilin-5-β-sulfatoethylsulfon, 2-Naphthylamin-8-β-sulfatoethylsulfon, 2-Naphthylamin-6-β-sulfatoethylsulfon, 1-Sulfo-2-naphthylamin-6-β-sulfatoethylsulfon, 1-Naphthylamin-4-β-sulfatoethylsulfon, 1-Sulfo-2-napthylamin-5-β-sulfatoethylsulfon, 6-Sulfo-2-naphthylamin-8-β-sulfatoethylsulfon, 2-Amino-3-sulfonaphthalin-6,8-bis-(β-sulfatoethylsulfon),2-Brom-1-aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 2-Naphthylamin-8-β-sulfatoethylsulfon, 8-Sulfo-2-napthylamin-6-β-sulfatoethylsulfon.

Geeignete Diazokomponenten mit dem Rest

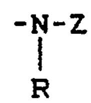

sind beispielsweise

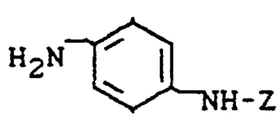 , 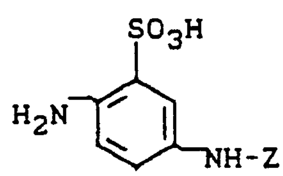 , 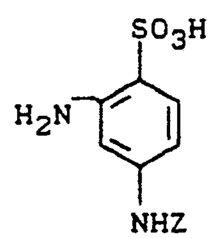

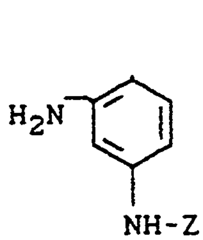 , 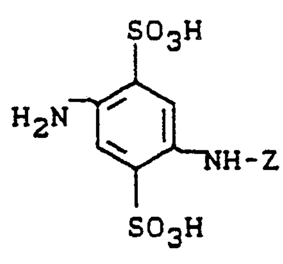 , 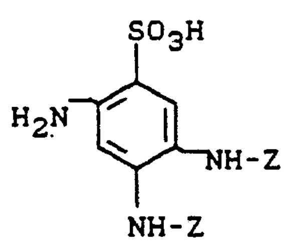 .

Aromatische Monoamine und Diamine, die sowohl als Diazo- als auch als Kupplungskomponente bei der Herstellung von erfindungsgemäßen Disazoverbindungen verwendet werden können, sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetylaminobenzol-1-sulfonsäure, 1-Naphthylamin-6-β-sulfatoethylsulfon, 1-Naphthylamin-7-β-sulfatoethylsulfon, 1,3-Diaminobenzol, 1,3-Diamino-4-methyl- oder -methoxy-benzol, 1,3-Diaminobenzol-4-sulfonsäure, 1-Aminonaphthalin, 1-Aminonaphthalin-6- oder -7-sulfonsäure, 3-Acetylamino-anilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-N-Acetoacetylamino-4-aminobenzol, 1-N-Acetoacetylamino-4-N-methyl-aminobenzol, 1-N-Acetoacetylamino-3-methyl-4-aminobenzol, 1-N-Aceto-acetylamino-3-methoxy-4-aminobenzol, 4-Amino-3-sulfo-acetoacetylanilid, 1-(3′-Amino-phenyl)-3-methyl-pyrazolon(5), 1-(4′-Aminophenyl)-3-methyl-pyrazolon(5), 1-(3′- oder -4′-Aminophenyl)-3-carboxy-pyrazolon(5), 1-(3′-Sulfo-4′-aminophenyl)-3-carbethoxy-pyrazolon(5), 1-(3′-Amino-4′-sulfo-phenyl)-3-carboxy-pyrazolon(5), 1-(2′,4′,6′-Trimethyl-3′-amino-5′-sulfophenyl)-3-carbethoxy-pyrazolon(5), 1-(4′-Amino-phenyl)-3-methyl-pyrazolon(5), 1-(3′-Amino-6′-methyl-phenyl)-3-carboxy-pyrazolon(5).

Aromatische Diamine, die als Tetrazokomponenten zur Herstellung von erfindungsgemäßen Disazo-Verbindungen dienen können, sind beispielsweise:

1,3-Diaminobenzol, 1,3-Diaminobenzol-4-sulfonsäure, 1,4-Diaminobenzol, 1,4-Diaminobenzol-2-sulfonsäure, 1,4-Diamino-2-methyl-benzol, 1,4-Diamino-2-methoxy-benzol, 1,3-Diamino-4-methyl-benzol, 1,3-Diaminobenzol-5-sulfonsäure, 1,3-Diamino-5-methyl-benzol, 1,6-Diamino-naphthalin-4-sulfonsäure, 2,5-Diamino-4,8-disulfo-naphthalin, 3,3′-Diamino-diphenylsulfon, 4,4′-Diamino-diphenylsulfon, 3,3′-Diamino-diphenylsulfon-disulfonsäure, 4,4′-Diamino-stilben-2,2′-disulfonsäure, 4,4′-Diamino-diphenylsulfon, 2,7-Diamino-diphenylensulfon-4,5-disulfonsäure, 4,4′-Diamino-benzophenon, 4,4′-Diamino-3,3′-dinitro-benzophenon, 3,3′-Diamino-4,4′-dichlor-benzophenon, 4,4′- oder 3,3′-Diamino-diphenyl, 4,4′-Diamino-3,3′-dichlor-diphenyl, 4,4′-Diamino-3,3′-dimethoxy- oder -3,3′-dimethyl- oder -2,2′-dimethyl-oder -2,2′-dichlor-oder -3,3′-diethoxy-diphenyl, 4,4′-Diamino-3,3′-dimethyl-6,6′-dinitro-diphenyl, 4,4′-Diamino-2,2′- oder 3,3′-disulfo-diphenyl, 4,4′-Diamino-3,3′-dimethyl- oder -3,3′-dimethoxy- oder -2,2′-dimethoxy-6,6′-disulfodiphenyl, 4,4′-Diamino-2,2′,5,5′-tetrachlor-diphenyl, 4,4′-Diamino-3,3′-dinitro-diphenyl, 4,4′-Diamino-2,2′-dichlor-5,5′-dimethoxy-diphenyl, 4,4′-Diamino-2,2′- oder -3,3′-dicarbonsäure, 4,4′-Diamino-3,3′-dimethyl-diphenyl-5,5′-disulfonsäure, 4,4′-Diamino-2-nitro-diphenyl, 4,4′-Diamino-3-ethoxy- oder -3-sulfo-diphenyl, 4,4′-Diamino-3,3′-dimethyl-5-sulfo-diphenyl, 4,4′-Diamino-diphenylmethan, 4,4′-Diamino-3,3′-dimethyl-diphenylmethan, 4,4′-Diamino-2,2′,3,3′-tetramethyl-diphenylmethan, 4,4′-diamino-diphenylethan, 4,4′-Diamino-stilben, 4,4′-diamino-diphenylmethan-3,3′-dicarbonsäure, 1,2-Di-(4′-amino-phenoxy)-ethan.

Kupplungskomponenten, die in den erfindungsgemäßen Mono-oder Disazofarbstoffen enthalten sein können oder zu deren Herstellung dienen, sind insbesondere beispielsweise die Verbindungen der Formeln:

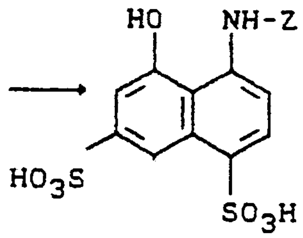 , 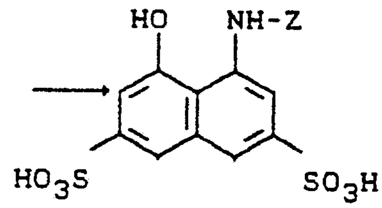 ,

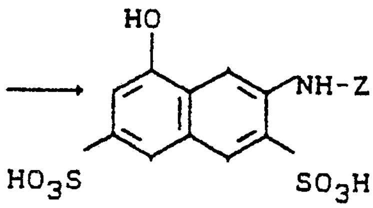 , 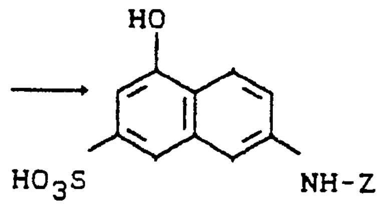 ,

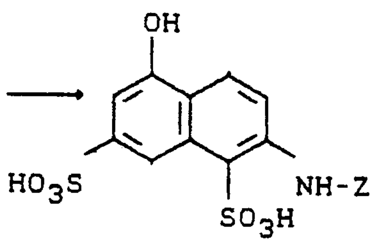 , 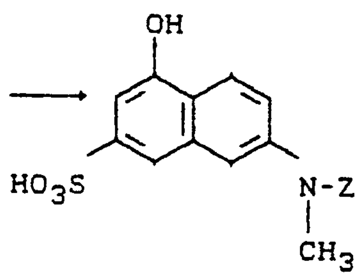 ,

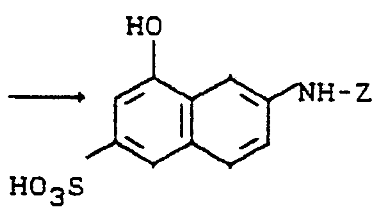 , 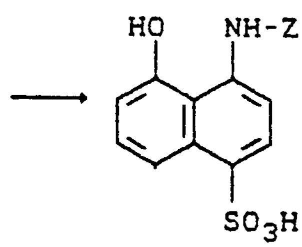 ,

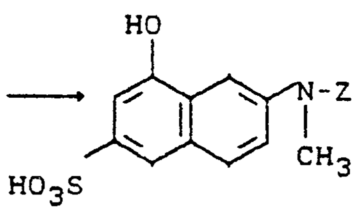 , 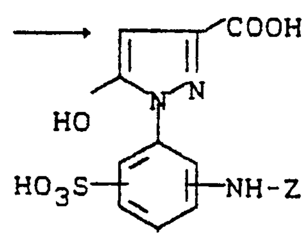

Zur Herstellung der erfindungsgemäßen Mono- und Disazoverbindungen und auch deren Metallkomplexfarbstoffe kann in üblicher Weise vorgegangen werden, indem beispielsweise analog den bekannten Diazotierungs- und Kupplungsmethoden Umsetzung der diazotierten aromatischen Amine mit den Kupplungskomponenten erfolgt und diese Azoverbindungen gegebenenfalls durch nachfolgende Metallisierung analog bekannten Verfahrensweisen (s. Houben-Weyl, "Methoden der Organischen Chemie", 4. Ausgabe (1965), Band 10/3, S. 452 ff.; Angewandte Chemie 70, 232-238 (1958); Angewandte Chemie 64, 397 (1952)) in die entsprechenden Schwermetallkomplexverbindungen, wie die Kupfer-, Kobalt- oder Chromkomplexverbindungen, überführt.

Man kann beispielsweise jedoch auch so vorgehen, daß man ein aromatisches Amin, das beispielsweise die Gruppe der Formel $-SO_2X$ ein- oder zweimal gebunden enthält, diazotiert und auf eine Kupplungskomponente kuppelt, die noch eine freie acylierbare Aminogruppe besitzt. Die so hergestellte Azoverbindung kann sodann, in bekannter Weise, mit einer Verbindung Z-Hal umgesetzt werden.

Andere Umwandlungsreaktionen der Farbstoffe oder deren Vorprodukte, wie Metallisierungsreaktionen, Sulfierungen, Triazolierungen oder Einführung von Acylamino-oder Triazinyl-Gruppierungen, können im

allgemeinen in beliebigen Stufen der Farbstoffsynthese vorgenommen werden. Einzelheiten können den nachfolgend aufgeführten Beispielen entnommen werden.

Die angegebenen Formeln sind die der freien Säuren. Bei der Herstellung werden im allgemeinen die Salze erhalten, insbesondere die Alkalisalze wie Natrium-, Kalium-oder Lithiumsalze. Die Farbstoffe können aber auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren.

Man erhält bei gutem Aufbauvermögen und hohen Fixierausbeuten Färbungen mit guten Allgemeinechtheiten, insbesondere Naßechtheiten.

Beispiel 1

0,1 Mol H-Säure werden in 350 ml Wasser alkalisch gelöst, mit Salzsäure auf pH 4 gestellt und mit 0,105 Mol 2,3-Dichlorchinoxalin-6-carbonsäurechlorid bei 40 °C acyliert, wobei der pH mit Natriumcarbonat bei 4 gehalten wird. Nach beendeter Kondensation ist das Umsetzungsprodukt in Lösung und wird geklärt. 0,095 Mol 2-Amino-6-sulfatoethylsulfonyl-naphthalin-1-sulfonsäure werden in 300 ml Wasser gelöst und mit Natriumnitritlösung salzsauer diazotiert. Nach dem Entfernen von überchüssigem Nitrit mit Amidosulfonsäure wird die Diazotierung zu der Kupplungskomponente gegeben und mit Sodalösung pH 6,5 bis 7 eingestellt und gehalten. Nach beendeter Kupplung wird der Farbstoff ausgesalzen, isoliert, getrocknet und gemahlen. Der so erhaltene Farbstoff der Formel

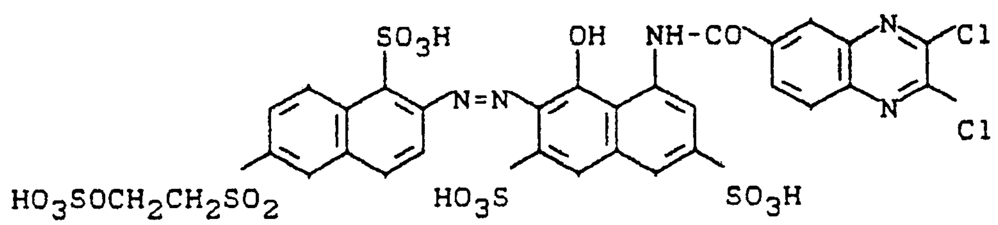

färbt Baumwolle in blaustichig roten Tönen.

Beispiel 2

0,095 Mol 1-Amino-4-sulfatoethylsulfonylbenzol werden in Wasser angeschlagen und mit Natriumnitritlösung diazotiert. Man läßt 30 Minuten nachrühren und entfernt dann überschüssiges Nitrit mit Amidosulfonsäure. Die Diazotierung wird zu der in Beispiel 1 hergestellten Kupplungskomponente gegeben und mit Natriumcarbonatlösung pH 6 bis 7 eingestellt. Nachdem die Kupplung beendet ist, wird der Farbstoff ausgesalzen, isoliert, getrocknet und gemahlen.

Der Farbstoff der Formel

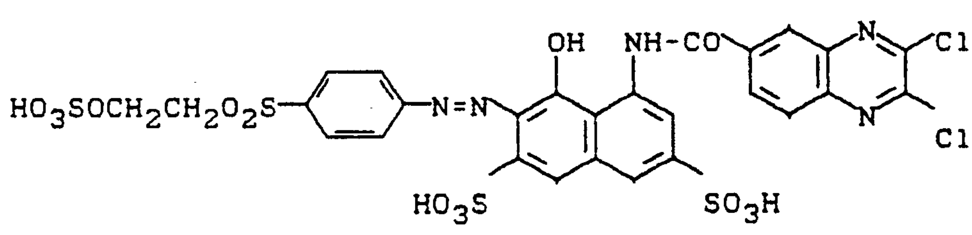

färbt Baumwolle in klaren roten Tönen.

Beispiel 3

Arbeitet man entsprechend dem Beispiel 1 und ersetzt die H-Säure durch die K-Säure erhält man den

Farbstoff der Formel

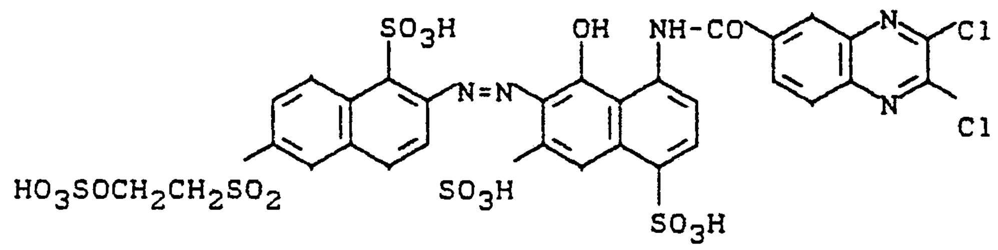

der Baumwolle in klaren roten Tönen färbt.

Beispiel 4

Arbeitet man entsprechend dem Beispiel 2 und ersetzt die H-Säure durch die K-Säure erhält man den Farbstoff der Formel

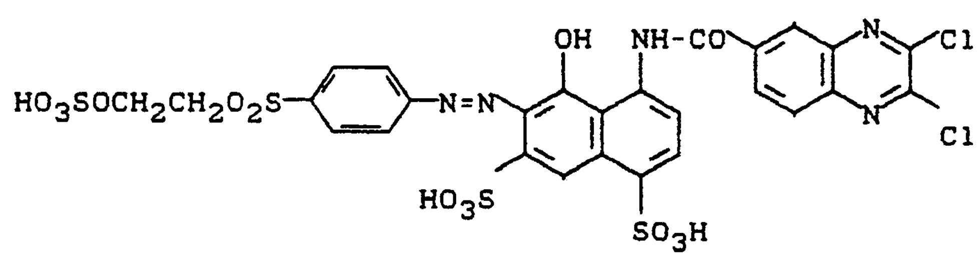

der Baumwolle in klaren gelbstichig roten Tönen färbt.

Beispiel 5

281 Teile 4-β-Sulfatoethylsulfonyl-anilin werden in 1.000 Teilen Wasser eingetragen und durch vorsichtige Zugabe von 65 Teilen Natriumcarbonat in Lösung gebracht, wobei sich der pH-Wert auf 6,5 bis 7,0 einstellt. Man läßt 2 Stunden bei diesem pH weiterrühren, gibt sodann 750 Teile Eis und 255 Teile einer 31 %igen wäßrigen Salzsäure hinzu; anschließend läßt man 173 Teile der 40 %igen wäßrigen Natriumnitritlösung einlaufen, rührt bei 0 bis 5° C weitere 2 Stunden nach und zerstört sodann überschüssige salpetrige Säure mittels Amidosulfonsäure. In die so hergestellte Diazoniumsalzsuspension läßt man bei einem pH-Wert von 6,0 bis 6,5 unter gleichzeitigem Eintragen von etwa 70 Teilen Natriumcarbonat die Lösung des Kondensationsproduktes von je einem Mol Cyanurchlorid und 1-Amino-8-naphthol-3,6-disulfonsäure und 3-Amino-acetanilid-4-sulfonsäure und 2,3-Dichlor-chinoxalin-6-carbonsäureohlorid einlaufen. Diese Lösung des Kondensationsproduktes wird wie folgt hergestellt: 319 Teile 1-Amino-8-naphthol-3,6-disulfonsäure werden unter Rühren in ein Gemisch aus 500 Teilen Wasser und 121 Teilen einer 33 %igen Natronlauge eingetragen; der pH-Wert der Lösung soll anschließend 6,5 bis 7,0 betragen. Diese Lösung läßt man innerhalb von einer Stunde in eine Suspension von 194 Teilen Cyanurchlorid, 800 Teilen Wasser und 800 Teilen Eis bei einem pH-Wert von 3,0 bis 3,8 einlaufen. Es wird noch eine Stunde lang bei 0 bis 5° C und bei dem angegebenen pH-Wert, der durch Einstreuen von 92 Teilen Natriumbicarbonat gehalten wird, weitergerührt. In die so erhaltene klare Lösung trägt man 221 Teile 3-Amino-acetanilid-4-sulfonsäure ein und danach innerhalb einer Stunde 105 Teile Natriumcarbonat, wobei sich der pH-Wert auf 4,5 bis 5,0 erhöht. Bei diesem pH-Wert läßt man noch 2 Stunden nachrühren, wobei die Temperatur bei 35 bis 40° C gehalten wird. Die Lösung wird mit 400 Teilen conc. Natriumhydroxid versetzt und 2 Stunden bei 70 bis 75° C gerührt. Danach wird mit conc. Salzsäure neutralisiert. Zu dieser neutralen Lösung wird die äquivalente Menge 2,3-Dichlor-chinoxalin-6-carbonsäurechlorid gegeben und auf 30° C erwärmt.

Nachdem die Diazoniumsuspension und die Lösung der Kupplungskomponente vereinigt sind, wird das Kupplungsgemisch noch 2 Stunden lang bei Raumtemperatur nachgerührt, wobei durch portionsweises Einstreuen von 70 Teilen Natriumcarbonat ein pH-Wert von 6,0 bis 6,5 gehalten wird. Nach beendeter Kupplung wird auf 50° C erwärmt, 40 Teile Kieselgur werden zugegeben, die Lösung geklärt (filtriert) und

das Filtrat sprühgetrocknet.

Es wird ein rotes, elektrolythaltiges Pulver erhalten, das den Farbstoff der Formel

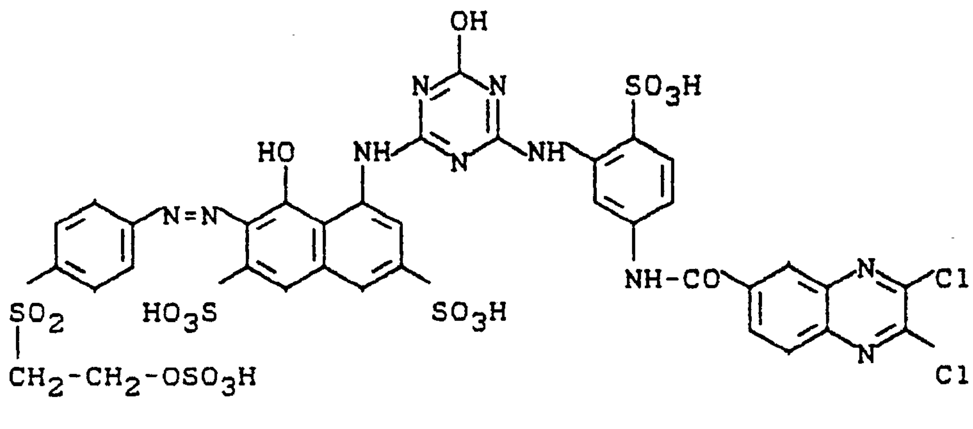

enthält.

Dieser Farbstoff färbt Wolle aus saurem Bad oder Cellulosefasermaterialien in Gegenwart von säurebindenden Mitteln nach den in der Technik üblichen Applikations-und Fixiermethoden für faserreaktive Farbstoffe in klaren roten Tönen mit sehr gutem Farbaufbau und hohem Fixiergrad. Die Färbungen besitzen sehr gute Naßechtheiten.

Beispiel 6

64 Teile 1-Amino-8-naphthol-3,6-disulfonsäure werden in 800 Teilen Wasser unter Zusatz von 15 Teilen Natriumcarbonat bei pH 4,5 bis 5,0 gelöst. Man kühlt dann auf 0° C ab und läßt 28 Teile Cyanurfluorid zutropfen, wobei der pH-Wert fällt und durch Einstreuen von Natriumbicarbonatpulver auf pH 3 bis 4 gehalten wird. Es wird 15 Minuten bei pH 3 bis 4 und 0° C nachgerührt und dann eine Lösung des Kondensationsproduktes von 2,4-Diaminobenzolsulfonsäure mit 2,3-Dichlorchinoxalin-6-carbonsäurechlorid zugegeben. Bei einem pH-Wert von 5 wird 5 Stunden bei 20 bis 25° C gerührt, bis kein freies Amin mehr durch Diazotierprobe nachweisbar ist.

Zur Herstellung der Diazoniumverbindung werden 56 Teile Anilin-4-β-sulfatoethylsulfon in 500 Teilen Eiswasser suspendiert, mit 45 Teilen conc. wäßriger Salzsäure angesäuert und mit 40 Volumenteilen einer 5n-Natriumnitritlösung diazotiert. Man rührt 2 Stunden bei ca. 5° C nach und zerstört dann überschüssige salpetrige Säure mittels Amidosulfonsäure. Die so hergestellte Diazoniumsalzlösung läßt man bei einem pH-Wert von 5,5 bis 6,0 langsam in die Lösung der Kupplungskomponente einlaufen. Man rührt 2 Stunden bis zur vollständigen Kupplung nach. Der pH-Wert wird durch Zugabe von Natriumbicarbonat auf 5,5 bis 6,0 gehalten. Dann wird der Farbstoff mit Natriumchlorid abgeschieden, auf der Nutsche isoliert und im Vakuum bei 40° C getrocknet. Nach dem Mahlen wird ein rotes, elektrolythaltiges Farbstoffpulver erhalten, das das Natriumsalz des Farbstoffs der Formel

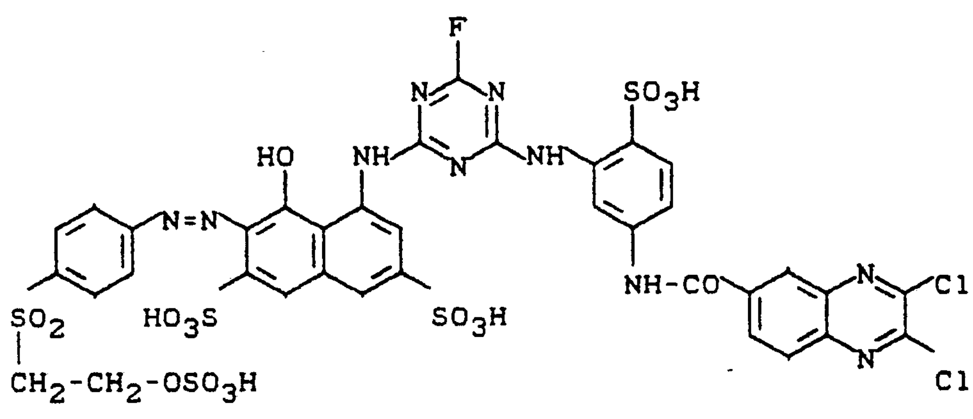

enthält.

Der Farbstoff färbt Baumwolle und Wolle nach den üblichen Färbe- und Druckmethoden für Reaktivfarbstoffe in roten Tönen mit sehr guten Naßechtheitseigenschaften.

Analog zu den beschriebenen Methoden lassen sich auch die in der folgenden Tabelle aufgeführten Farbstoffe herstellen, die Baumwolle im angegebenen Farbton färben.

| Nr. | Beispiel | Farbton |
| --- | --- | --- |
| 7 | 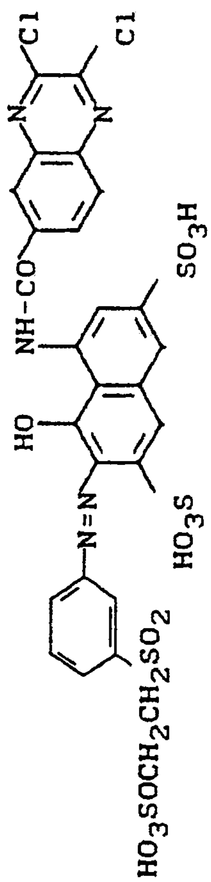 | blaustichig rot |
| 8 | 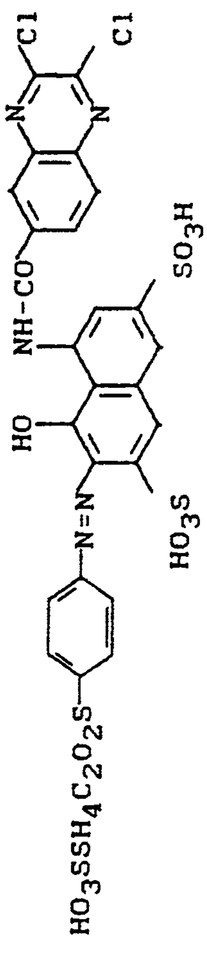 | " |
| 9 | 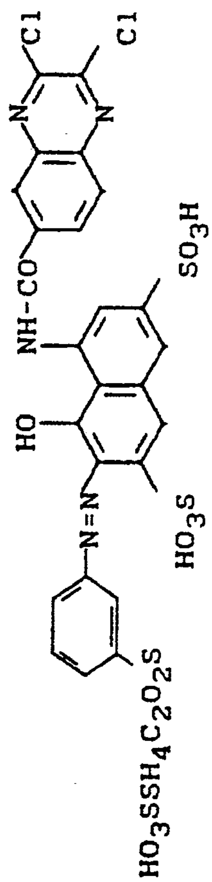 | " |

| Nr. | Beispiel | Farbton |
| --- | --- | --- |
| 10 | 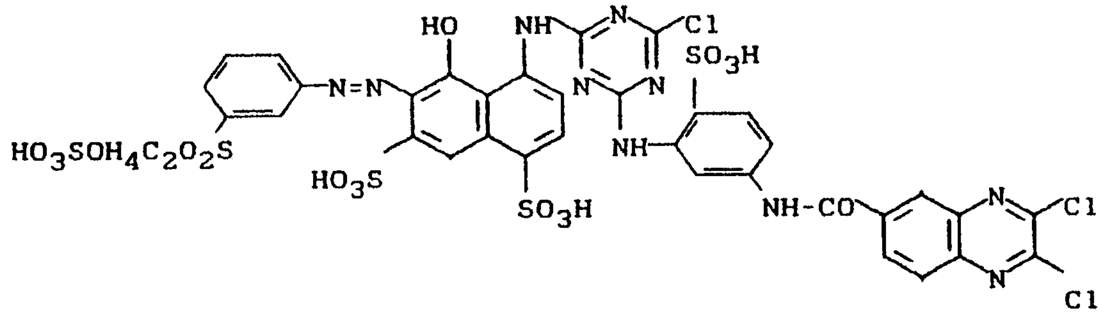 | gelbstichig rot |
| 11 | 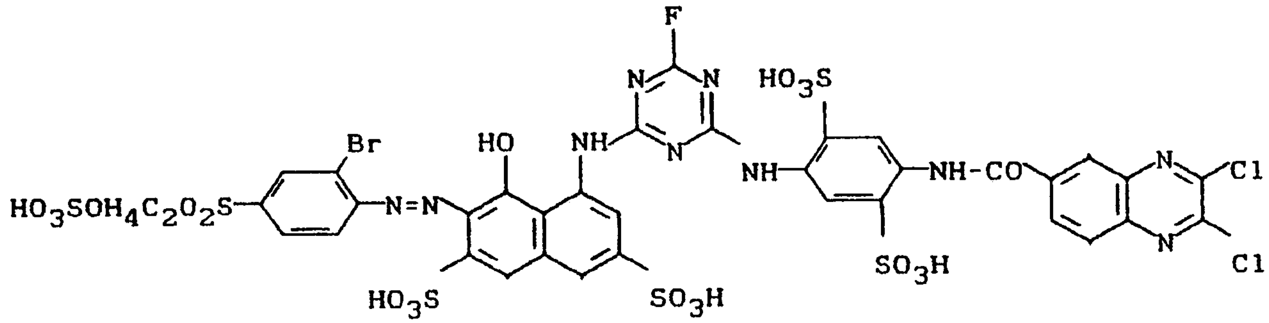 | " |
| 12 | 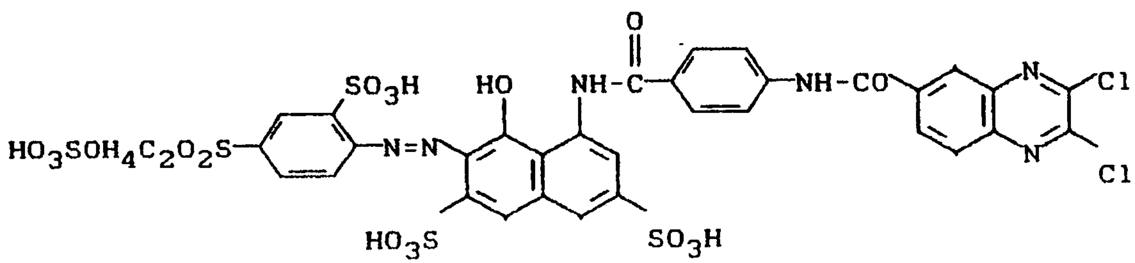 | rot |

| Nr. | Beispiel | Farbton |
|---|---|---|
| 13 | 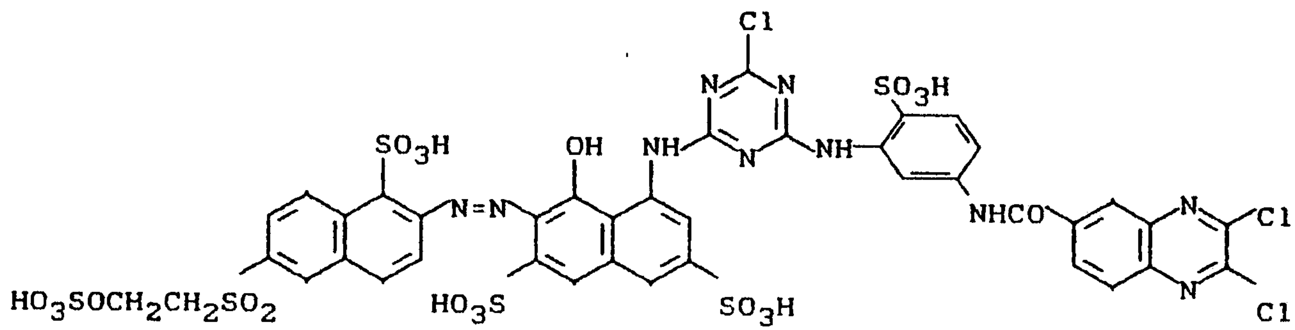 | blaustichig rot |
| 14 | 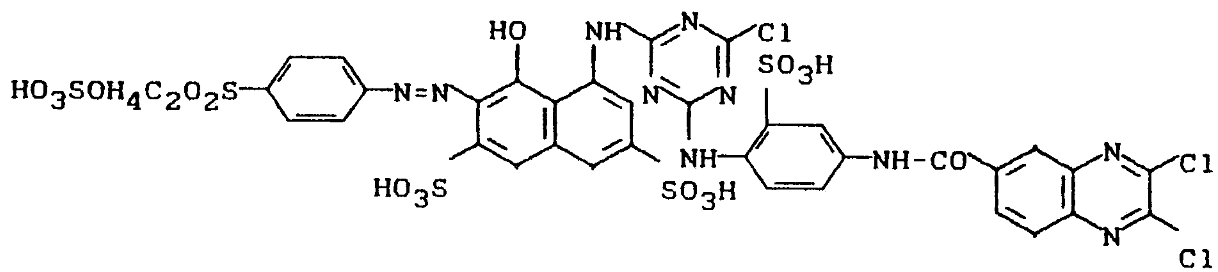 | " |
| 15 | 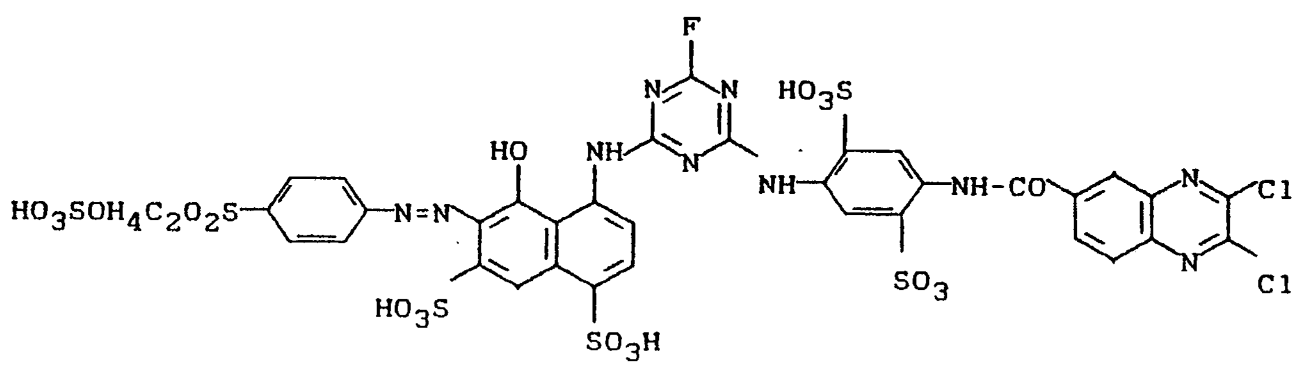 | gelbstichig rot |

| Nr. | Beispiel | Farbton |
|---|---|---|
| 16 | 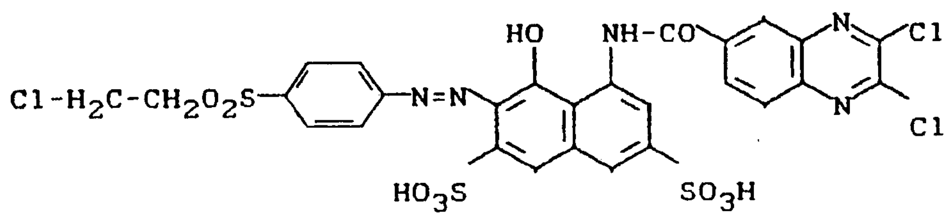 | blaustichig rot |
| 17 | 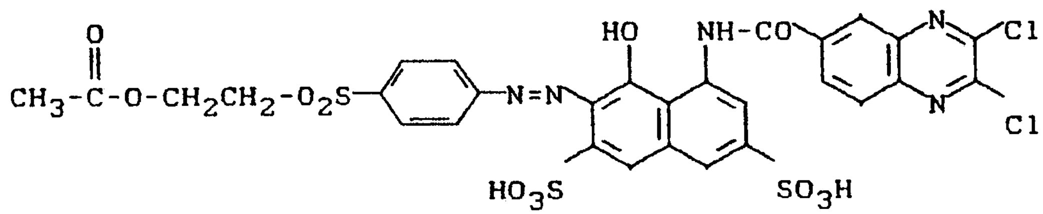 | " |
| 18 | 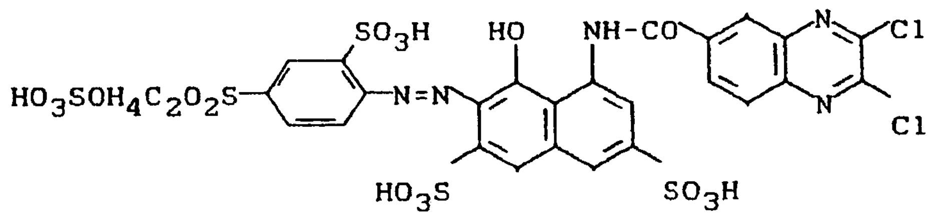 | rot |
| 19 | 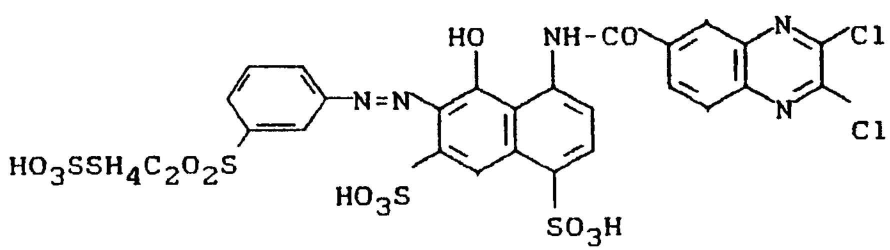 | gelbstichig rot |

| Nr. | Beispiel | Farbton |
| --- | --- | --- |
| 20 | 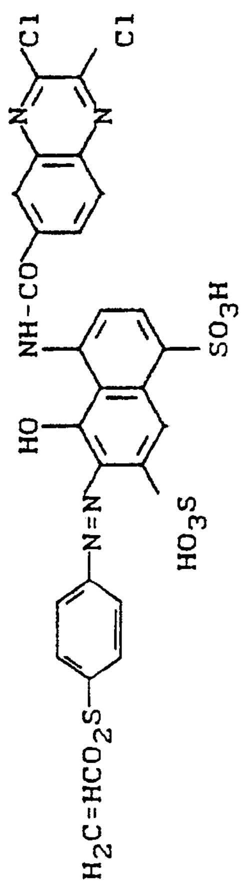 | gelbstichig rot |

Beispiel 21

0,1 Mol 1-Aminoethyl-3-sulfomethyl-4-methyl-6-hydroxypyridon (2) werden in Wasser gelöst und mit 0,105 Mol 2,3-Dichlorchinoxalin-6-carbonsäurechlorid umgesetzt. Der pH-Wert wird mit Sodalösung bei 7,5

gehalten. Nach beendeter Kondensation wird mit der in Beispiel 1 hergestellten Diazotierung versetzt. Durch Abstumpfen mit Sodalösung auf pH 5 bis 6 wird die Kupplung herbeigeführt. Der Farbstoff wird ausgesalzen, abgesaugt, getrocknet und gemahlen. Es resultiert ein in Wasser leicht lösliches gelbes Farbstoffpulver. Nach einem der für Reaktivfarbstoffe üblichen Applikationsverfahren erhält man damit auf Baumwolle stark grünstichig gelbe Färbungen.

Der Farbstoff entspricht der Formel

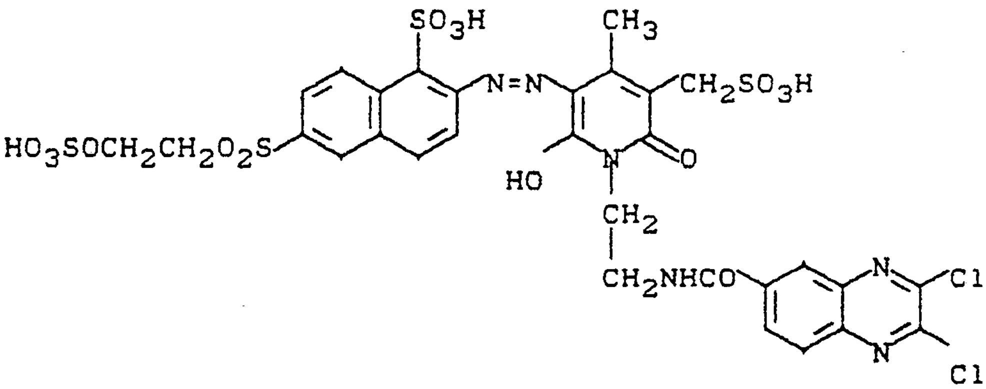

Beispiel 22

Einen gleich wertvollen Farbstoff erhält man nach der Arbeitsweise des Beispiels 21 unter Verwendung der Diazotierung aus Beispiel 2.

Der Farbstoff entspricht der Formel

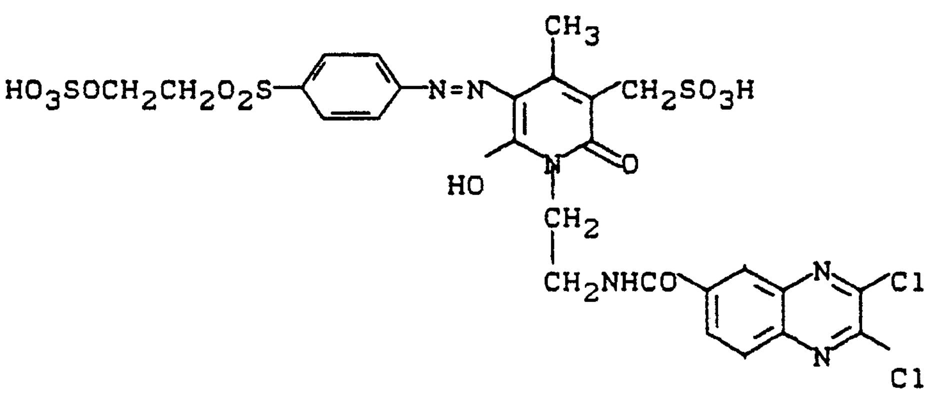

Beispiel 23

Ersetzt man die 1-Amino-8-naphthol-3,6-disulfonsäure (H-Säure) im Beispiel 1 durch die 2-Amino-8-naphthol-3,6-disulfonsäure und arbeitet ansonsten wie in diesem Beispiel angegeben, erhält man ein rotes Pulver, das den Farbstoff der Formel

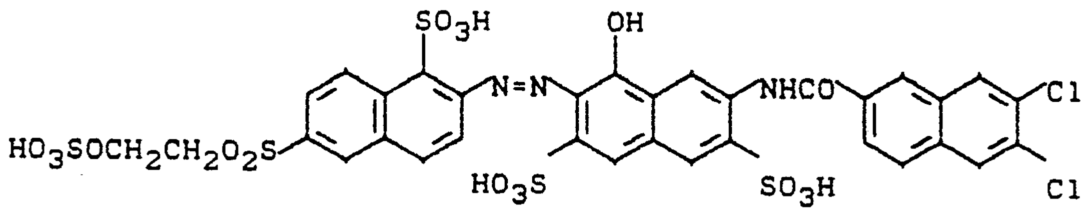

enthält. Dieser Farbstoff färbt Baumwolle nach den für Reaktivfarbstoffe üblichen Applikationsmethoden in Scharlachtönen.

Beispiel 24

0,1 Mol 4-Acetylamino-2-aminobenzolsulfonsäure werden in 100 ml Wasser mit Natronlauge neutral gelöst, mit Schwefelsäure versetzt und bei 0 °C mit Natriumnitritlösung diazotiert. Nach einer Stunde wird überschüssiges Nitrit mit Amidosulfonsäure entfernt. Zu dieser Diazotierung gibt man die äquivalente Menge 1-(4'-Hydroxyethylsulfophenyl)-pyrazol-5-on-3-carbonsäure und hebt den pH mit Natronlauge auf 5. Nachdem die Kupplung beendet ist, wird aufgeheizt, mit Schwefelsäure versetzt und bei 90 °C die Acetylgruppe verseift. Der Farbstoff fällt aus, wird abgesaugt und getrocknet. Anschließend wird zur Sulfatierung der Hydroxygruppe in Monohydrat eingetragen. Nach dem Austragen auf Eiswasser wird mit 2,3-Dichlorchinoxalin-6-carbonsäurechlorid bei pH 4 und 40 °C kondensiert. Der Farbstoff wird ausgesalzen, isoliert, getrocknet und gemahlen. Man erhält ein bräunliches Farbstoffpulver, das den Farbstoff der Formel

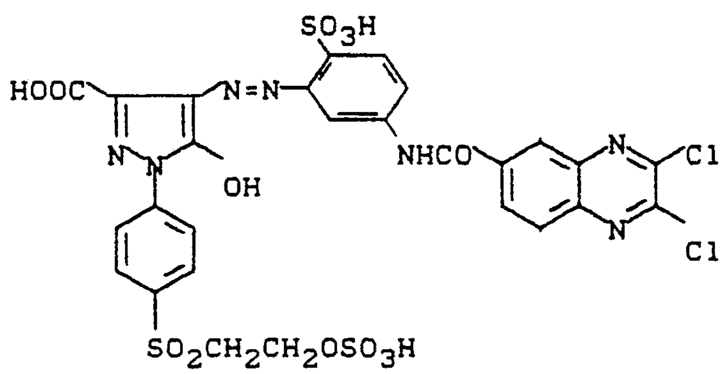

enthält und Baumwolle nach den für Reaktivfarbstoffe üblichen Applikationsmethoden in grünstichig gelben Tönen färbt.

Beispiel 25

Arbeitet man analog dem Beispiel 24 und setzt anstelle von 4-Acetylamino-2-aminobenzolsulfonsäure die 5-Acetylamino-2-amino-benzolsulfonsäure ein, erhält man den Farbstoff der Formel

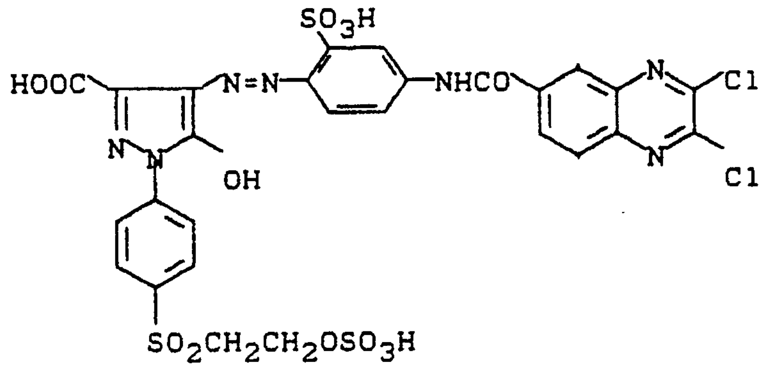

der Baumwolle nach den für Reaktivfarbstoffe üblichen Applikationsmethoden in goldgelben Tönen färbt.

Analog zu den beschriebenen Methoden lassen sich auch die in der folgenden Tabelle aufgeführten Farbstoffe herstellen, die Baumwolle in den angegebenen Farbtönen färben.

| Nr. | Beispiel | Farbton |
|---|---|---|
| 26 | 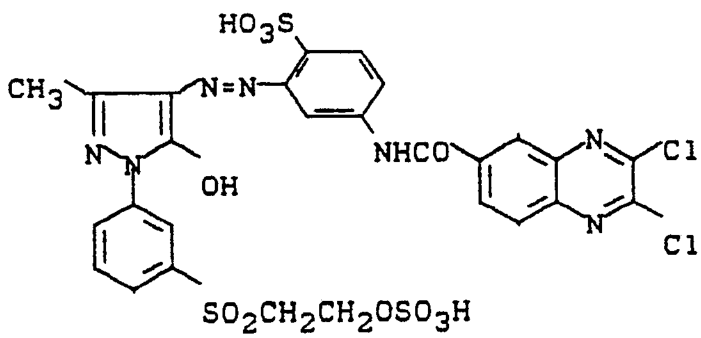 | grünstichig gelb |

| Nr. | Beispiel | Farbton |
|---|---|---|
| 27 | 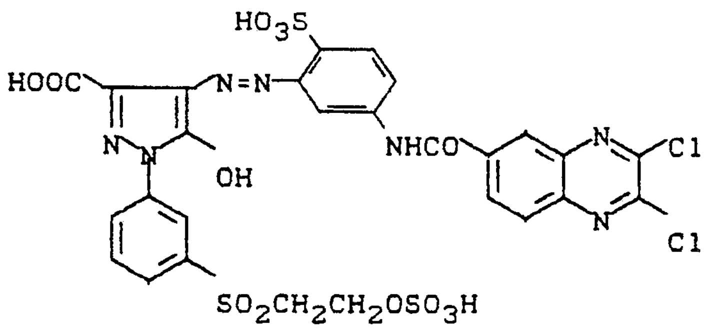 | grünstichig gelb |
| 28 | 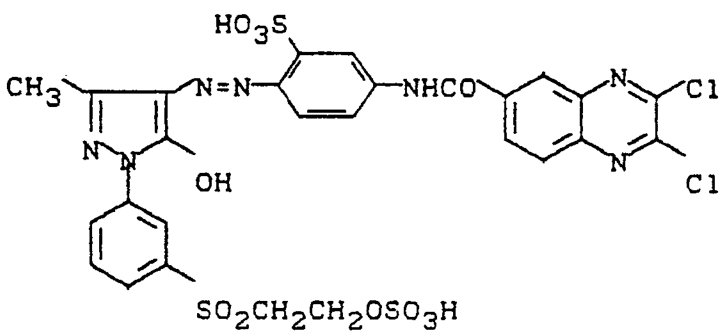 | goldgelb |
| 29 | 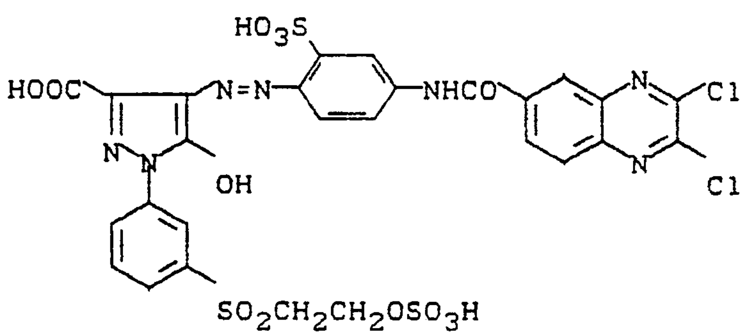 | goldgelb |
| 30 | 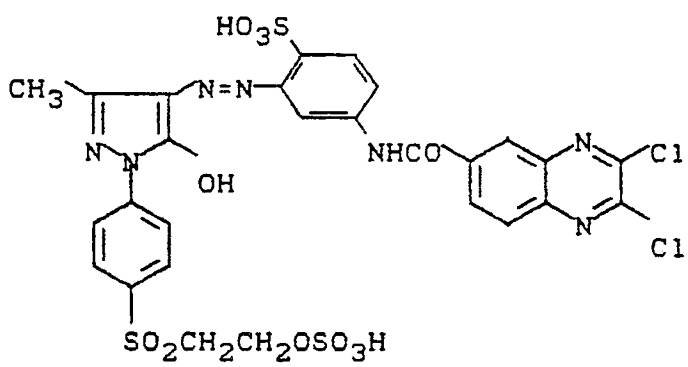 | grünstichig gelb |

| Nr. | Beispiel | Farbton |
| --- | --- | --- |
| 31 | 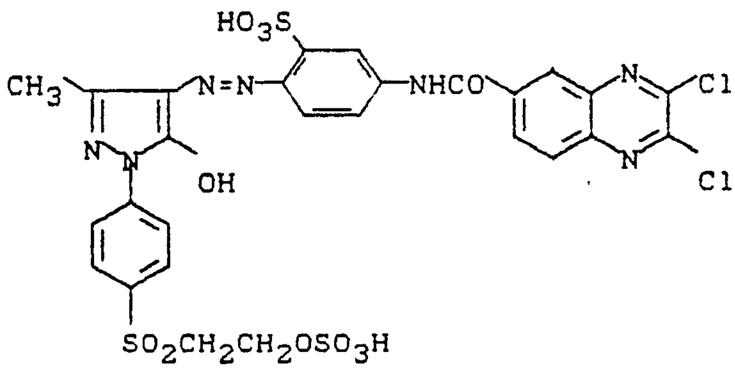 | goldgelb |

| Nr. | Beispiel | Farbton |
| --- | --- | --- |
| 32 | 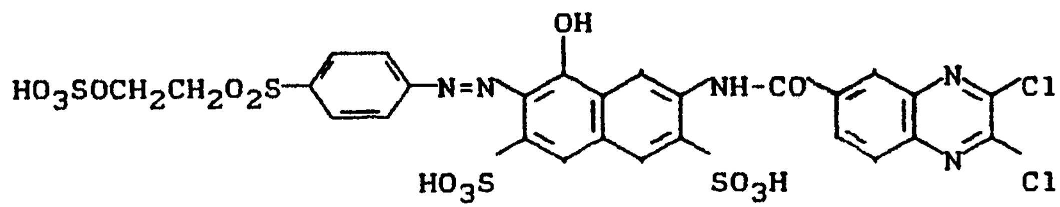 | Scharlach |
| 33 | 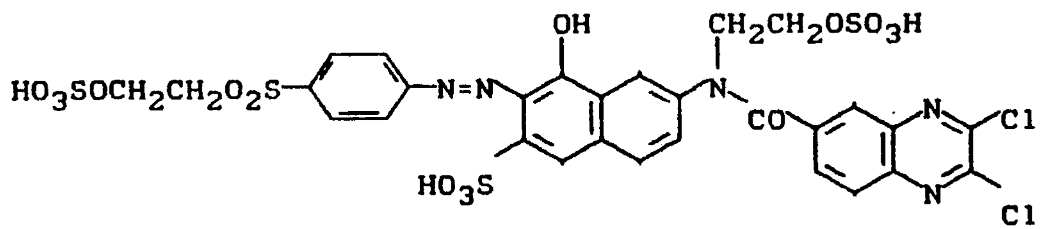 | " |
| 34 | 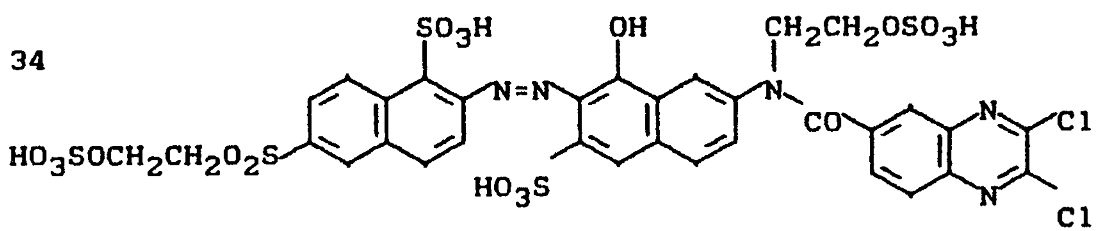 | " |

| Nr. | Beispiel | Farbton |
|---|---|---|
| 35 | 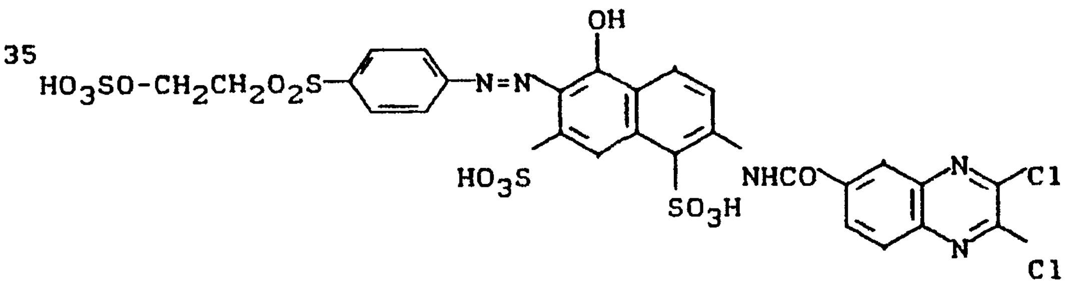 | Orange |
| 36 | 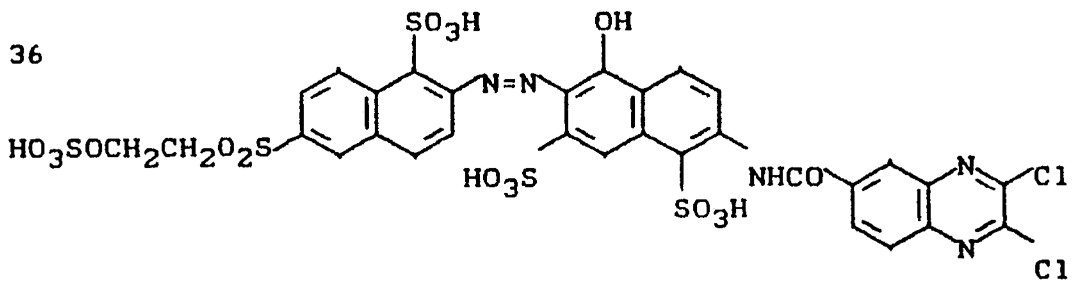 | Scharlach |
| 37 | 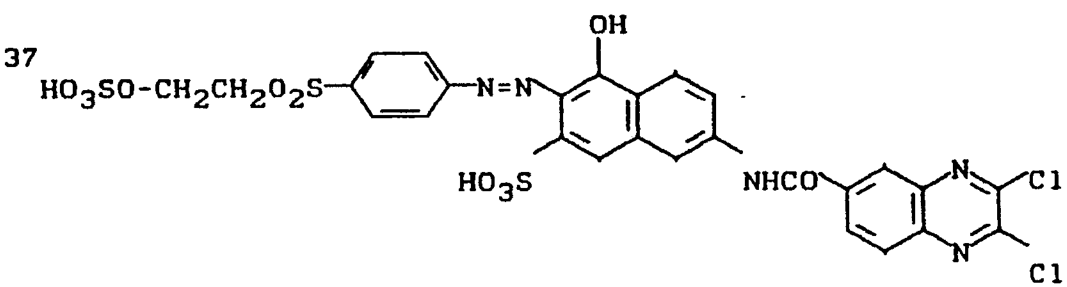 | Orange |

| Nr. | Beispiel | Farbton |
|---|---|---|
| 38 | 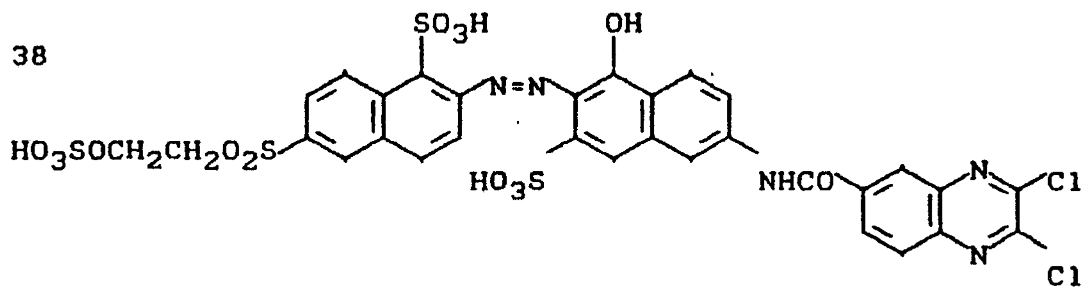 | Scharlach |
| 39 | 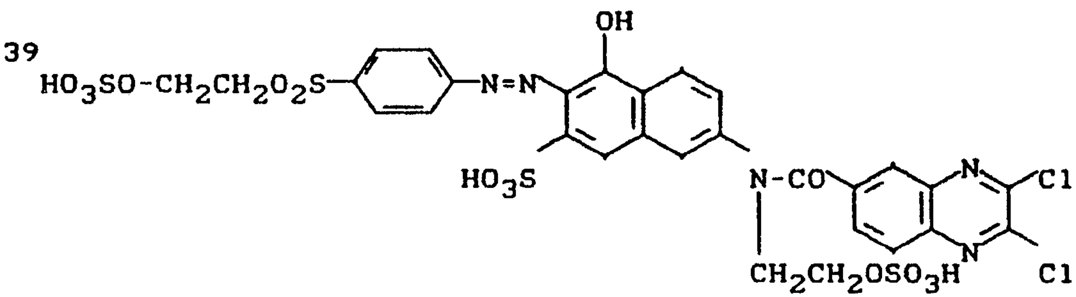 | Orange |
| 40 | 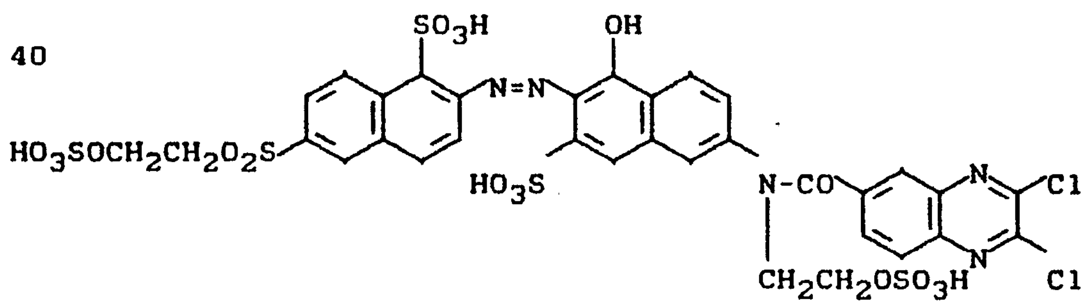 | Scharlach |

| Nr. | Beispiel | Farbton |
|---|---|---|
| 41 | 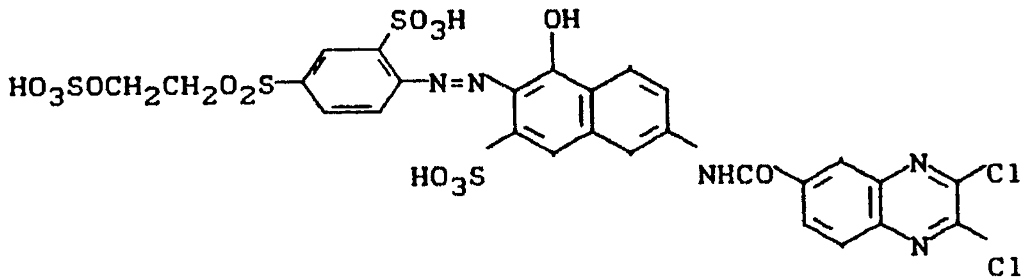 | Orange |
| 42 | 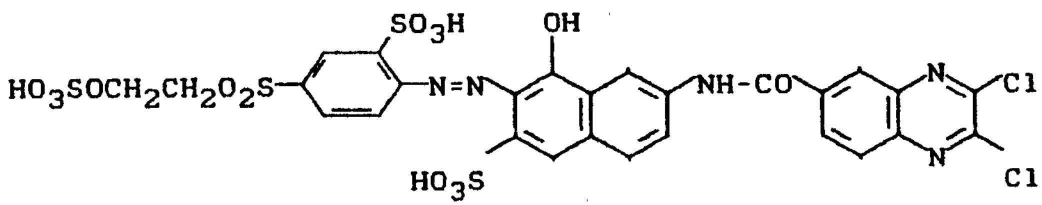 | " |
| 43 | 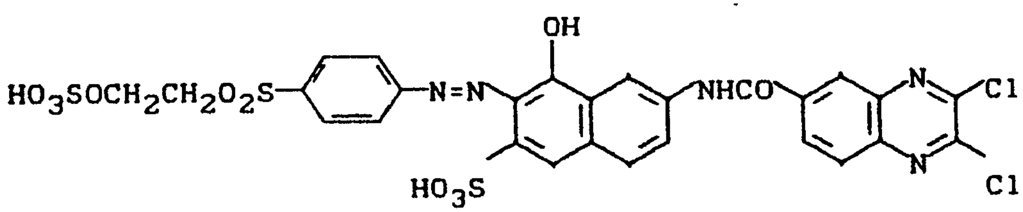 | Scharlach |

| Nr. | Beispiel | Farbton |
|---|---|---|
| 44 | 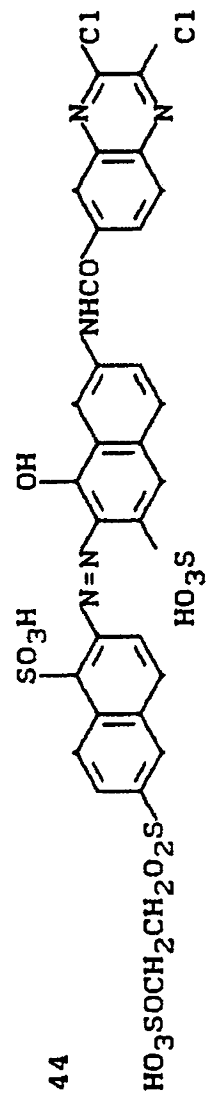 | Scharlach |

Beispiel 45

0,1 Mol 1-(4'-Amino-3'-sulfophenyl)-3-methyl-5-pyrazolon werden in 400 ml Wasser mit Natronlauge neutral gelöst, mit Salzsäure auf pH 4 gestellt und mit der äquivalenten Menge an 2,3-Dichlorchinoxalin-6-carbonsäurechlorid bei 35° C acyliert, wobei die entstehende Salzsäure mit Sodalösung neutralisiert wird. Zu der so hergestellten Kupplungskomponente wird eine wie in Beispiel 1 hergestellte Diazotierung von 2-Amino-6-sulfatoethylsulfonylnaphthalin-1-sulfonsäure gegeben und der pH-Wert mit Natriumacetatlösung bei

4 gehalten. Nach beendeter Kupplung wird der Farbstoff ausgesalzen, isoliert, getrocknet und gemahlen. Man erhält ein bräunliches Pulver, das den Farbstoff der Formel

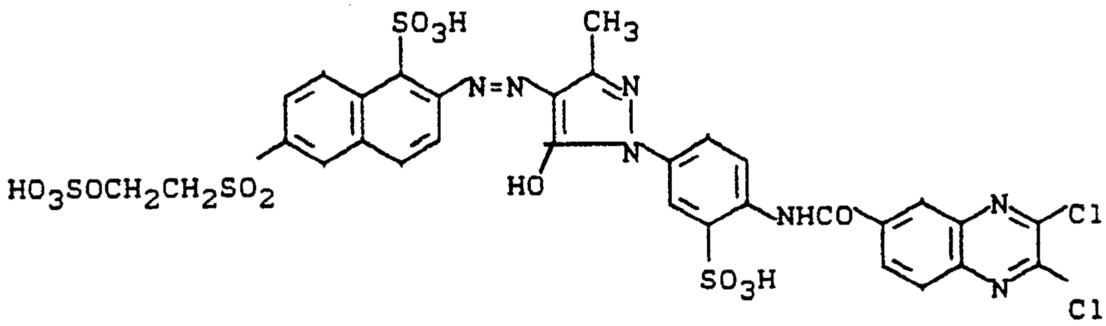

enthält und Baumwolle in gelben Tönen färbt.

Beispiel 46

Setzt man im Beispiel 45 anstelle der Diazotierung von 2-Amino-6-sulfatoethylsulfonyl-naphthalin-1-sulfonsäure die Diazotierung von 1-Amino-4-sulfatoethylsulfonylbenzol ein, erhält man ebenfalls einen wertvollen Farbstoff der Formel

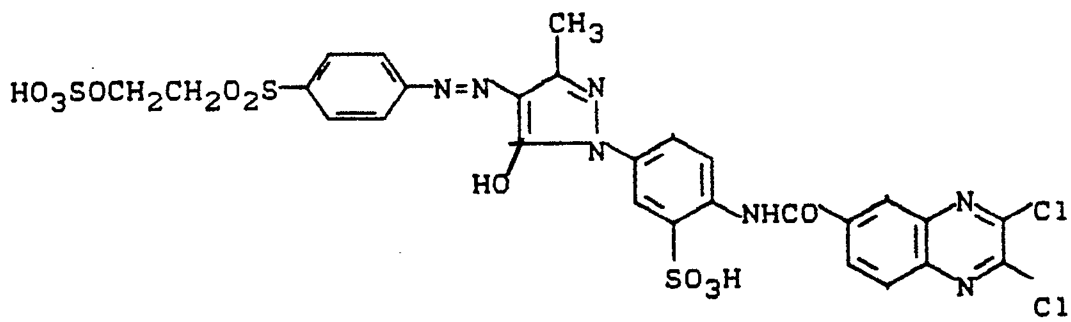

der Baumwolle nach den für Reaktivfarbstoffe üblichen Applikationsverfahren in gelben Tönen färbt.

Beispiel 47

Die analog Beispiel 2 hergestellte Diazotierung von 1-Amino-4-sulfatoethylsulfonylbenzol wird mit 4-Acetylamino-2-amino-benzol-1-sulfonsäure versetzt und der pH mit Natriumacetatlösung auf pH 2 angehoben und gehalten. Nach beendeter Kupplung wird bei pH 4 und 40 °C mit 2,3-Dichlorchinoxalin-6-carbonsäurechlorid acyliert, wobei entstehende Salzsäure mit Sodalösung neutralisiert wird. Nach Ende der Kondensation wird der Farbstoff ausgesalzen, isoliert, getrocknet und gemahlen. Der Farbstoff der Formel

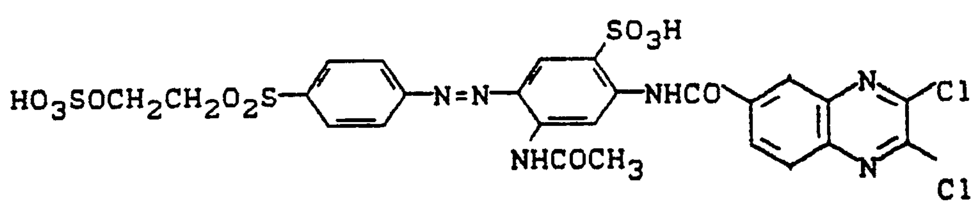

färbt Baumwolle in gelben Tönen.

Beispiel 48

Ersetzt man im Beispiel 47 die Diazokomponente durch die Diazokomponente des Beispiels 1, erhält man einen Farbstoff der Formel

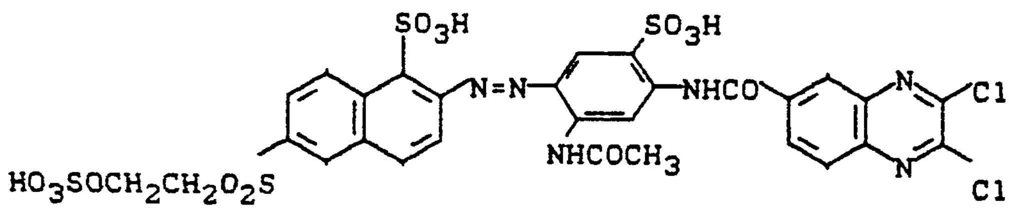

der Baumwolle in gelben Tönen färbt.

Beispiel 49

0,1 Mol des Azofarbstoffes der Formel

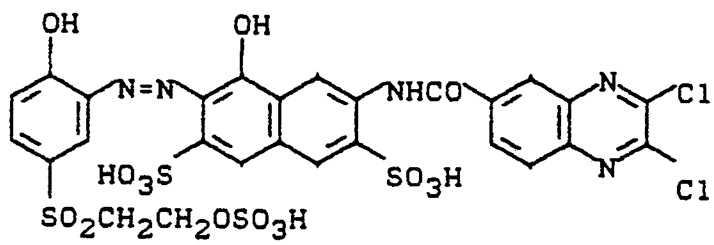

werden in 1 l Wasser neutral gelöst. Man streut bei Raumtemperatur 28 g Kupfersulfat ($CuSO_4 \cdot 5H_2O$) ein und hält durch gleichzeitiges Eintropfen von Sodalösung den pH zwischen 5,5 und 6,5. Nach beendeter Kupferung wird der Farbstoff mit Kochsalz ausgesalzen, abgesaugt, getrocknet und gemahlen.

Man erhält ein dunkles Pulver, das sich leicht in Wasser löst und Baumwolle nach einem der für Reaktivfarbstoffe üblichen Färbeverfahren rubin färbt. Der Farbstoff entspricht der Formel

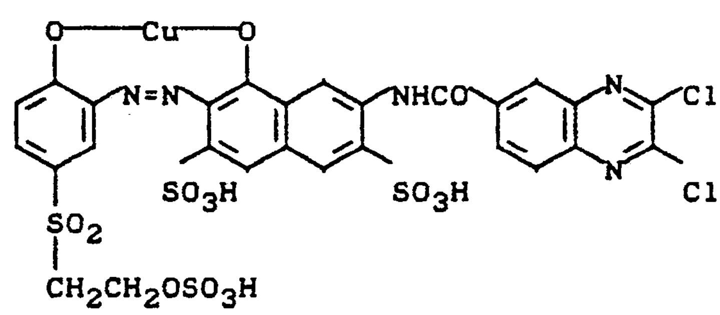

Der in diesem Beispiel verwendete Azofarbstoff wird erhalten, indem man 2-Amino-4-sulfatoethylsulfonylphenol diazotiert und bei pH 5,5 bis 6,5 auf das Kondensationsprodukt kuppelt, das man durch Acylierung von 2-Amino-8-hydroxy-naphthalin-3,6-disulfonsäure mit 2,3-Dichlorchinoxalin-6-carbonsäurechlorid erhält.

Beispiel 50

0,1 Mol des Disazofarbstoffes der Formel

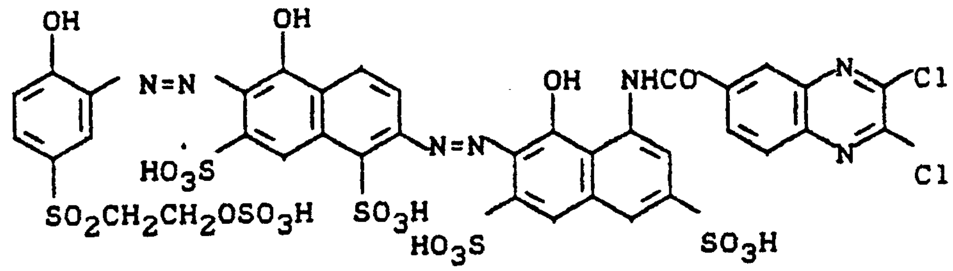

werden in 1 l Wasser neutral gelöst, bei Raumtemperatur mit 28 g Kupfersulfat ($CuSO_4 \cdot 5H_2O$) versetzt und durch Eintropfen von Sodalösung bei pH 5,5 bis 6,5 gehalten. Nach beendeter Kupferung wird der Farbstoff mit Kochsalz ausgesalzen, abgesaugt, getrocknet und gemahlen.

Man erhält ein dunkelblaues Pulver, das sich leicht in Wasser löst und Baumwolle nach einem der für Reaktivfarbstoffe üblichen Färbeverfahren in marineblauen Tönen färbt. Der Farbstoff entspricht der Formel

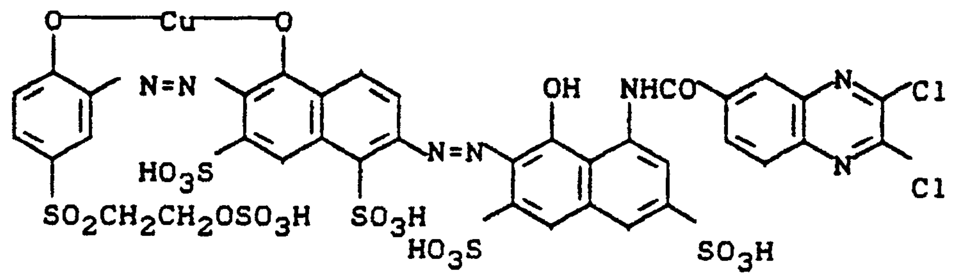

Der in diesem Beispiel verwendete Disazofarbstoff wird erhalten, indem man 2-Amino-4-sulfatoethylsulfonylphenol diazotiert, bei pH 5,5 bis 6,5 auf 2-Amino-5-hydroxy-naphthalin-1,7-disulfonsäure kuppelt, den resultierenden Aminoazofarbstoff diazotiert und bei pH 5,5 bis 6,5 auf das Kondensationsprodukt kuppelt, das man durch Acylierung von 1-Amino-8-hydroxy-naphthalin-3,6-disulfonsäure mit 2,3Dichlorchinoxalin-6-carbonsäurechlorid erhält.

Beispiel 51

0,1 Mol 2,4-Diaminobenzolsulfonsäure werden in Wasser mit 2,3-Dichlorchinoxalin-6-carbonsäurechlorid bei pH 4 und 40° C acyliert, wobei entstehende Salzsäure mit Sodalösung neutralisiert wurde. Die wäßrigsalzsaure Diazotierung dieses Kondensationsproduktes wurde zu dem Azofarbstoff der Formel

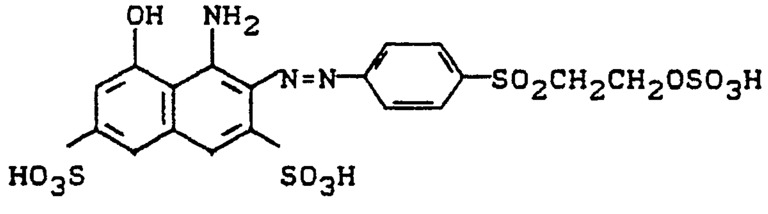

gegeben und der pH-Wert durch Eintropfen von Sodalösung bei 6,5 gehalten. Nach beendeter Kupplung wurde der Farbstoff ausgesalzen, isoliert, getrocknet und gemahlen. Man erhält ein schwarzes Pulver, das Baumwolle in marineblauen Tönen färbt. Der Farbstoff entspricht der Formel

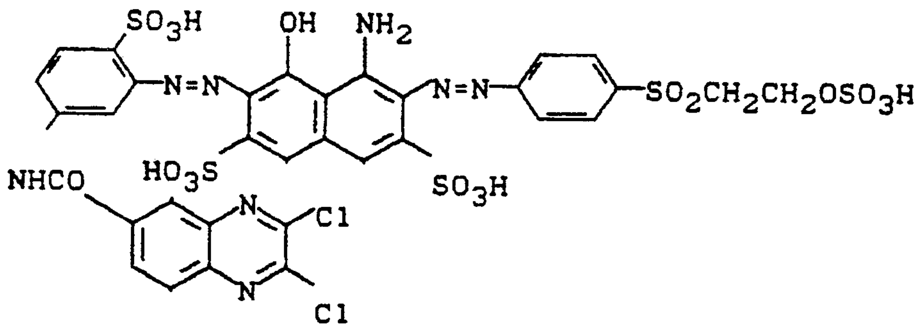

Beispiel 52

0,1 Mol wäßrig-salzsauer diazotiertes 2-Amino-6-sulfatoethylsulfonylnaphthalin wird mit der äquivalenten Menge neutral gelöster 1-Amino-8-hydroxy-naphthalin-3,6-disulfonsäure tropfenweise versetzt. Nachdem die saure Kupplung beendet ist, gibt man die Diazotierung aus Beispiel 51 hinzu und stellt mit Sodalösung pH 6,5 ein. Nach beendeter Kupplung wurde der Farbstoff ausgesalzen, isoliert, getrocknet und gemahlen. Man erhält ein schwarzes Pulver, das Baumwolle in marineblauen bis schwarzen Tönen färbt. Der Farbstoff entspricht der Formel

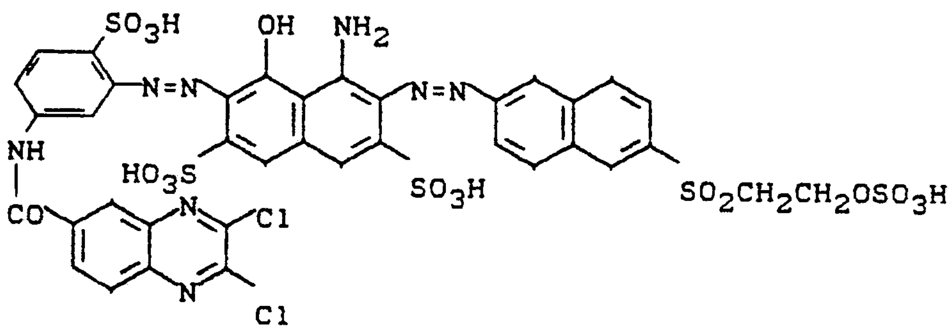

Anlaog zu den beschriebenen Methoden lassen sich auch die in der folgenden Tabelle aufgeführten Farbstoffe herstellen, die Baumwolle im angegebenen Farbton färben.

| Nr. | Beispiel | Farbton |
| --- | --- | --- |
| 53 | 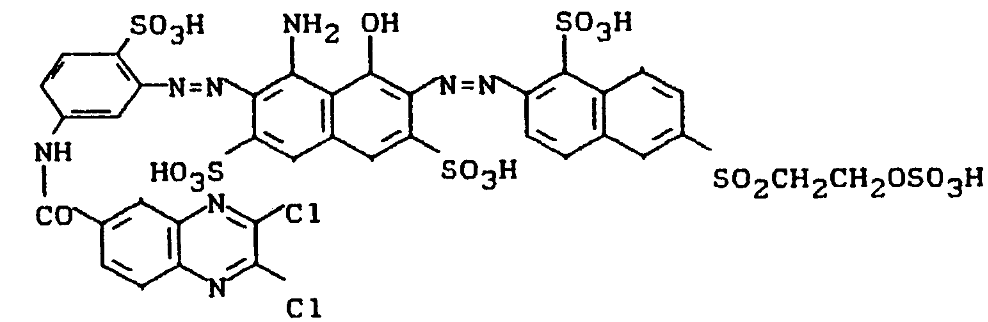 | marineblau |
| 54 | 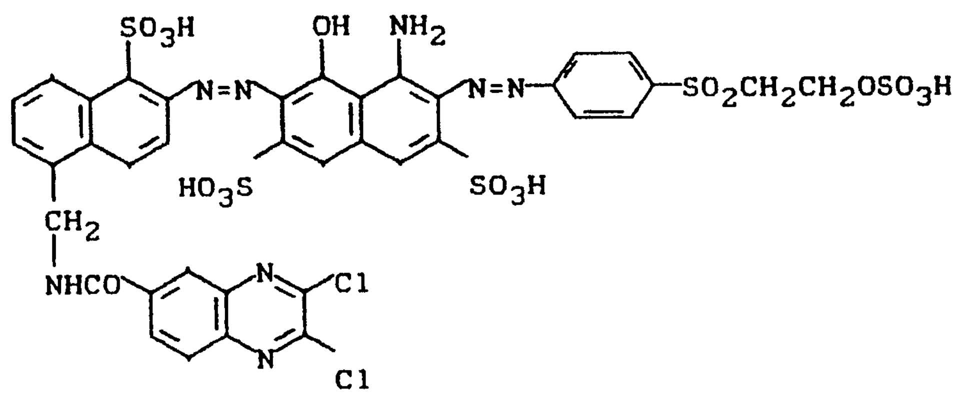 | " |

| Nr. | Beispiel | Farbton |
|---|---|---|
| 55 | 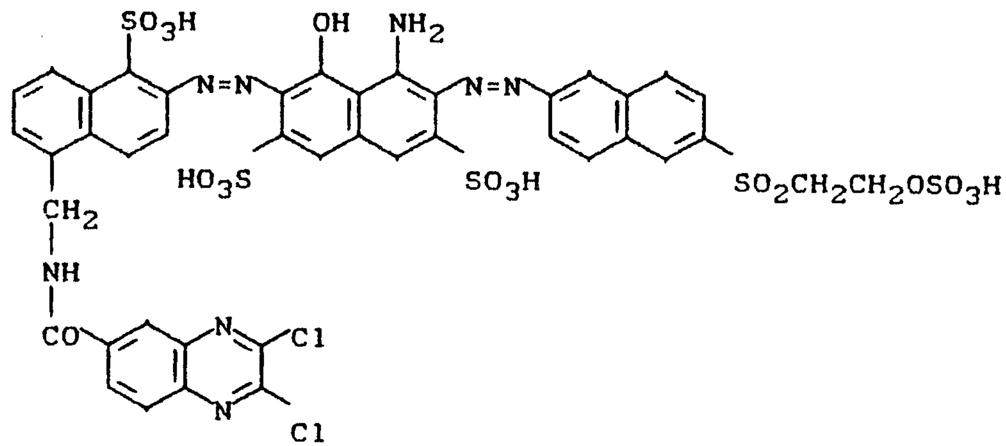 | marineblau |
| 56 | 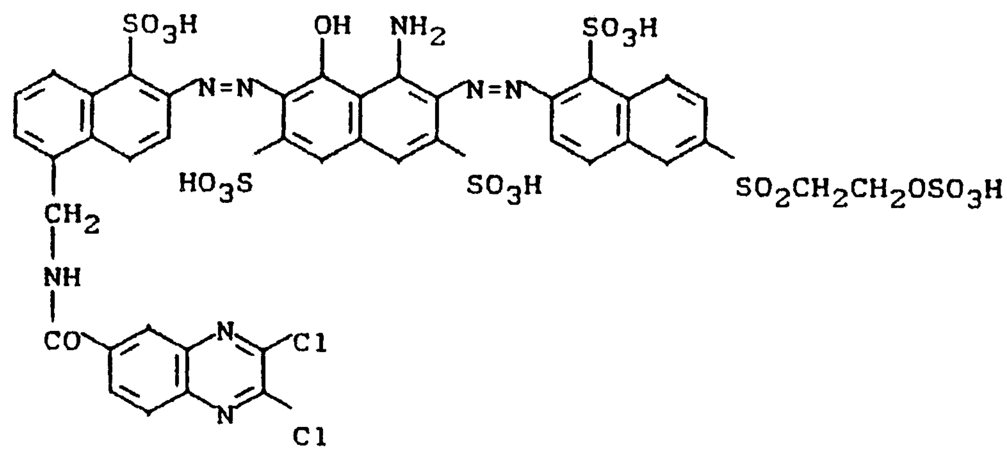 | " |

| Nr. | Beispiel | Farbton |
|---|---|---|
| 57 | 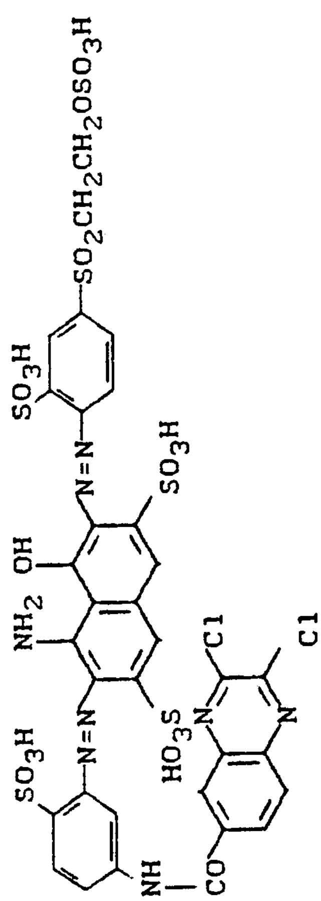 | marineblau |
| 58 | 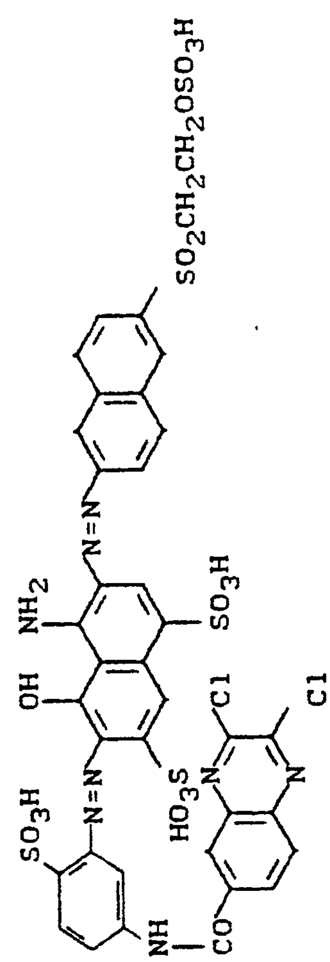 | " |

Beispiel 59

In die analog Beispiel 5 hergestellte Diazotierung von 1-Amino-4-sulfatoethylsulfonylbenzol wird das bei pH 4 und 40°C hergestellte Kondensationsprodukt aus 1-Hydroxy-3-sulfo-7-(2'-sulfo-4'-aminophenylamino)-naphthalin und 2,3-Dichlorchinoxalin-6-carbonsäurechlorid gegeben. Durch Einstellen eines pH-Wertes von 6 bis 7 mit Sodalösung wird der Farbstoff der Formel

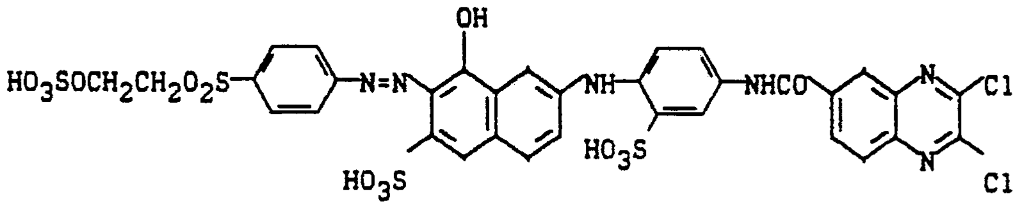

hergestellt. Nach beendeter Kupplung wird der Farbstoff ausgesalzen, isoliert, getrocknet und gemahlen. Man erhält ein dunkelbraunes, leicht in Wasser lösliches Pulver, das Baumwolle braun färbt.

Beispiel 60

Ersetzt man im Beispiel 59 die dort angegebene Diazotierung durch die in Beispiel 1 beschriebene Diazotierung, erhält man nach der gleichen Verfahrensweise den Farbstoff der Formel

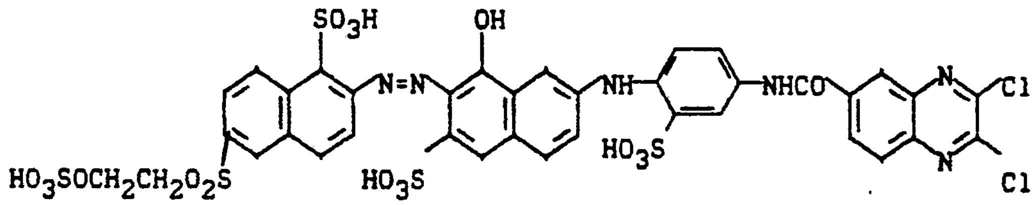

der Baumwolle ebenfalls in braunen Tönen färbt.

Beispiel 61

Zu der analog Beispiel 5 hergestellten Diazotierung von 1-Amino-4-sulfatoethylsulfonylbenzol wird die äquivalente Menge an 5-Amino-2-naphthalinsulfonsäure gegeben und der pH-Wert durch Zugabe von Natriumacetatlösung auf 4,5 gestellt. Nach 2 Stunden Rühren bei 10 bis 15 °C ist keine Diazotierung mehr nachweisbar. Es wird auf 0 bis 5 °C abgekühlt und salzsauer mit Natriumnitritlösung diazotiert. Nach 1 Stunde wird überschüssige salpetrige Säure mit Amidosulfonsäure zerstört. In die Diazotierung wird 2-Amino-1-naphthalinsulfonsäure eingetragen, der pH-Wert auf 4 bis 5 mit Sodalösung angehoben und 2 Stunden nachgerührt. Nach beendeter Kupplung wird mit 2,3-Dichlorchinoxalin-6-carbonsäurechlorid bei pH 4 und 35 °C acyliert. Der Farbstoff wird ausgesalzen, isoliert, getrocknet und gemahlen. Man erhält ein dunkelbraunes Farbstoffpulver, das den Farbstoff der Formel

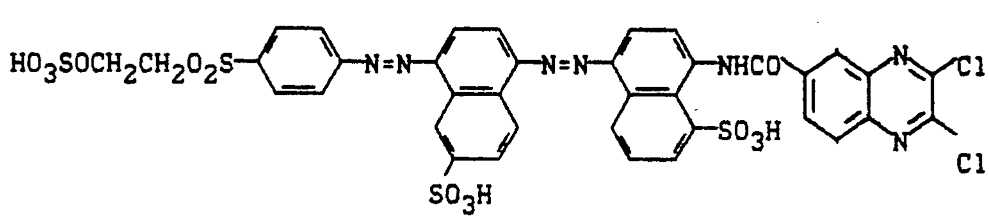

enthält und Baumwolle in braunen Tönen färbt.

Beispiel 62

Nach der Arbeitsweise des Beispiels 61 erhält man unter Verwendung der Diazotierung von 2-Amino-6-sulfatoethylsulfonyl-naphthalin-1-sulfonsäure den Farbstoff der Formel

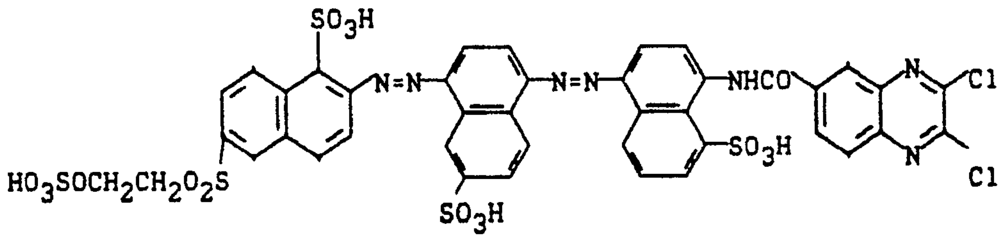

der Baumwolle nach den für Reaktivfarbstoffe üblichen Applikationsmethoden in braunen Tönen färbt.

Beispiel 63

Nach der Arbeitsweise des Beispiels 61 erhält man unter Verwendung der Diazotierung von 7-Amino-3-sulfatoethylsulfonyl-naphthalin-1-sulfonsäure und m-Toluidin als 2. Kupplungskomponente den Farbstoff der Formel

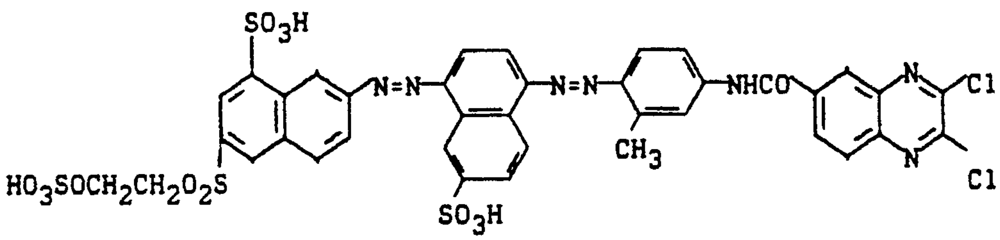

der Baumwolle in braunen Tönen färbt.

Analog zu den beschriebenen Methoden lassen sich auch die in der folgenden Tabelle aufgeführten Farbstoffe herstellen, die Baumwolle im angegebenen Farbton färben.

| Nr. | Beispiel | Farbton |
|---|---|---|
| 64 | 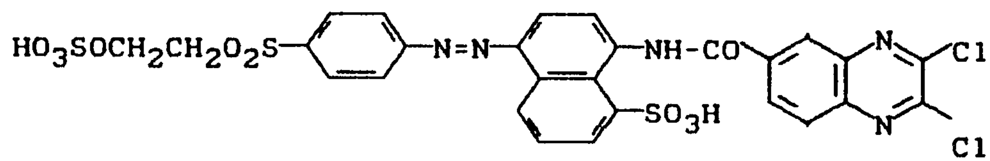 | Gelb |
| 65 | 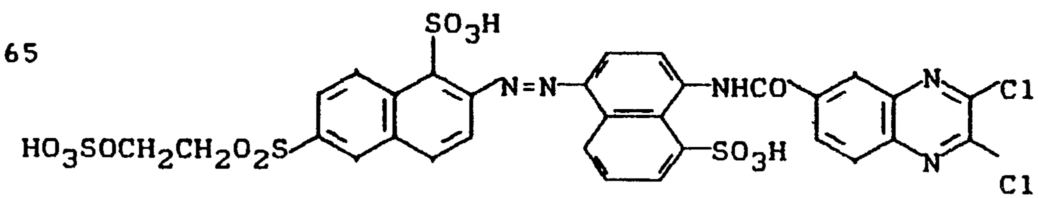 | " |
| 66 | 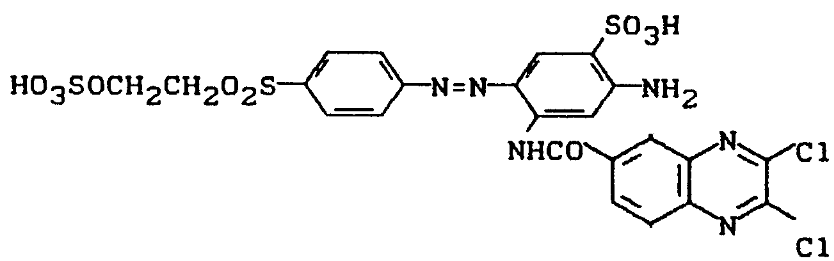 | " |

| Nr. | Beispiel | Farbton |
| --- | --- | --- |
| 67 | 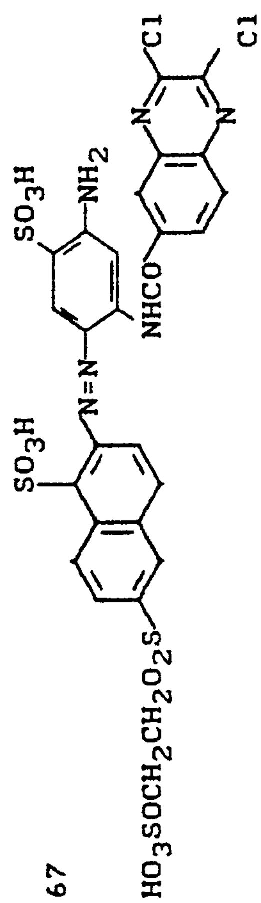 | Gelb |

Beispiel 68

30,3 Teile 2-Naphthylamin-4,8-disulfonsäure werden in 400 Volumenteilen Eiswaser suspendiert. Es werden 25 Gewichtsteile conc. Salzsäure zugefügt und mit 20 Volumenteilen 5n-Natriumnitrit diazotiert. Es wird noch 1 Stunde bei 0 bis 5 °C nachgerührt und dann überschüssige salpetrige Säure mit wenig Amidosulfonsäure zerstört. Dann werden 33,1 Teile 1-Naphthylamin-6-β-sulfatoethylsulfon zugegeben und durch Natriumacetat wird der pH-Wert langsam auf 4,5 erhöht. Bei diesem pH-Wert wird noch 2 Stunden bei 10 bis 15 °C nachgerührt, bis keine freie Diazoniumverbindung mehr nachweisbar ist. Dann wird wieder

auf 0 bis 5° C abgekühlt, 35 Teile einer conc. Salzsäure und anschließend 22 Volumenteile einer 5n-Natriumnitritlösung zugefügt. Es wird 1 Stunde bei 0 bis 5° C nachgerührt und dann wenig Amidosulfonsäure zugegeben.

In die Lösung werden dann 22;5 Teile 1-Naphthylamin-8-sulfonsäure eingetragen und mit etwa 15 Teilen Soda ein pH-Wert von 4 bis 5 eingestellt und gehalten, wobei 2 Stunden nachgerührt wird. Die Farbstofflösung wird dann auf pH 5,5 bis 6,0 gestellt und auf 40° C erwärmt. Bei dieser Temperatur und bei diesem pH-Wert gibt man 25 Teile 2,3-Dichlorchinoxalin-6-carbonsäure hinzu und läßt dann 1 Stunde nachrühren, wobei der pH-Wert von 5,5 bis 6,0 gehalten wird. Der Farbstoff wird mit Kalium-und Natriumchlorid aus der Lösung isoliert.

Nach dem Trocknen bei 40 bis 50° C und Mahlen erhält man ein schwarzes Farbstoffpulver, das das Alkalimetallsalz der Verbindung der Formel

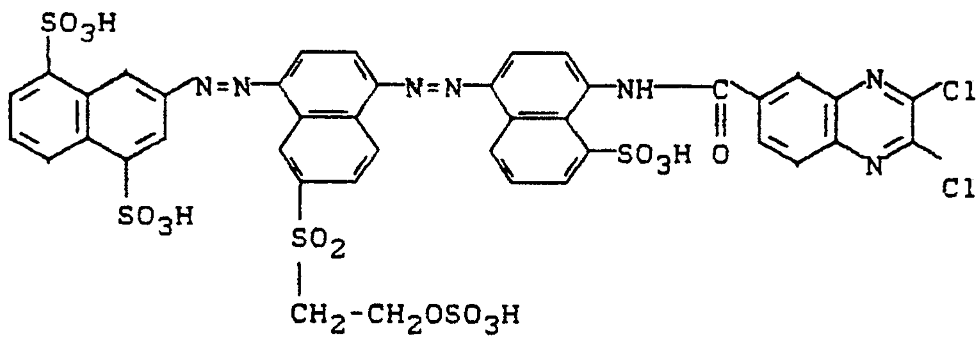

enthält. Diese Verbindung besitzt sehr gute Farbstoffeigenschaften und färbt Baumwolle und Wolle nach den üblichen Färbe- und Druckmethoden für Reaktivfarbstoffe in braunen Tönen mit sehr guten Naßechtheitseigenschaften.

Analog zu den beschriebenen Methoden lassen sich auch die in der folgenden Tabelle aufgeführten Farbstoffe herstellen, die Baumwolle im angegebenen Farbton färben.

| Nr. | Beispiel | Farbton |
|---|---|---|
| 69 | 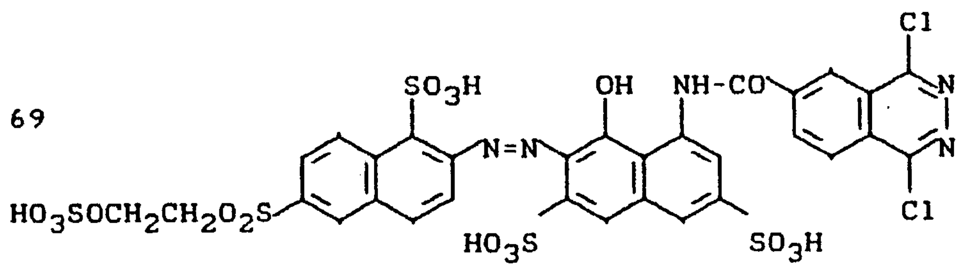 | blaustichig rot |
| 70 | 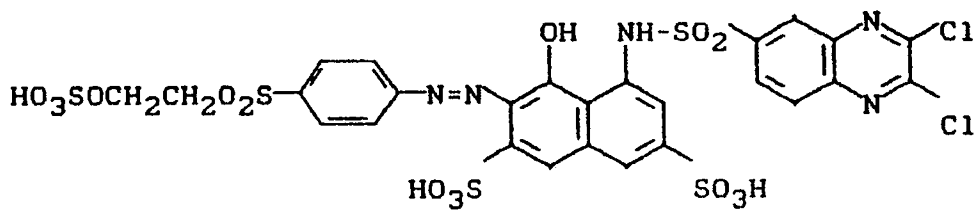 | rot |
| 71 | 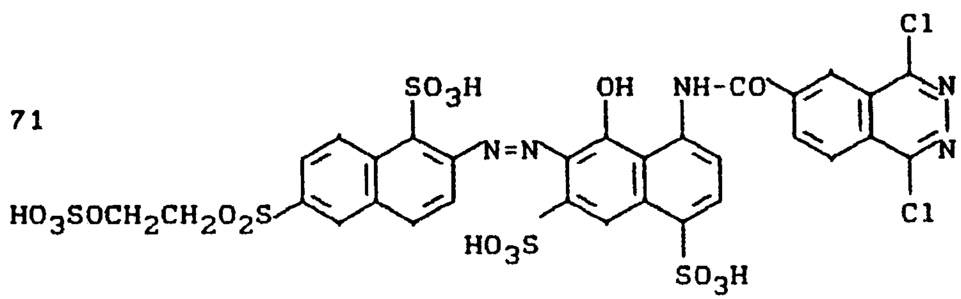 | rot |

| Nr. | Beispiel | Farbton |
|---|---|---|
| 72 | 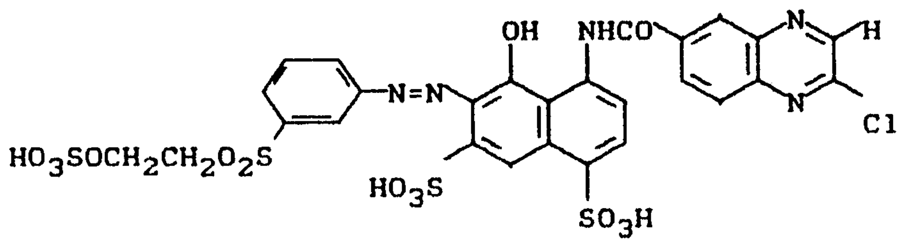 | gelbstichig rot |
| 73 | 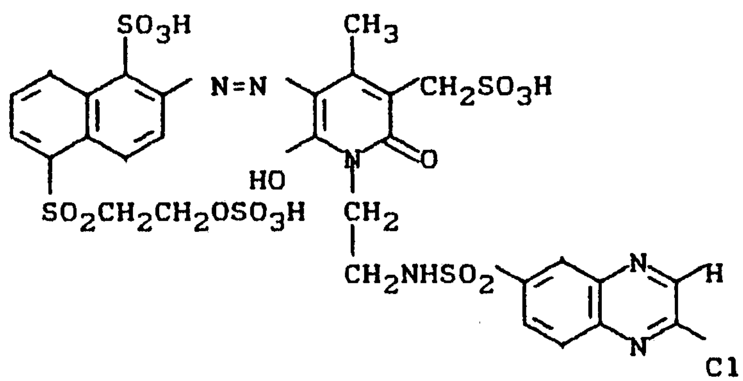 | grünstichig gelb |

| Nr. | Beispiel | Farbton |
|---|---|---|
| 75 | 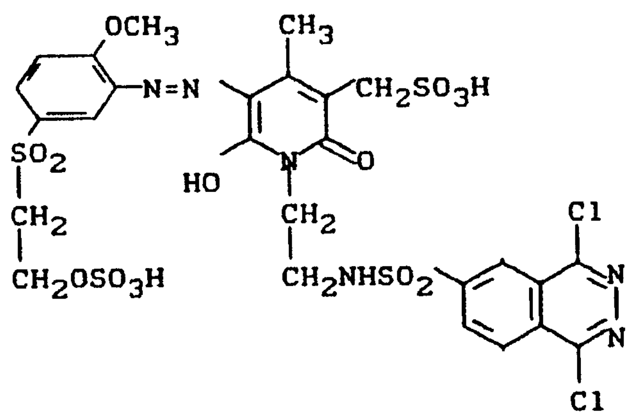 | grünstichig gelb |
| 76 | 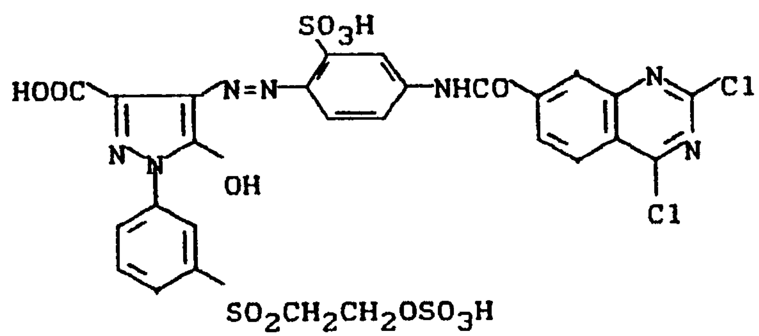 | goldgelb |

| Nr. | Beispiel | Farbton |
|---|---|---|
| 77 | 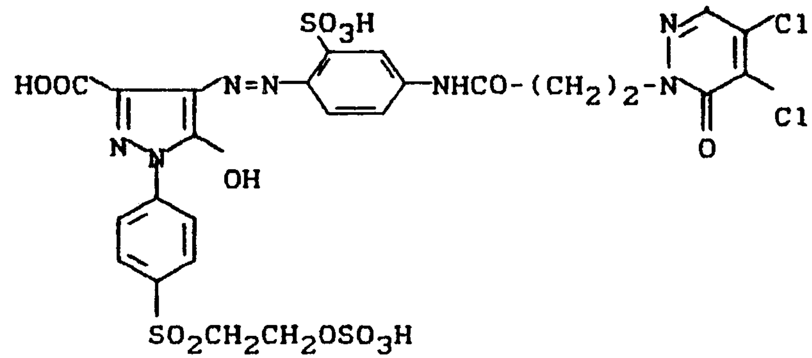 | grünstichig gelb |
| 78 | 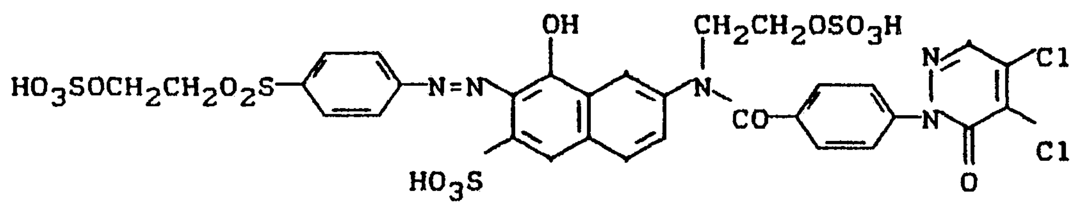 | Scharlach |
| 79 | 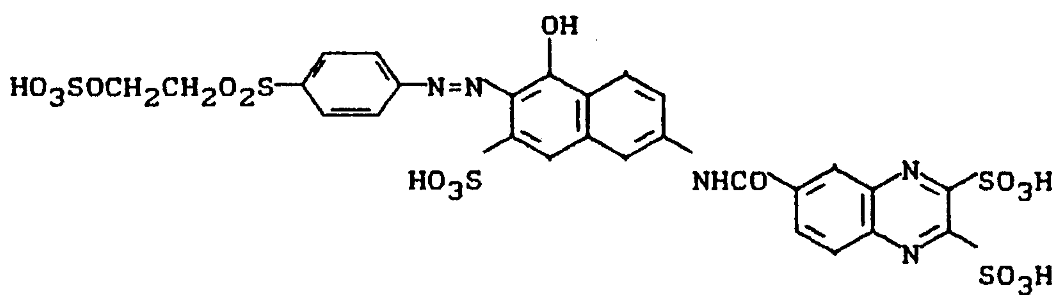 | Orange |

| Nr. | Beispiel | Farbton |
|---|---|---|
| 80 | 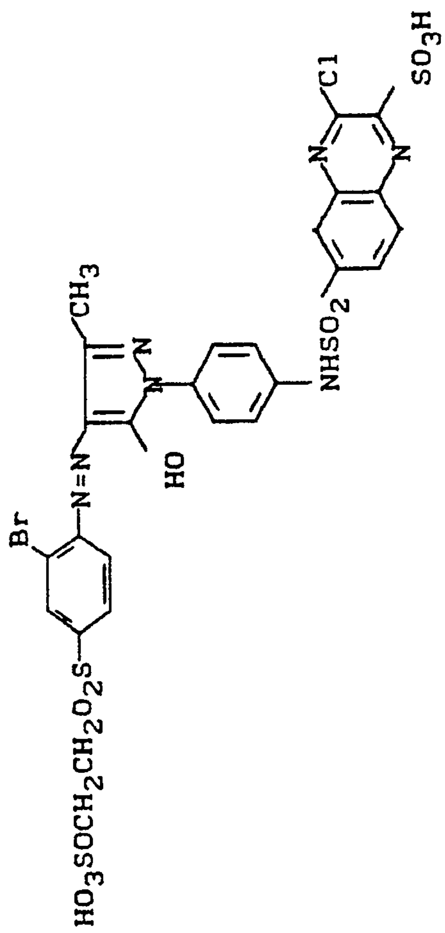 | gelb |
| 81 | 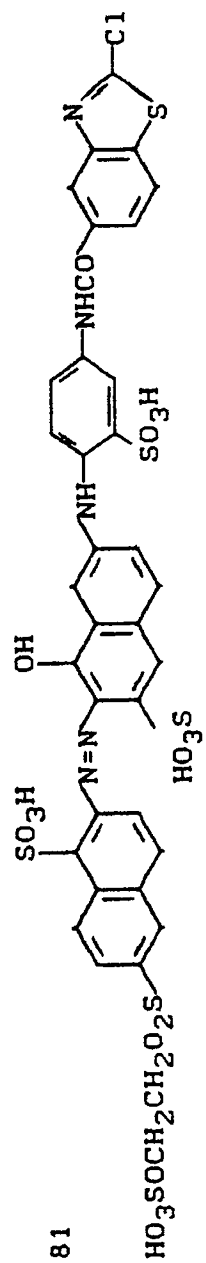 | braun |

Beispiel 82

0,2 Mol der Verbindung

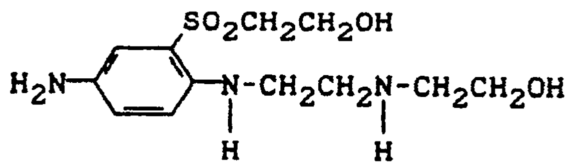

dargestellt durch Umsetzung von 1-Chlor-2-(β-hydroxyethylsulfonyl)-4-nitrobenzol mit dem Eisessigaddukt des Diamins der Formel

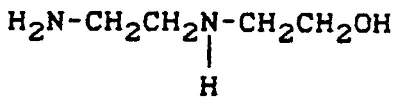

in Isopropanol und anschließender katalytischer Hydrierung mit Raney-Nickel und Wasserstoff, werden bei 80° C mit 0,1 Mol Chloranil in Isopropanol und Gegenwart von Natriumacetat kondensiert. Das dunkelbraune, ausgefallene Produkt der Formel

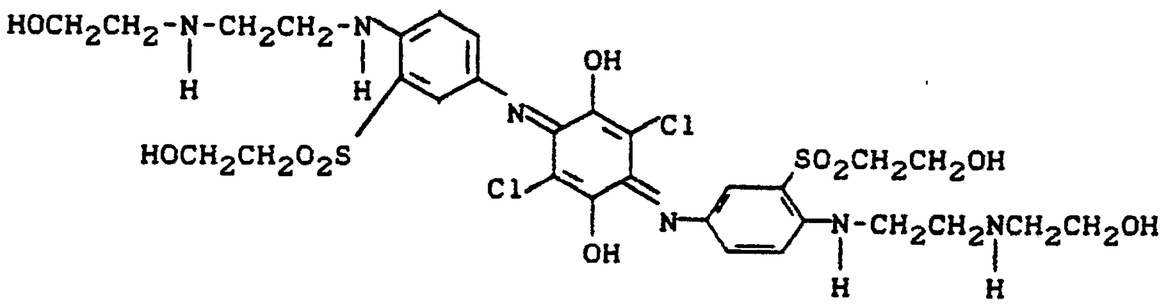

wird abgesaugt, getrocknet und in 250 ml 20 %iges Oleum eingetragen. Zu diesem Ansatz fügt man Kaliumperoxodisulfat hinzu und erwärmt stufenweise bis auf 40 bis 50° C. Anschließend wird auf Eis ausgetragen, die blaue Farbbase der Struktur

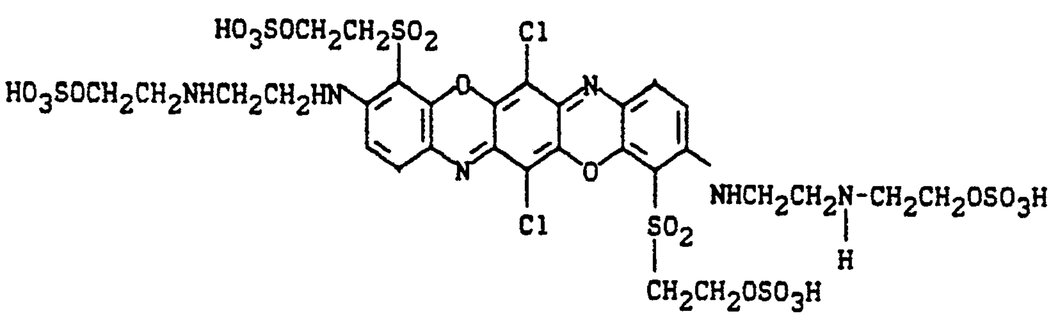

isoliert, in Wasser angeschlagen und mit 0,2 Mol 2,3-Dichlorchinoxalin-6-carbonsäurechlorid bei 40° C und pH 6,5 bis 7,5 kondensiert.

Der Farbstoff wird mit Natriumchlorid ausgesalzen, isoliert, getrocknet und gemahlen. Man erhält ein dunkles Farbstoffpulver, das den Farbstoff der Formel

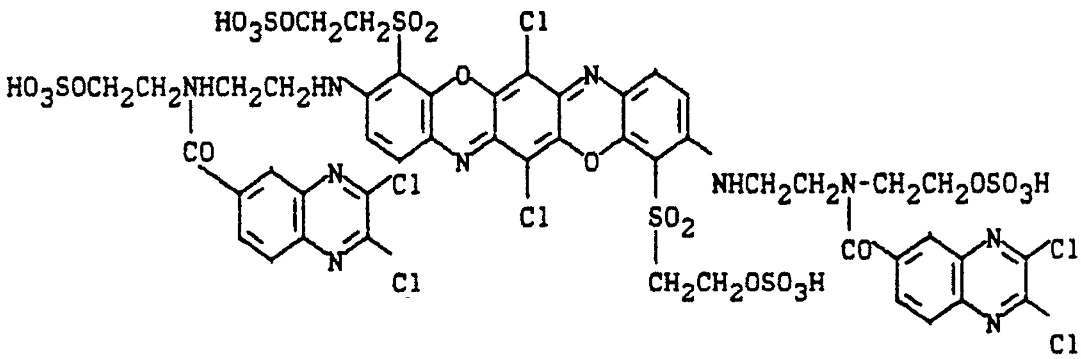

enthält und Baumwolle und Wolle nach den für Reaktivfarbstoffe üblichen Färbe- und Druckmethoden in blauen Tönen färbt.

Beispiel 83

52 g des Farbstoffes 1-Amino-4-(3'-amino-4'-β-hydroxyethylsulfonyl-phenylamino)-anthrachinon-2-sulfonsäure (hergestellt durch Kondensation von 1,3-Diaminobenzol-4-β-hydroxyethylsulfon und 1-Amino-4-brom-anthrachinon-2-sulfonsäure) werden als trockene, gemahlene Ware unter Rühren in 200 g Monohydrat eingetragen. Man läßt über Nacht bei Raumtemperatur rühren und gießt die Lösung dann unter Rühren auf eine Mischung von 500 g Eis und 150 g Kaliumchlorid.

Der ausgeschiedene Farbstoff wird dann abgesaugt, mit gesättigter Natriumchloridlösung gewaschen und in 300 Teilen Wasser unter Zugabe von Natriumbicarbonat neutral gelöst.

In die Lösung streut man 28 g 2,3-Dichlorchinoxalin-6-carbonsäurechlorid ein, erwärmt auf 40 bis 50 ° C und hält den pH durch Eintropfen von Sodalösung zwischen 5 und 6. Nach beendeter Kondensation wird geklärt und aus dem Filtrat der Farbstoff durch Aussalzen abgeschieden. Nach einem der für Reaktivfarbstoffe üblichen Applikationsverfahren erhält man auf Baumwolle ein klares Blau mit guten Allgemeinechtheiten.

Der Farbstoff entspricht der Formel

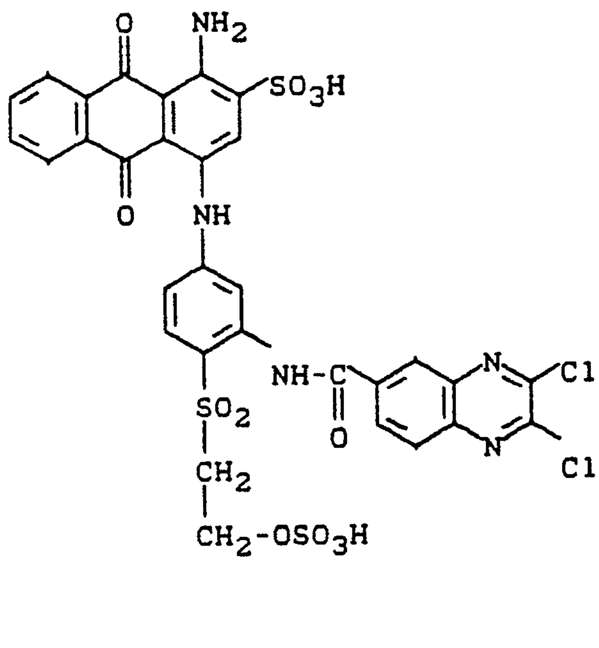

Beispiel 84

54 g des Farbstoffes 1-Amino-4-(2'-methyl-5'-amino-4'-β-hydroxyethylsulfonyl-phenylamino)-anthrachinon-2-sulfonsäure (hergestellt durch Kondensation von 1-Amino-4-brom-anthrachinon-2-sulfonsäure

und 2,4-Diaminotoluol-5-β-hydroxyethylsulfon) werden analog Beispiel 83 umgesetzt.

Es wird der Farbstoff der Formel

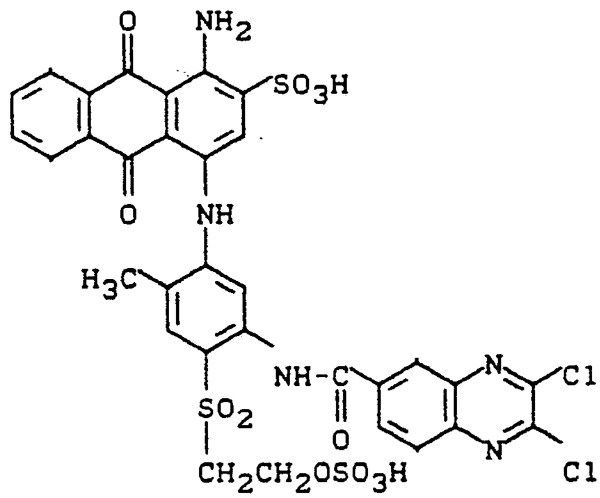

erhalten, der auf Wolle und Baumwolle ein echtes, klares Blau färbt.

Nach der Arbeitsweise von Beispiel 83 lassen sich folgende Farbstoffe herstellen.

Beispiel 85

Farbton auf Baumwolle

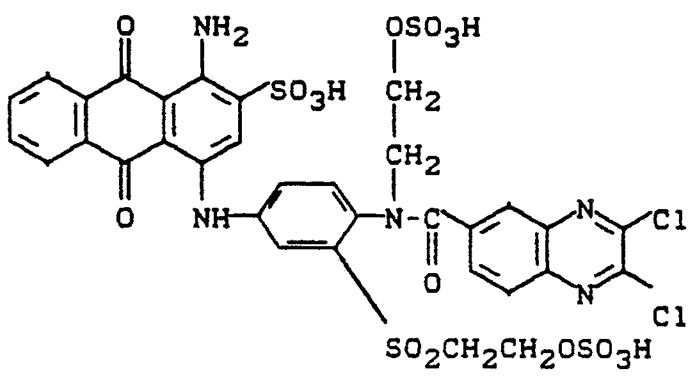

grünstichig blau

Beispiel 86

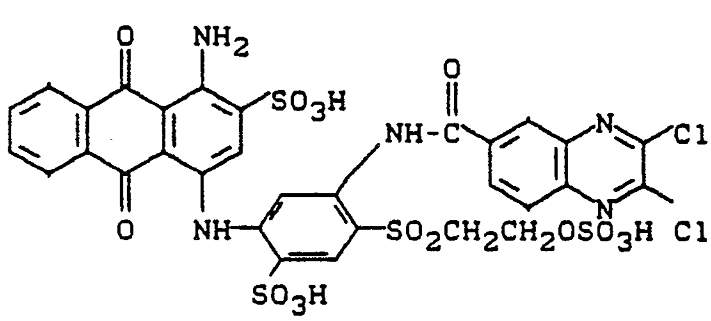

blau

Beispiel 87

127 g des Farbstoffes (3-Amino-4-sulfophenyl-aminosulfonyl)-(3-β-sulfatoethylsulfonyl-phenylamino-sulfonyl)-kupferphthalocyanin-disulfonsäure (hergestellt durch Mischkondensation von Kupferphthalocyanin-(3)-tetrasulfochlorid mit 1,3-Diaminobenzol-4-sulfonsäure und 3-β-Sulfatoethylsulfonyl-anilin in wäßriger Lösung in Gegenwart von Pyridin bei pH 6 bis 7,5) werden in Wasser unter Zusatz von Natriumbicarbonat neutral gelöst.

In diese Lösung streut man 28 g 2,3-Dichlorchinoxalin-6-carbonsäurechlorid ein, erwärmt auf 40 bis 45 °C und hält den pH durch Zutropfen von Sodalösung zwischen 6 und 6,5.

Nachdem die Kondensation beendet ist, wird geklärt und aus dem Filtrat der Farbstoff durch Zugabe von Kochsalz abgeschieden. Nach dem Absaugen, Trocknen und Mahlen erhält man ein blaues Farbstoffpulver, das sich leicht in Wasser mit türkisblauer Farbe löst.

Der Farbstoff entspricht der Formel

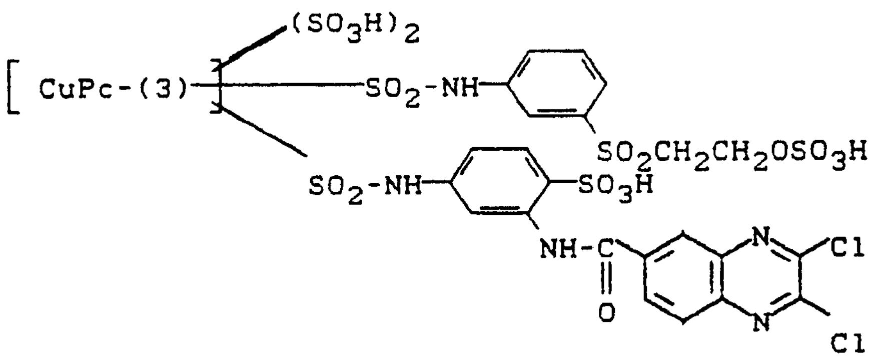

Es färbt Baumwolle in türkisblauer Nuance.

Analog zu der Arbeitsweise in Beispiel 87 lassen sich die nachfolgend aufgeführten Farbstoffe herstellen, die Baumwolle im angegebenen Farbton färben.

Beispiel 88

Farbton auf Baumwolle

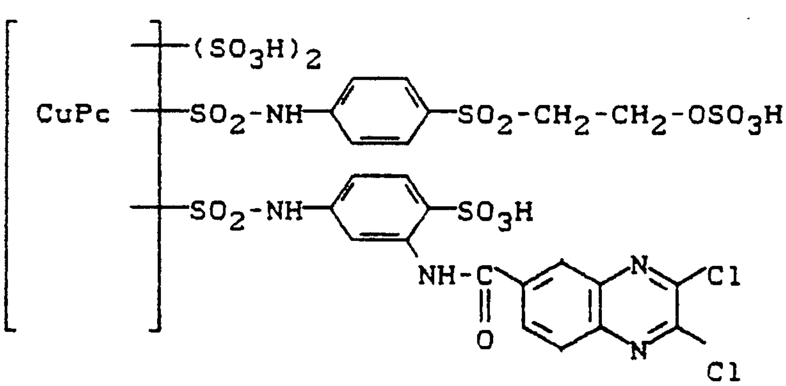

türkis

Beispiel 89

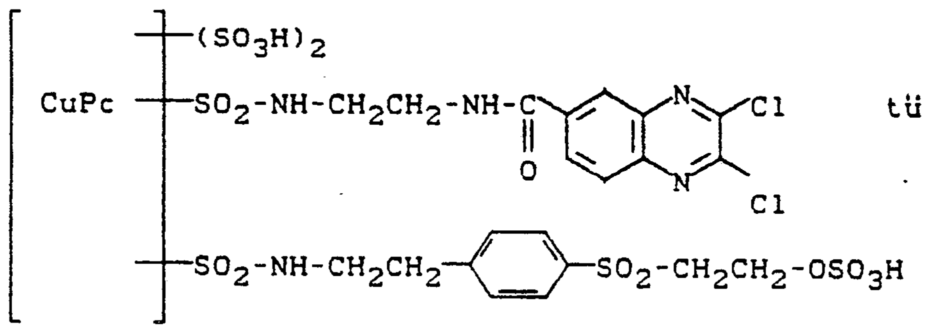

türkis

Beispiel 90

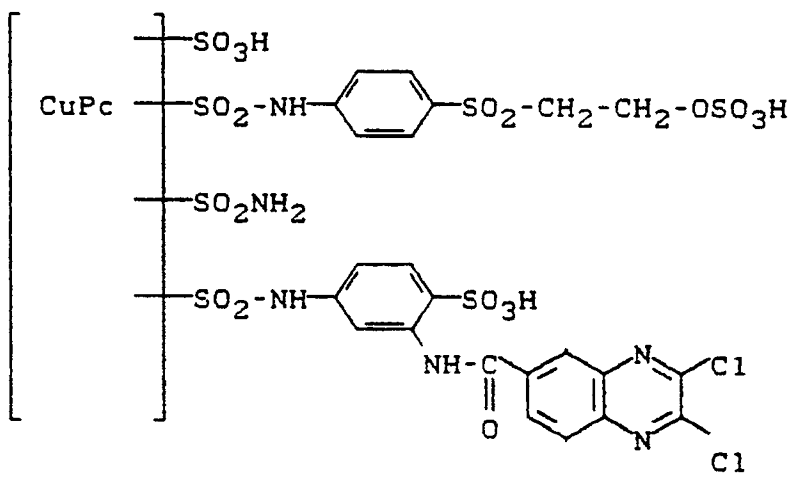

türkis

Beispiel 91

Farbton auf Baumwolle

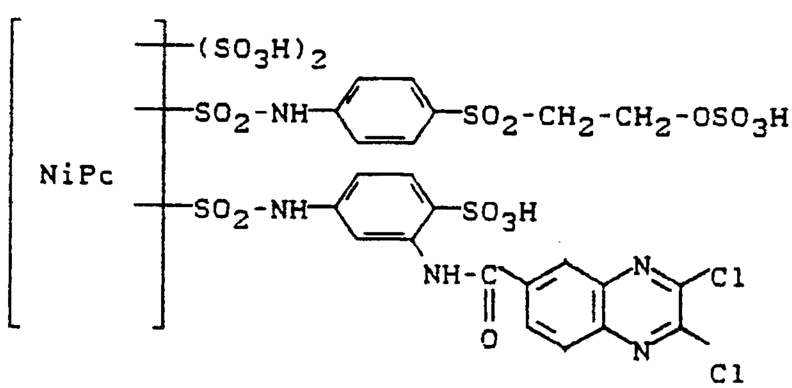

grün

Beispiel 92

135 g des Farbstoffes (3-Amino-4-β-sulfatoethylsulfonyl-phenylaminosulfonyl)-kupferphthalocyanin-trisul-

fonsäure werden neutral gelöst. Die Lösung wird auf 50 ° C erwärmt.

Man streut dann 28 g 2,3-Dichlorchinoxalin-6-carbonsäurechlorid ein und hält den pH durch Zugabe von Natriumbicarbonat bei 5,5 bei 6,0. Nach beendeter Kondensation wird die Farbstofflösung geklärt und aus dem Filtrat der Farbstoff durch Zugabe von Kochsalz ausgesalzen. Nach dem Absaugen, Trocknen und Mahlen erhält man ein blaues Farbstoffpulver, das sich mit türkisblauer Farbe in Wasser löst. Der Farbstoff entspricht der Formel

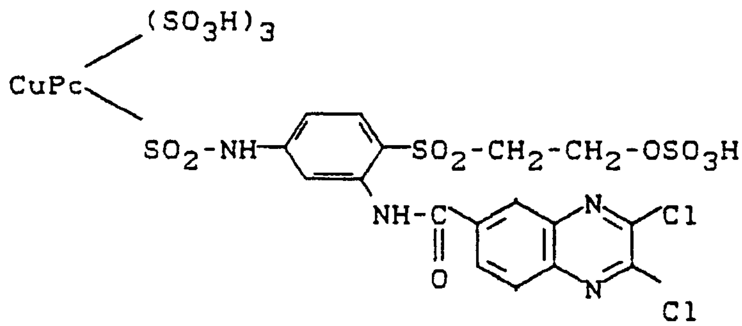

und färbt Baumwolle in echten, türkisblauen Farbtönen.

Die als Ausgangsprodukt verwendete Verbindung wird wie folgt hergestellt: Kupferphthalocyanintrisulfochloridmonosulfonsäure wird mit 1,3-Diaminobenzol-4-β-hydroxyethylsulfon in wäßriger Lösung bei pH 6 bis 7 kondensiert. Das Kondensationsprodukt wird durch Zugabe von Schwefelsäure abgeschieden, isoliert und getrocknet. Nach dem Mahlen wird die Substanz nach den üblichen Methoden in Schwefelsäure (Monohydrat) verestert. Die Mischung wird dann unter Rühren auf Eis gegeben, die ausgeschiedene Verbindung wird auf der Nutsche isoliert und unter Zusatz von Natriumbicarbonat neutral in Wasser gelöst.

Analog der geschilderten Arbeitsweise erhält man folgende Farbstoffe

Beispiel 93

Farbton auf Baumwolle

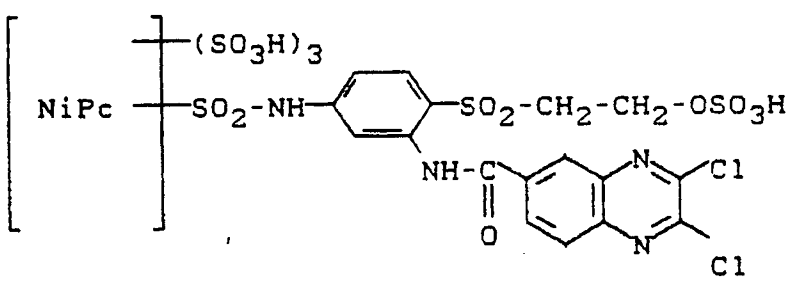

grün

Beispiel 94

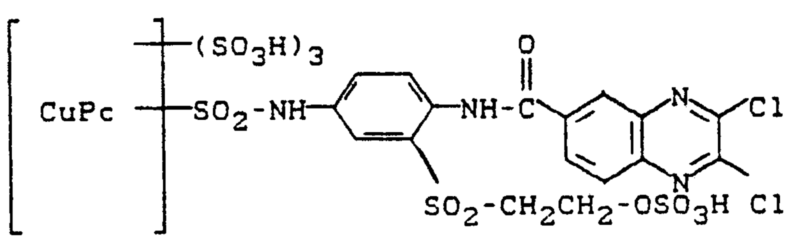

grünstichig türkis

Beispiel 95

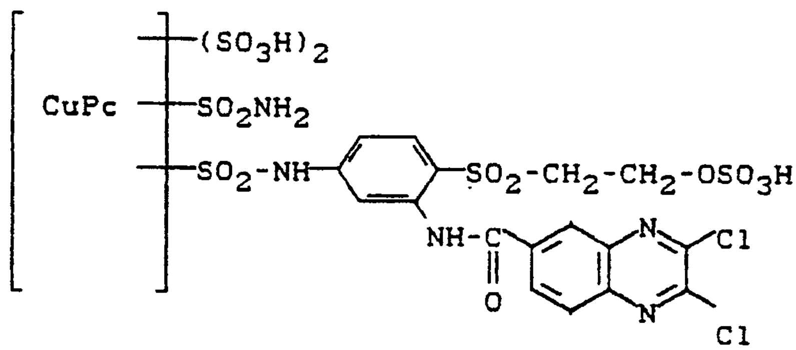

Beispiel 96

23,3 g 2-Carboxyphenylhydrazin-4-sulfonsäure und 21,3 g 4-Acetaminobenzaldehyd-2-sulfonsäure werden in wäßriger Lösung kondensiert und das erhaltene Hydrazon in Gegenwart von Soda und 25 g Kupfersulfat mit der Diazoniumverbindung von 22,7 g 2-Aminophenol-4-(β-hydroxyethyl)-sulfon gekuppelt. Nach beendeter Reaktion wird unter Zusatz von 15 g Soda so lange bei 100° C verseift, bis dünnschichtchromatographisch eine vollständige Verseifung der Acetylgruppe nachgewiesen werden kann. Der Farbstoff wird dann durch Zugabe von Natriumchlorid ausgeschieden, isoliert und getrocknet. Nach dem Mahlen wird das Farbstoffpulver unter Rühren in Pyridin eingetragen.

Man erwärmt auf 80° C und gibt die gleiche Menge an Amidosulfonsäure wie an Farbstoffpulver hinzu. Die Temperatur steigt hierbei bis auf 105° C an. Bei 100 bis 105° C wird noch 1/2 Stunde nachgerührt. Dann wird Pyridin durch Abdestillieren und Trocknen im Vakuum entfernt, der Rückstand in Wasser gelöst und mit 26,2 g 2,3-Dichlorchinoxalin-6-carbonsäurechlorid bei 40° C und pH 6 bis 6,5 kondensiert. Nach beendeter Reaktion wird der Farbstoff mit Natriumchlorid abgeschieden, isoliert und getrocknet. Nach dem Mahlen erhält man ein Farbstoffpulver, das das Natriumsalz der Verbindung der Formel

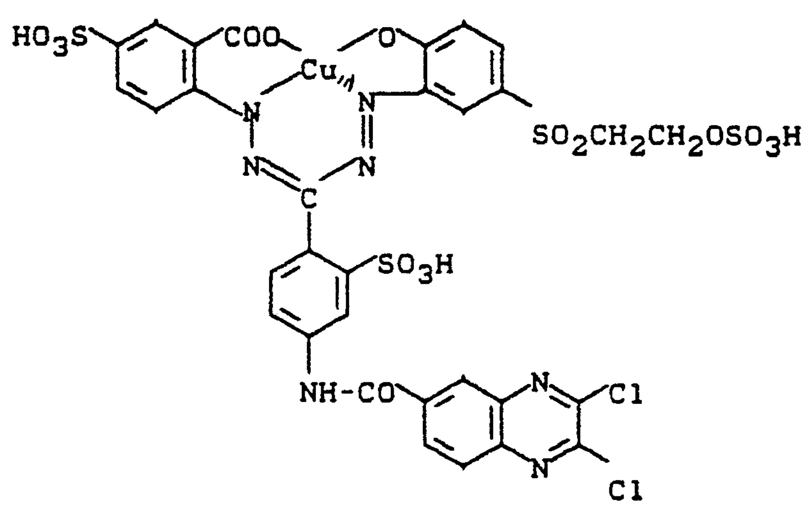

enthält und Baumwolle mit blauer Nuance färbt.

Weitere erfindungsgemäße blaue Reaktivfarbstoffe erhält man, wenn man wie in Beispiel 96 beschrieben, die folgenden Phenylhydrazine und aromatischen Aldehyde zu Hydrazonen umsetzt, mit den ebenfalls nachfolgend angegebenen Diazokomponenten in Gegenwart von $CuSO_4$ kuppelt und die entstandenen Farbstoffe analog Beispiel 96 verseift, sulfatiert und mit 2,3-Dichlorchinoxalin-6-carbonsäurechlorid acyliert.

| Phenylhydrazin | Aldehyd | Diazokomponenten |
|---|---|---|
| 2-Carboxy-5-(β-hydroxyethylsulfonyl)phenylhydrazin | Benzaldehyd | 3-Acetylamino-4-hydroxy-5-aminobenzolsulfonsäure |
| 2-Carboxy-4-acetylamino-phenylhydrazin | " | 4-β-Hydroxyethylsulfonyl-2-aminophenol-6-sulfonsäure |

## Ansprüche

1. Metallfreie Farbstoffe der Formel

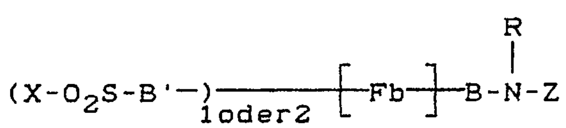

(1)

und deren Metallkomplexe
sowie metallfreie Farbstoffe der Formel

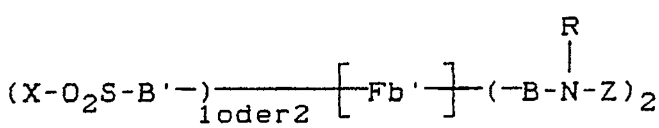

(2)

und deren Metallkomplexe
worin

Fb' = Rest eines Farbstoffes der Monoazo-, Anthrachinon-, Phthalocyanin-, Formazan-, Azomethin-, Dioxazin-, Phenazin-, Xanthen-, Thioxanthon-, Naphthochinon-, Stilben- oder Triphenylmethanreihe,

Fb = Rest eines Farbstoffes der Mono- oder Polyazo-, Anthrachinon-, Phthalocyanin-, Formazan-, Azomethin-, Dioxazin-, Phenazin-, Xanthen-, Thioxanthon-, Naphthochinon-, Stilben oder Triphenylmethanreihe,

wobei die Reste Fb' und Fb eine oder mehrere Sulfonsäuregruppen enthalten,

B bzw. B' = direkte Bindung oder Brückenglied an ein Ring C-Atom eines aromatisch-carbocyclischen oder an ein Ring C- oder N-Atom eines aromatisch-heterocyclischen Ringes in Fb bzw. Fb'.

X = $CH=CH_2$ oder $CH_2CH_2$-Y, worin

Y = alkalisch eliminierbarer Rest, z.B. $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+A^-$ oder

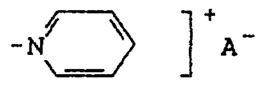 , 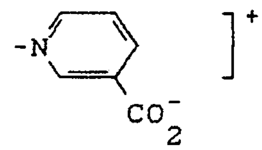

(A = Halogenid oder Sulfat)

R = H oder $C_1$-$C_4$-Alkyl, das gegebenenfalls substituiert sein kann durch Halogen, Hydroxy, Cyan, $C_1$-$C_4$-Alkoxy, Carboxy, Sulfo oder Sulfato,

Z = faserreaktiver Rest der Formel

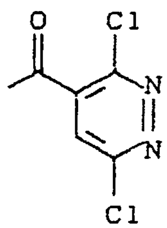 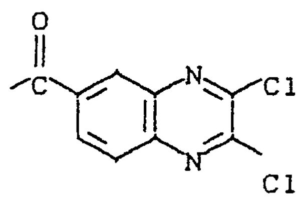 , 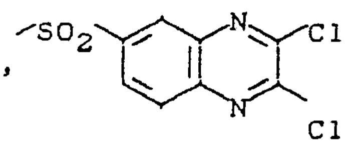 ,

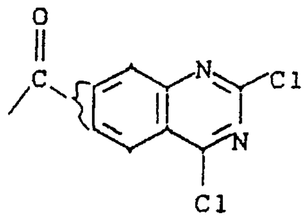 , 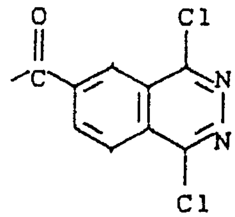 , 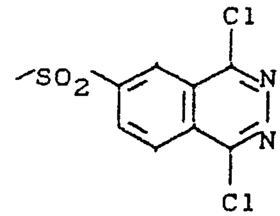 ,

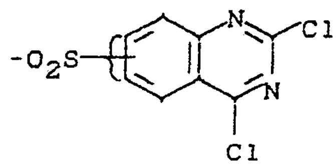 , 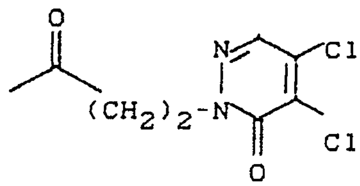 , 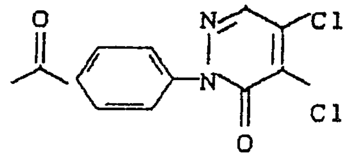 ,

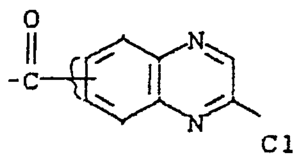 , 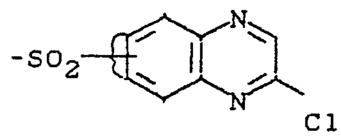 ,

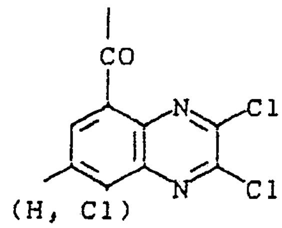 , 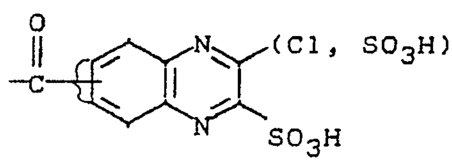 ,

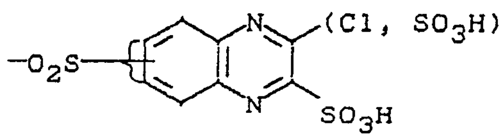 , 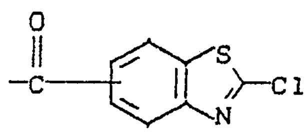 oder

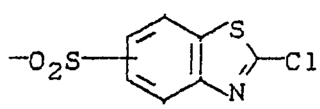

mit Ausnahme der Farbstoffe der Tab. 2, Beispiele 3 und 4 der bekanntgemachten japanischen Anmeldung 45-10 789 folgender Formeln

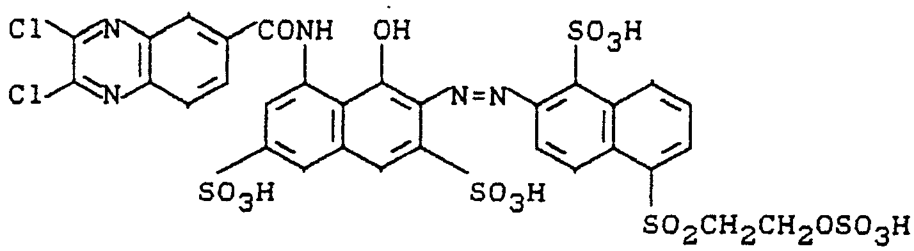

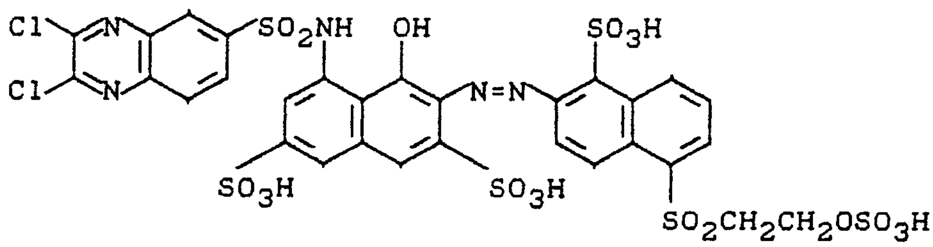

und von Beispiel 25 der EP-A- 0 197 418 folgender Formel

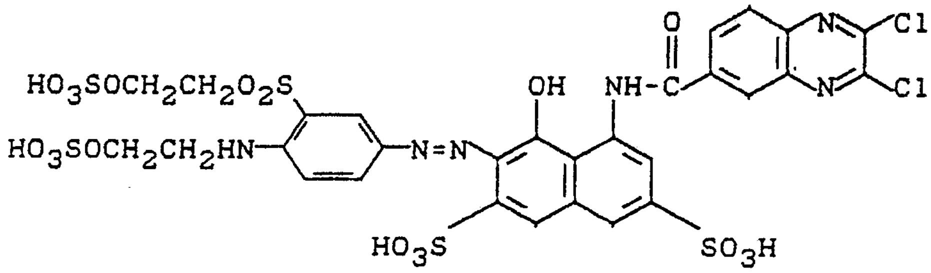

**2.** Farbstoffe des Anspruchs 1 mit den Formeln (3) bis (34)

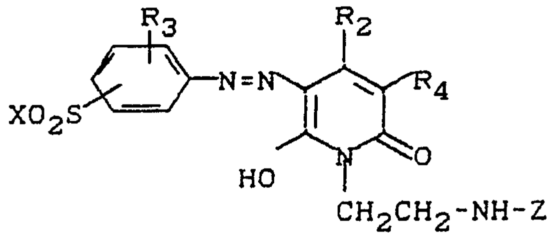

(3)

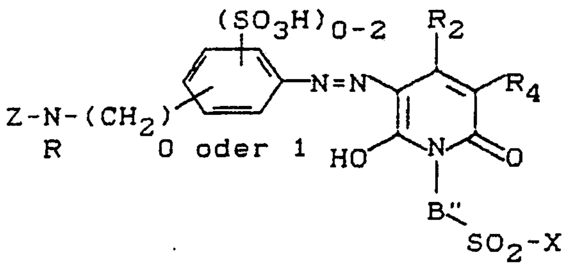

(3a)

B'' = $-(CH_2)_{2-3}-$ , 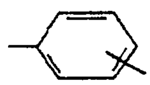

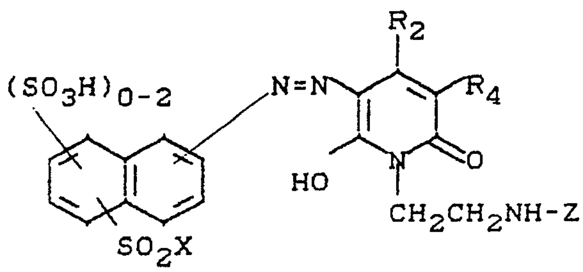

(4)

worin

$R_2$ = H, $C_1$-$C_4$-Alkyl, insbesondere $CH_3$ und $CH_2SO_3H$, COOH,

$R_3$ = H, $C_1$-$C_4$-Alkyl, $C_1$-$C_4$-Alkoxy, Cl, Br, COOH, $SO_3H$

$R_4$ = H, $SO_3H$, $CH_2SO_3H$, Cl, $C_1$-$C_4$-Alkylsulfonyl, Carbonamid, insbesondere $CONH_2$ sowie Carbonsäuremono- und -di-$C_1$-$C_4$-alkylamid.

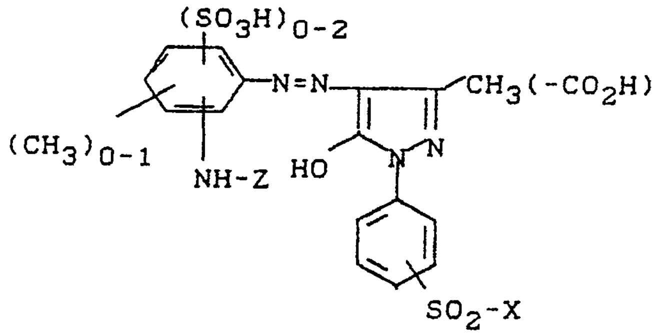

(5)

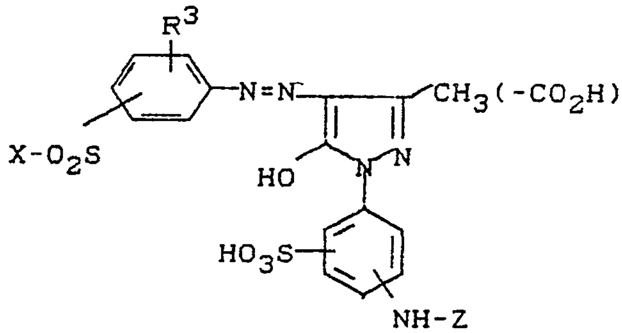

(6)

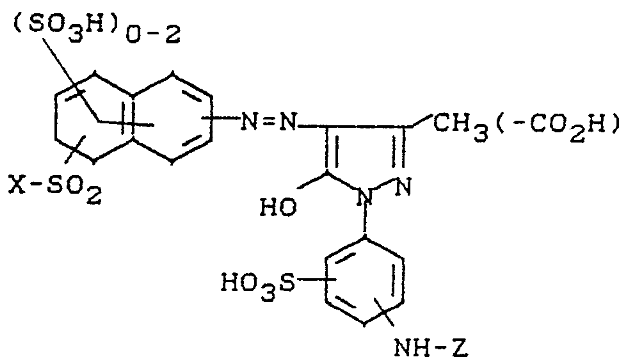

(7)

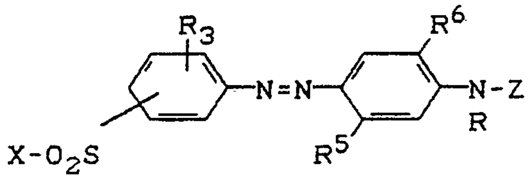

(8)

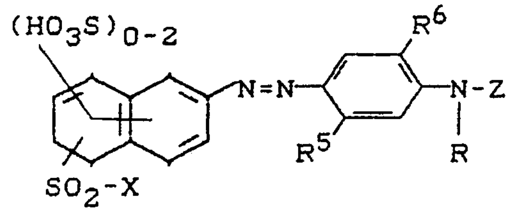

(9)

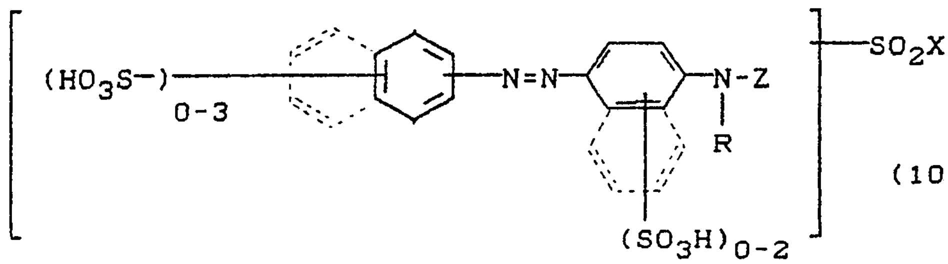

(10)

worin

$R^5$ = H, $C_1$-$C_4$-Alkyl, $C_1$-$C_4$-Alkoxy, Acylamino, insbesondere $C_1$-$C_4$-Alkylcarbonylamino oder Arylcarbonylamino, $C_1$-$C_4$-Alkylsulfonylamino Cl, Br, Aminocarbonylamino, $C_1$-$C_4$-Alkylsulfonylamino, Arylsulfonylamino,

$R^6$ = H, $C_1$-$C_4$-Alkyl, $C_1$-$C_4$-Alkoxy, OH, $SO_3H$

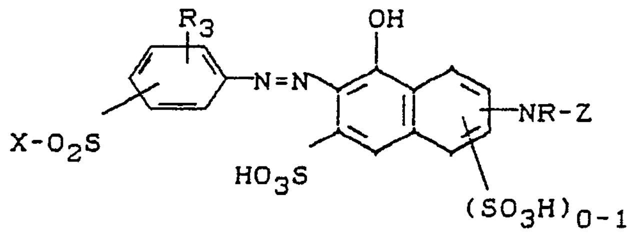

(11)

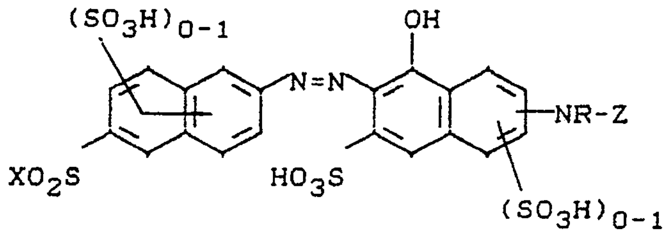

(12a)

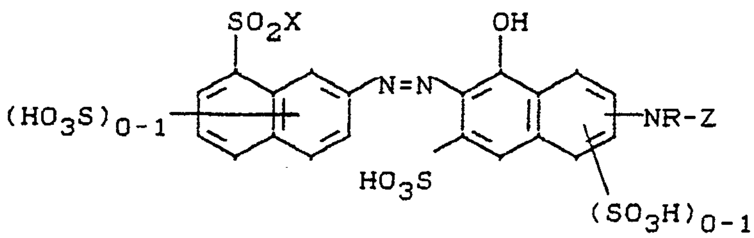

(12b)

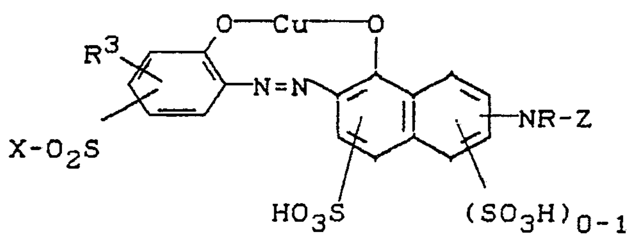

(13)

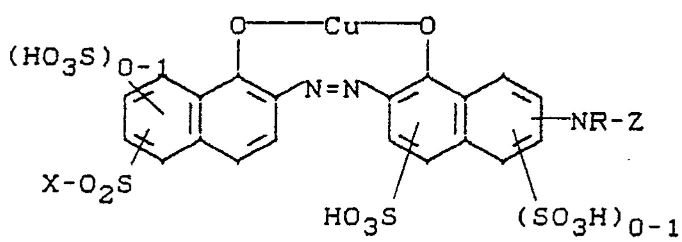

(14)

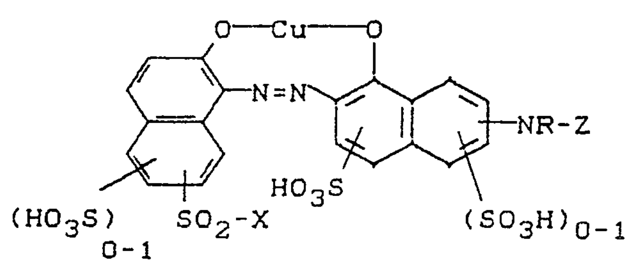

(15)

1:2-Metallkomplexe in Farbstoffen

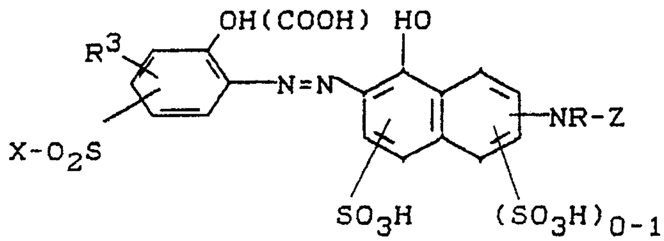

(16)

insbesondere die Cr- und Co-Komplexe, die zwei Farbstoffe (16) oder einen Farbstoff (16) und einen beliebigen anderen metallkomplexbildenden Farbstoff, insbesondere einen Azo- oder Azomethinfarbstoff enthalten.

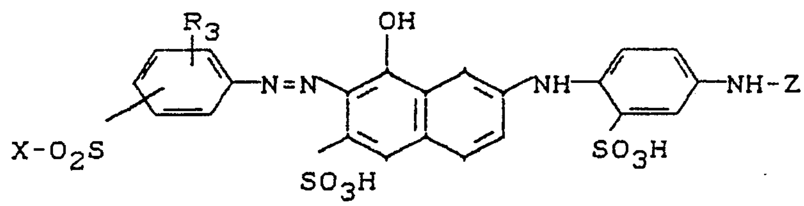

(17)

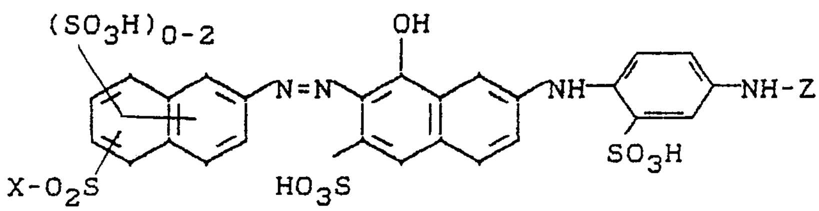

(18)

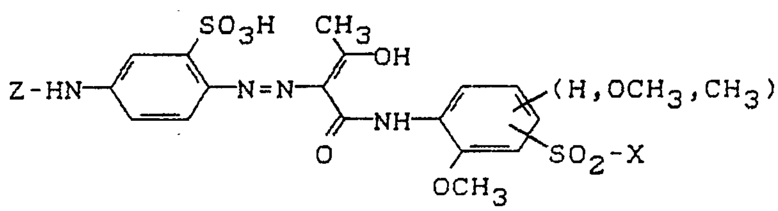

(19)

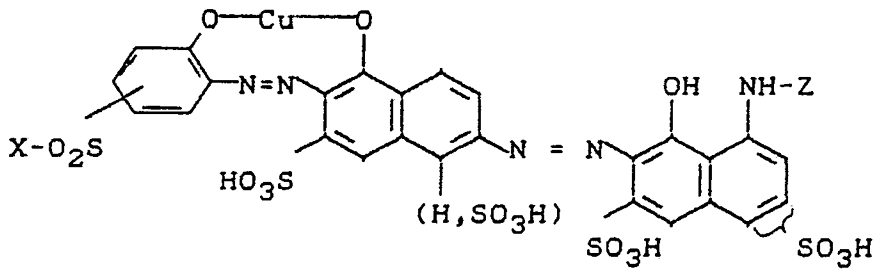

(20)

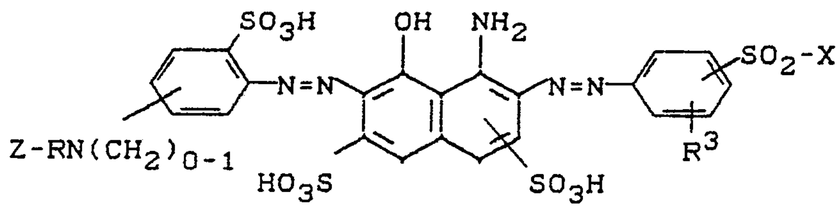

(21)

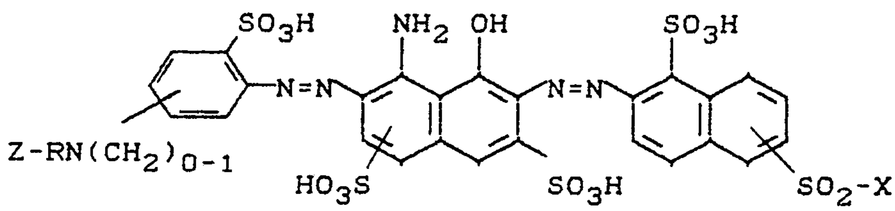

(22)

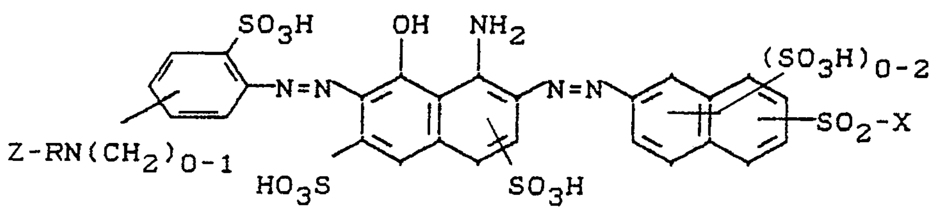

(23)

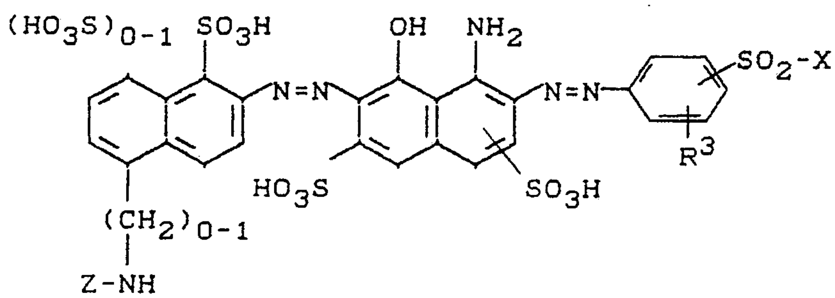

(24)

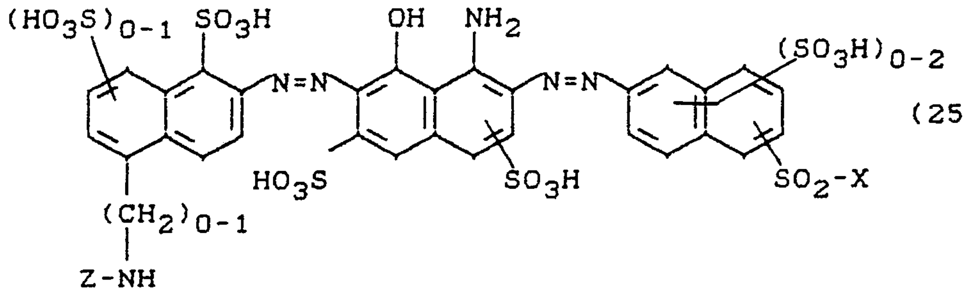
(25)

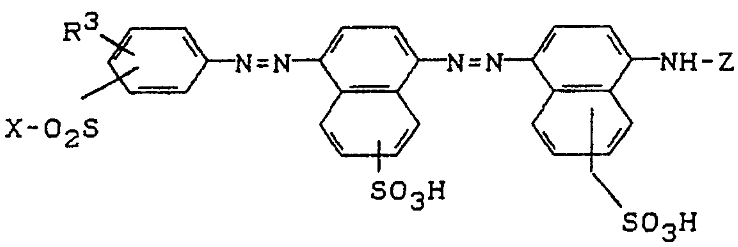
(26)

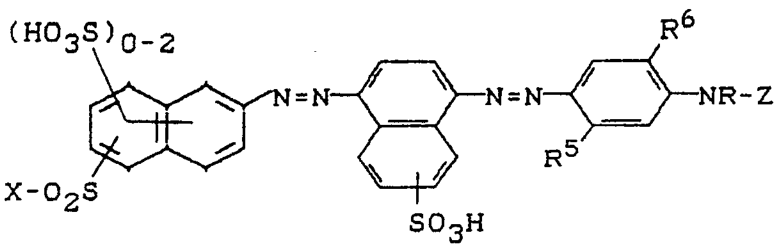
(27)

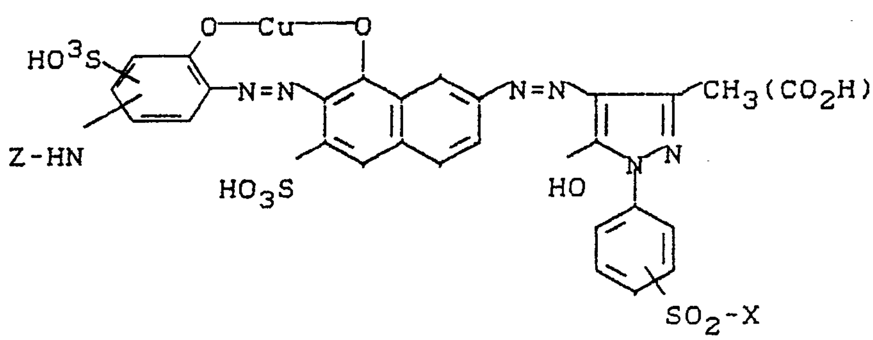
(28)

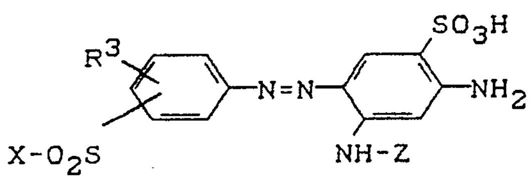
(29)

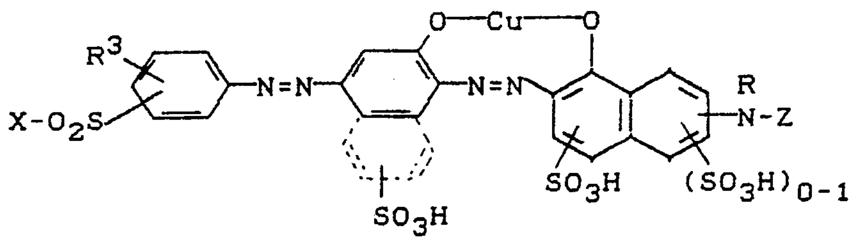

(30)

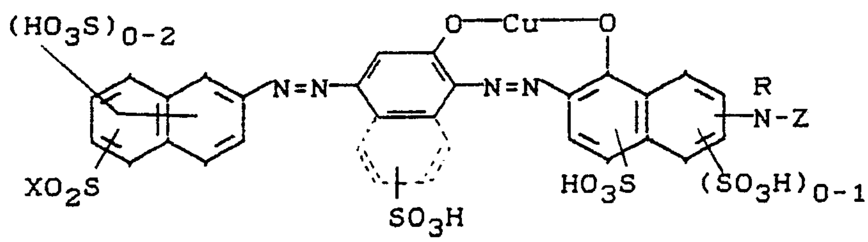

(31)

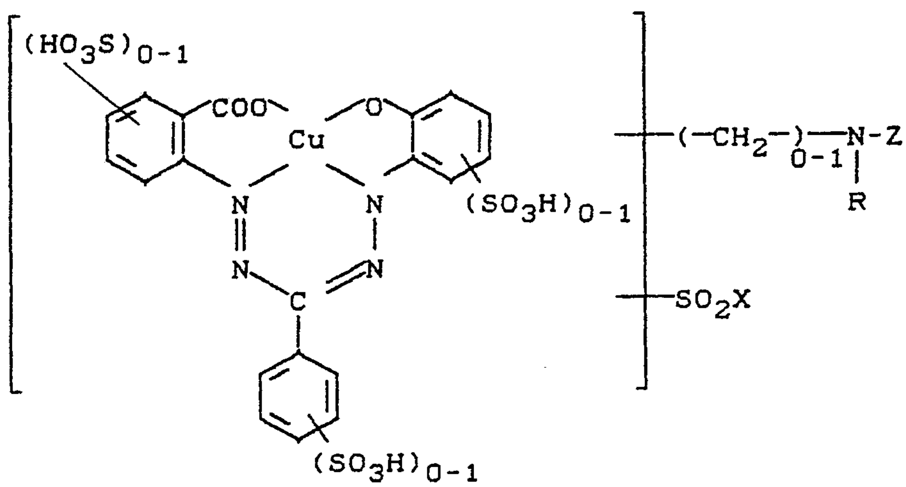

(32)

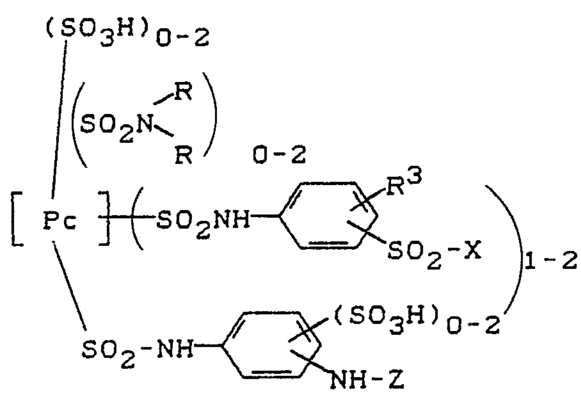

(33)

worin Pc für einen Cu- oder Ni-Phthalocyaninrest steht und die Gesamtzahl der Substituenten am Pc-Gerüst maximal 4 beträgt.

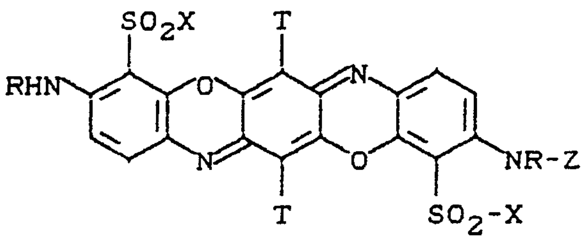

(34)

wobei T = Cl, Br, $OCH_3$

**3.** Farbstoffe des Anspruchs 2 der Formeln (36) bis (58a)

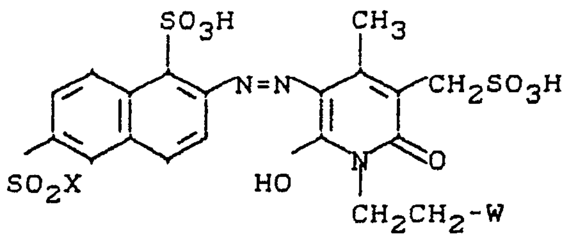

(36)

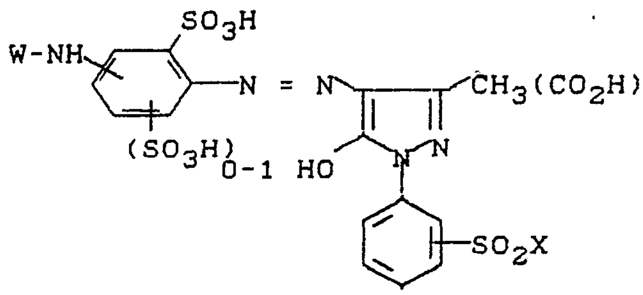

(37)

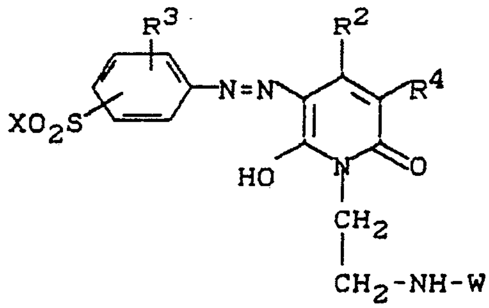

(38)

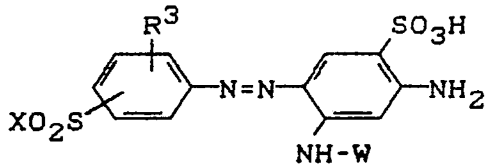

(39)

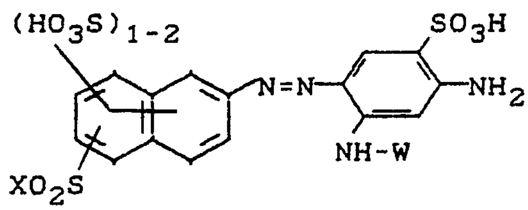

(40)

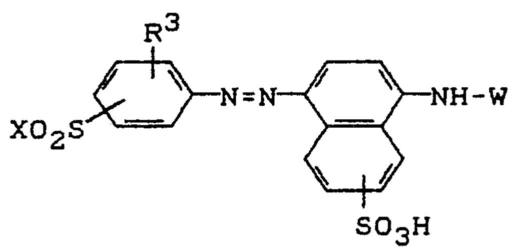

(41)

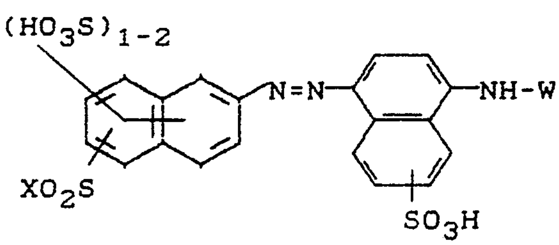

(42)

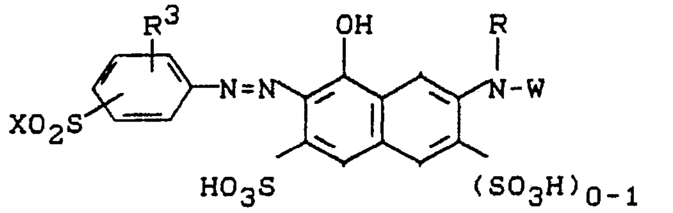

(43)

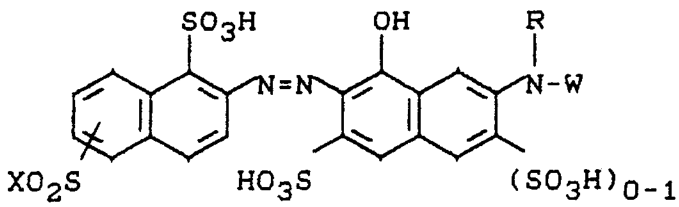

(44)

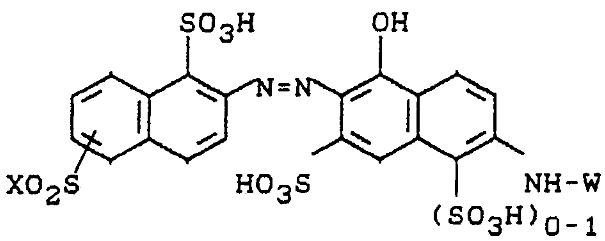

(45)

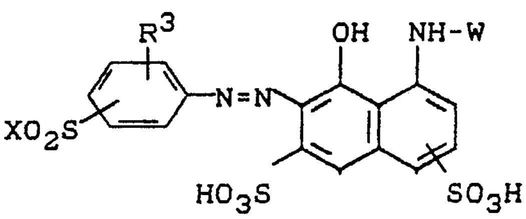

(46)

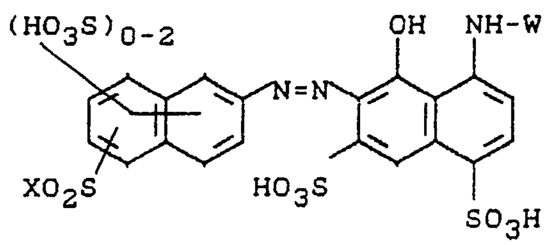

(47)

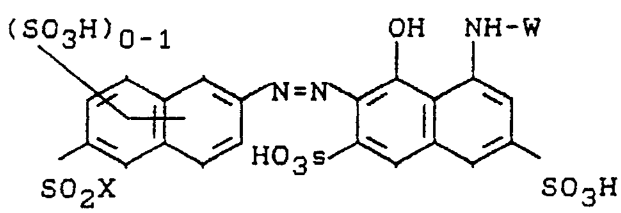

(47a)

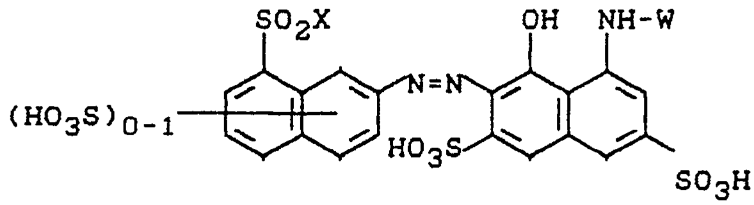

(47b)

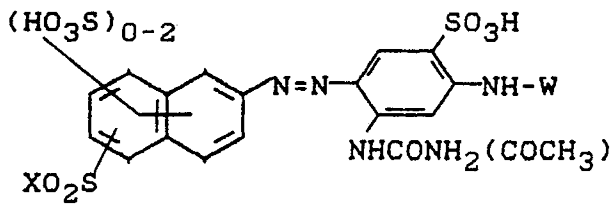

(48)

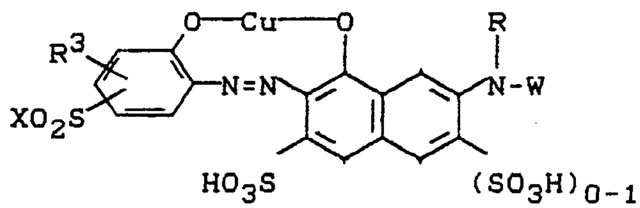

(49)

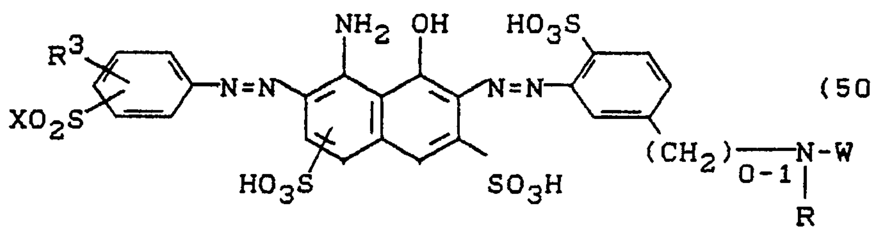

(50)

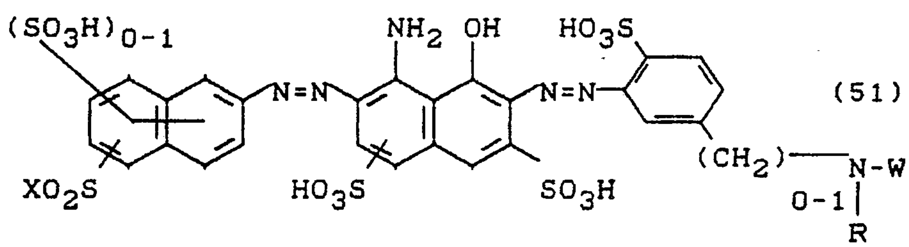

(51)

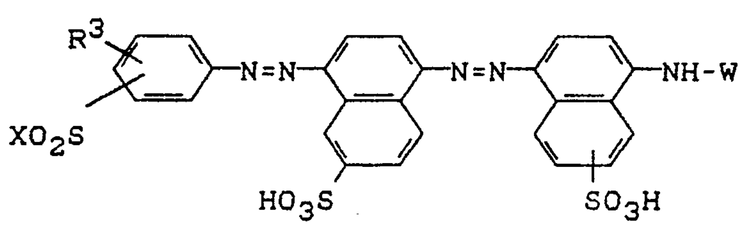

(52)

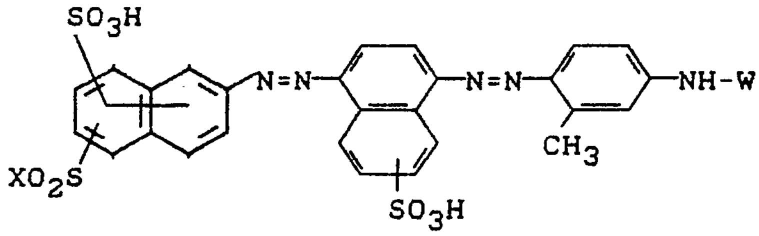

(53)

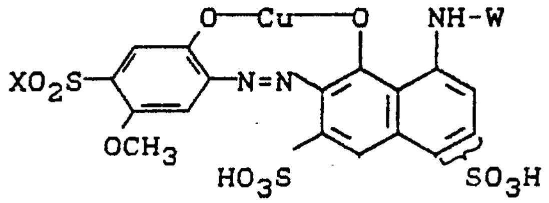

(54)

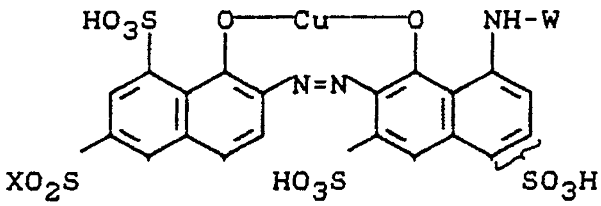

(55)

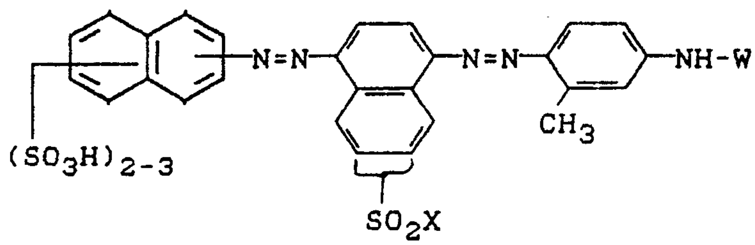

(56)

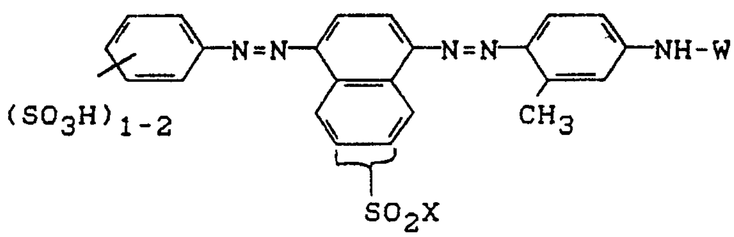

(57)

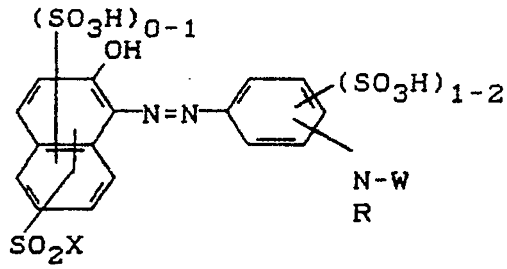

(58)

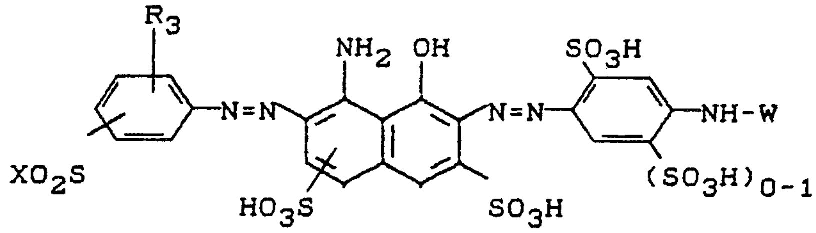

(58a)

mit X = $-CH_2CH_2OSO_3H$ und

W =

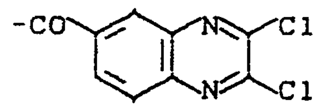

**4.** Farbstoffe der Ansprüche 1 und 2 der Formeln (59) bis (63)04

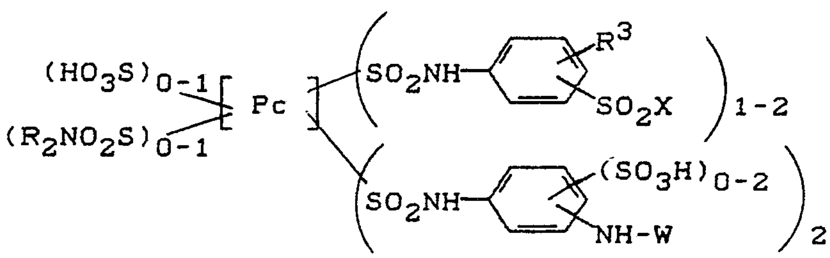

(59)

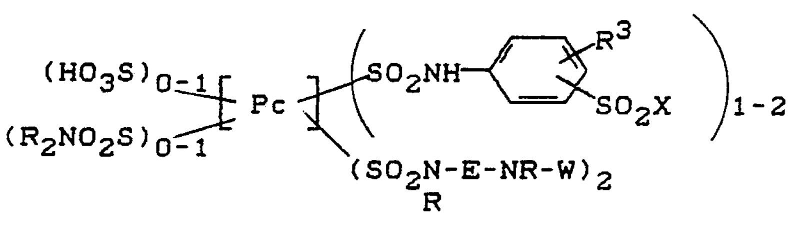

(59a)

worin Pc für einen Cu- oder Ni-Phthalocyaninrest steht und die Gesamtzahl der Substituenten am Pc-Gerüst maximal 4 beträgt; E = aliphatisches Brückenglied, insbesondere $C_2$-$C_4$-Alkylen,

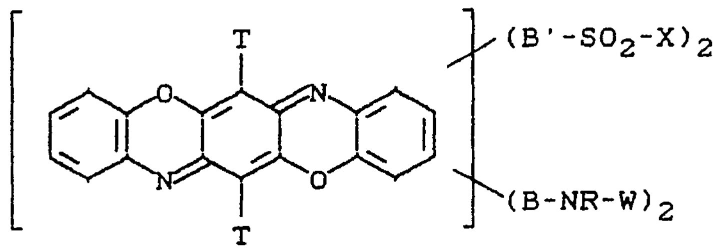

(60)

vorzugsweise

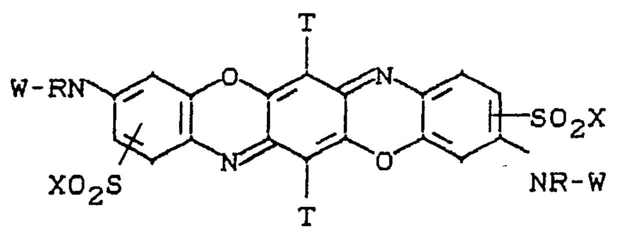

(61)

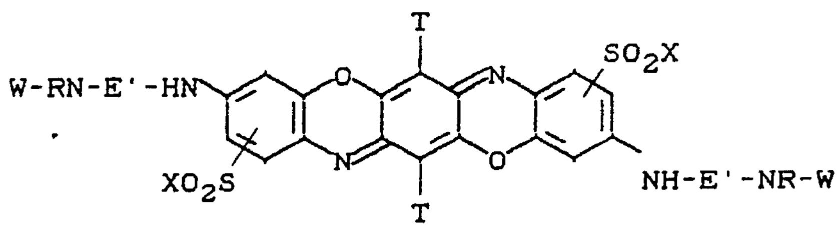

(62)

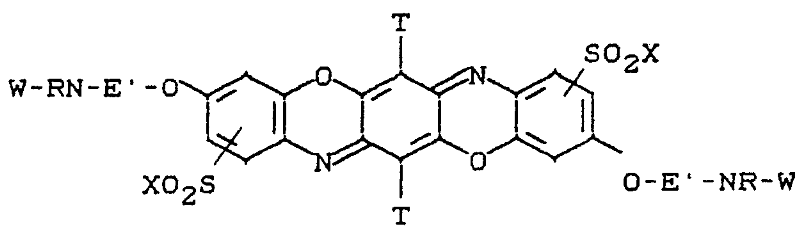

(63)

wobei E' = aliphatisches oder aromatisches Brückenglied, insbesondere $C_2$-$C_4$-Alkylen oder Phenylen.

5. Verwendung der Farbstoffe der Ansprüche 1-4 zum Färben und Bedrucken von natürlichen und synthetischen OH- oder amidgruppenhaltigen Materialien.

6. Mit den Farbstoffen der Ansprüche 1-4 gefärbte oder bedruckte OH- oder amidgruppenhaltige Materialien.

## Claims

1. Metal-free dyestuffs of the formula

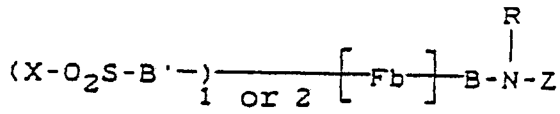

(1)

and metal complexes thereof
and metal -free dyestuffs of the formula

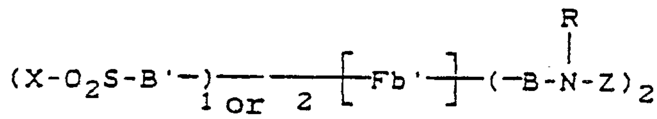

(2)

and metal complexes thereof,
in which

Fb' = the radical of a dyestuff from the monoazo, anthraquinone, phthalocyanine, formazan, azomethine, dioxazine, phenazine, xanthene, thioxanthone, naphthoquinone, stilbene or triphenylmethane series,

Fb = the radical of a dyestuff from the monoazo, polyazo, anthraquinone, phthalocyanine, formazan, azomethine, dioxazine, phenazine, xanthene, thioxanthone, naphthoquinone, stilbene or triphenylmethane series,

where the radicals Fb' and Fb contain one or more sulpho group,

B or B' = a direct bond or a bridging member to a ring C atom of an aromatic carbocyclic ring in Fb or Fb' respectively or to a ring C or N atom of an aromatic heterocyclic ring in Fb or Fb' respectively,

X = $CH=CH_2$ or $CH_2CH_2$-Y,

in which

Y = a radical which can be eliminated using alkali, for example $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+A^-$ or

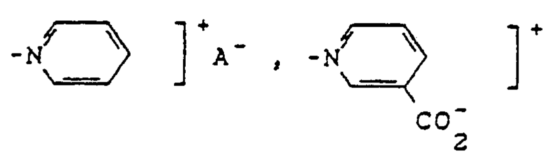

(A = halide or sulphate)

R = H or $C_1$-$C_4$-alkyl which may optionally be substituted by halogen, hydroxyl, cyano, $C_1$-$C_4$-alkoxy, carboxyl, sulpho or sulphato,

Z = a fibre-reactive radical of the formula

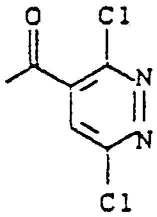 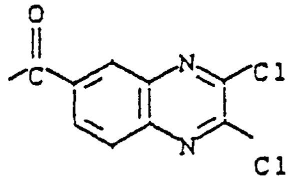 , 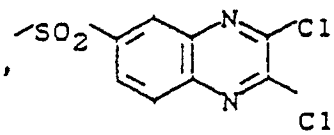 ,

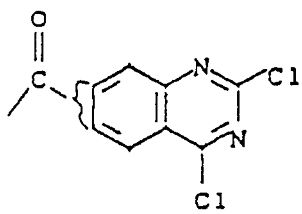 , 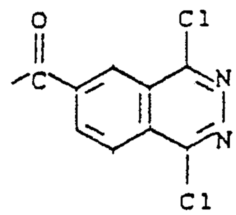 , 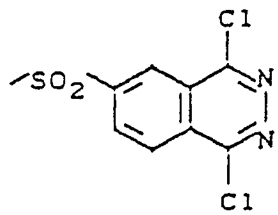 ,

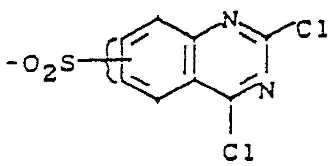 , 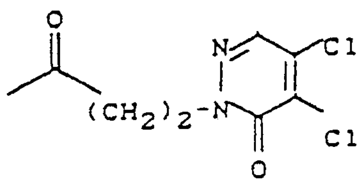 , 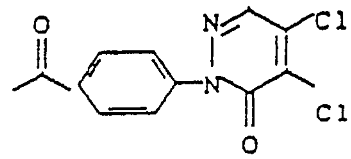 ,

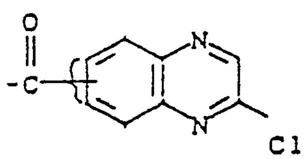 , 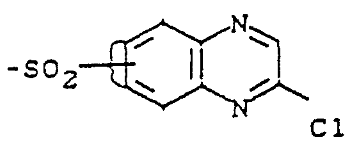 ,

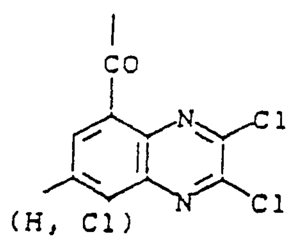 , 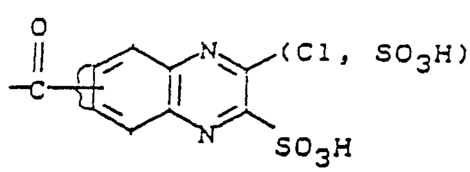 ,

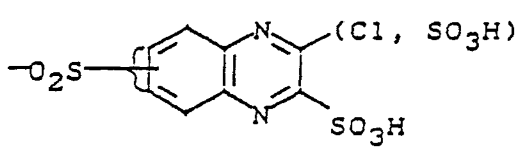 , 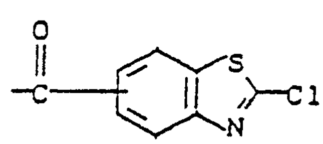 or

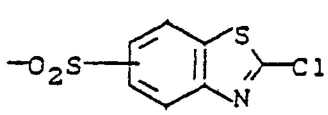

with the exception of dyestuffs of Table 2, Examples 3 and 4, of the published Japanese Application 45-10,789 of the following formulae

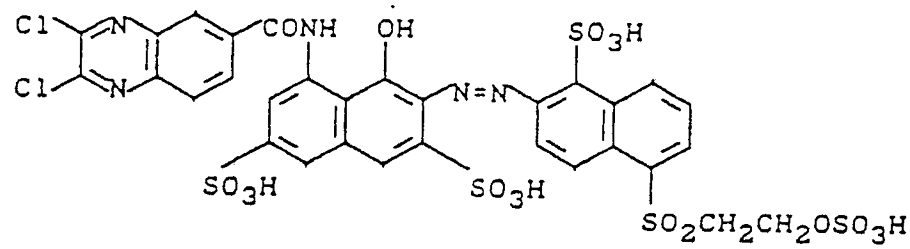

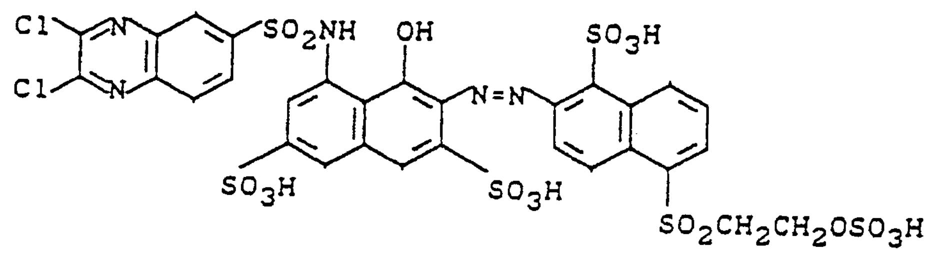

and of Example 25 of EP-A-0,197,418 of the following formula

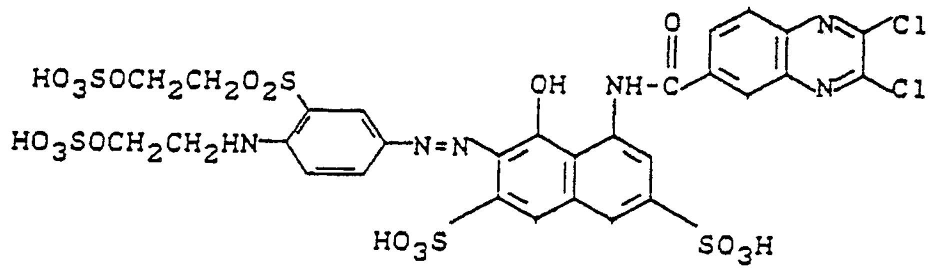

2. Dyestuffs of Claim 1 having the formulae (3) to (34)

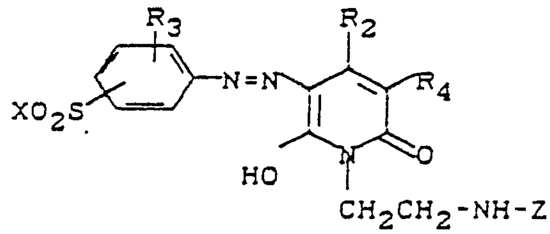

(3)

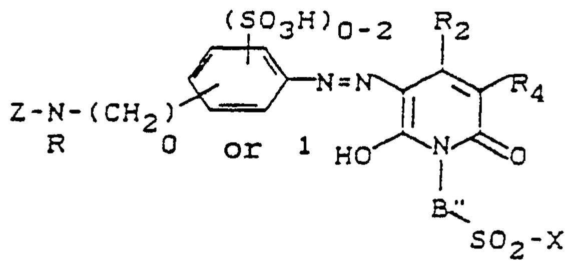

(3a)

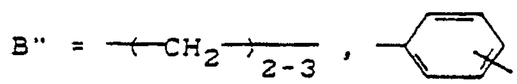

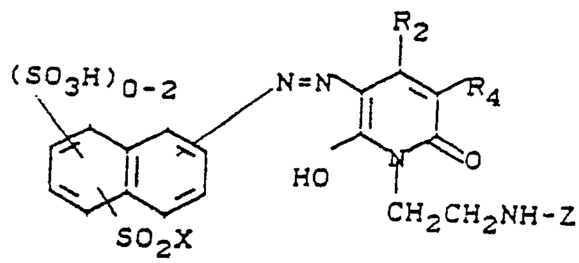

(4)

in which

$R_2$ = H, $C_1$-$C_4$-alkyl, in particular $CH_3$, $CH_2SO_3H$ or COOH,

$R_3$ = H, $C_1$-$C_4$-alkyl, $C_1$-$C_4$-alkoxy, Cl, Br, COOH or $SO_3H$,

$R_4$ = H, $SO_3H$, $CH_2SO_3H$, Cl, $C_1$-$C_4$-alkylsulphonyl, or carboxamide, in particular $CONH_2$ or mono- or di-$C_1$-$C_4$-alkylcarboxamide,

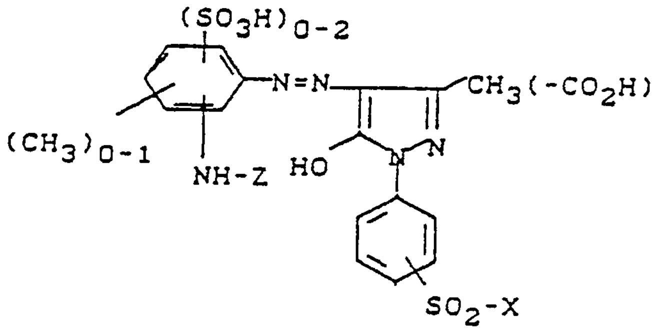

(5)

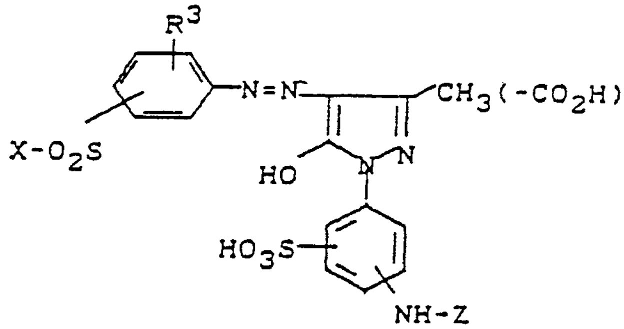

(6)

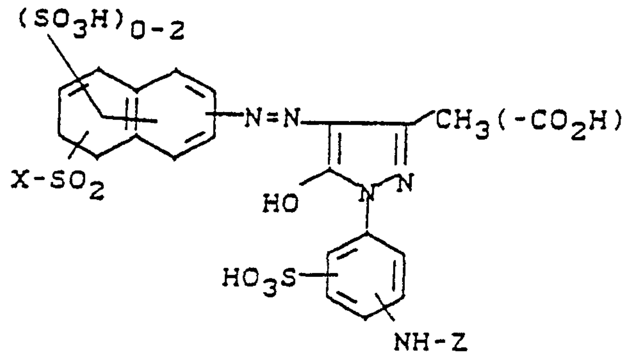

(7)

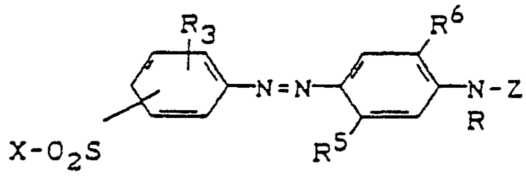

(8)

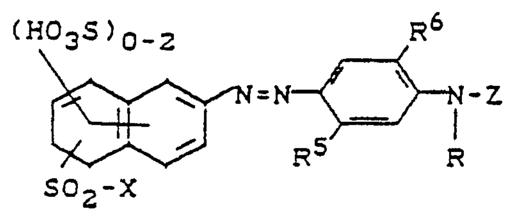

(9)

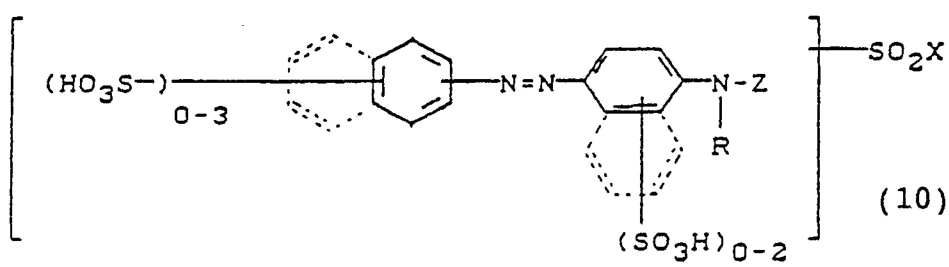

(10)

in which

$R^5$ = H, $C_1$-$C_4$-alkyl, $C_1$-$C_4$-alkoxy, acylamino, in particular $C_1$-$C_4$-alkylcarbonylamino or arylcarbonylamino, $C_1$-$C_4$-alkylsulphonylamino, Cl, Br, aminocarbonylamino, $C_1$-$C_4$-alkylsulphonylamino or arylsulphonylamino,

$R^6$ = H, $C_1$-$C_4$-alkyl, $C_1$-$C_4$-alkoxy, OH or $SO_3H$,

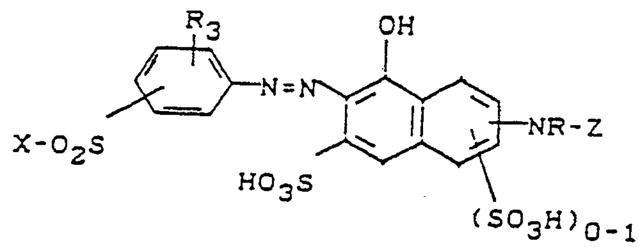

(11)

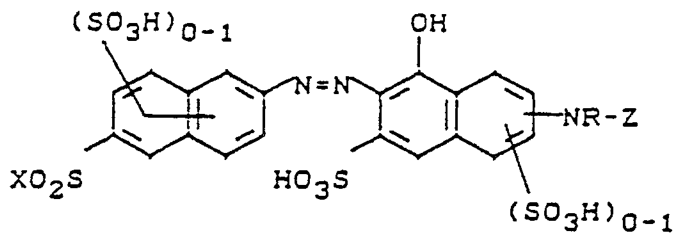

(12a)

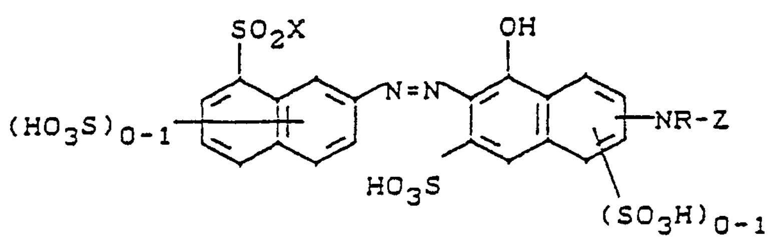

(12b)

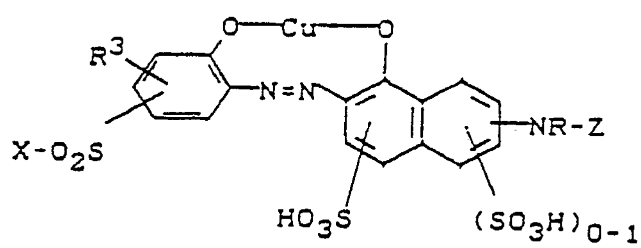

(13)

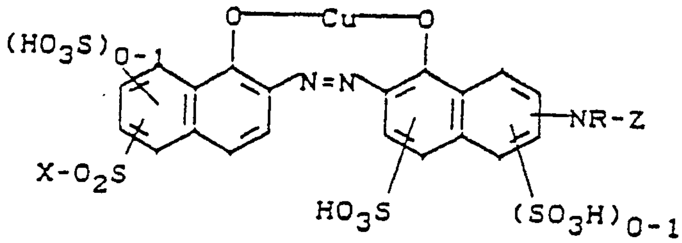

(14)

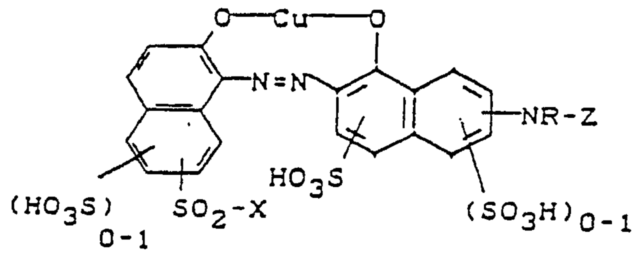

(15)

1:2 metal complexes of dyestuffs

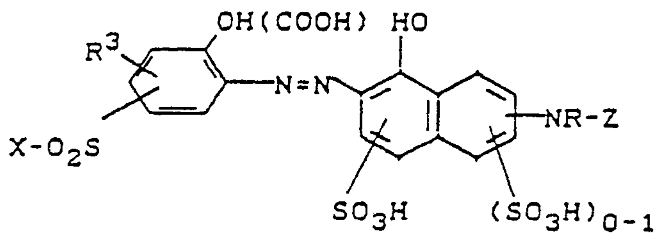

(16)

in particular the Cr and Co complexes, which contain two dyestuffs (16) or one dyestuff (16) and any one other metal complex-forming dyestuff, in particular an azo or azomethine dyestuff,

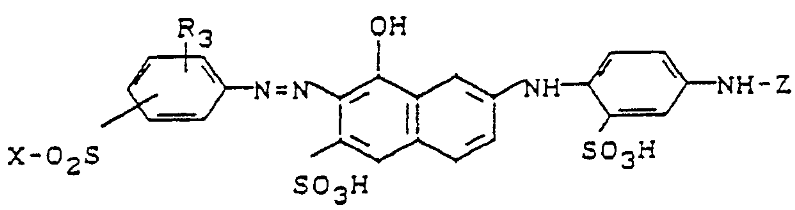

(17)

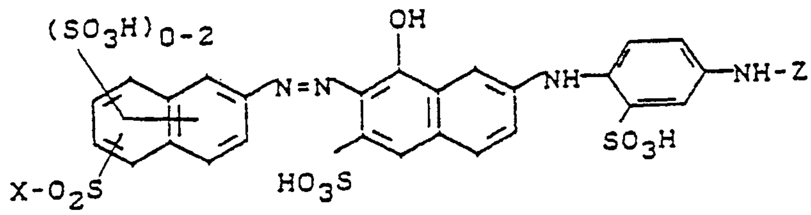

(18)

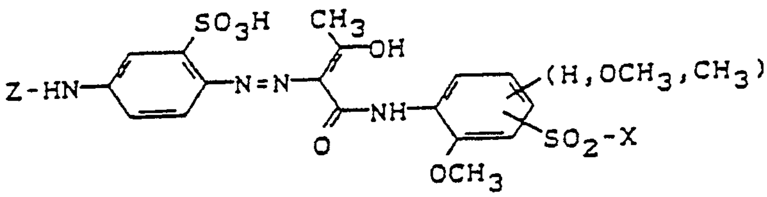

(19)

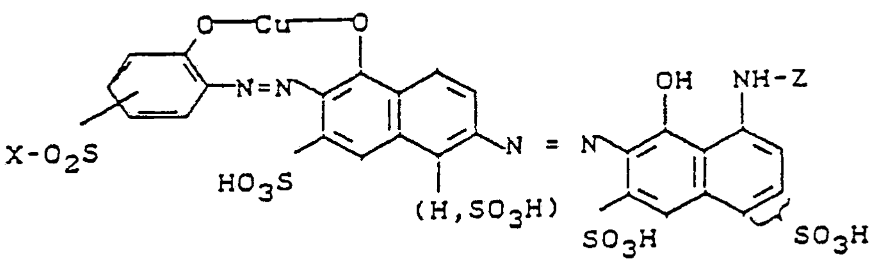

(20)

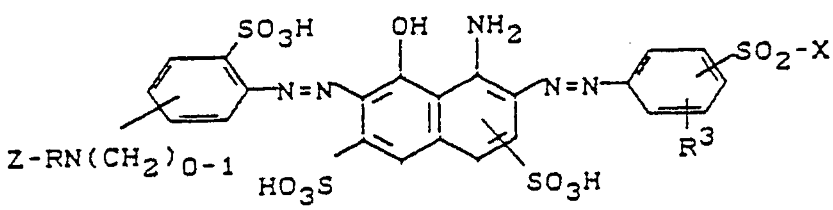

(21)

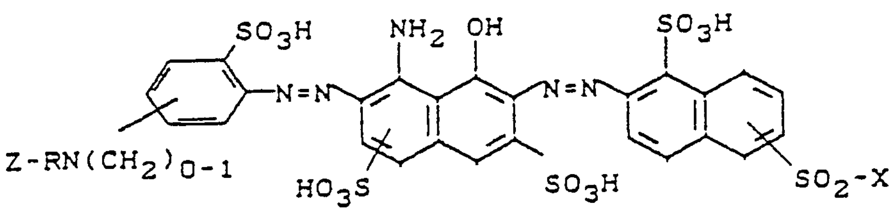

(22)

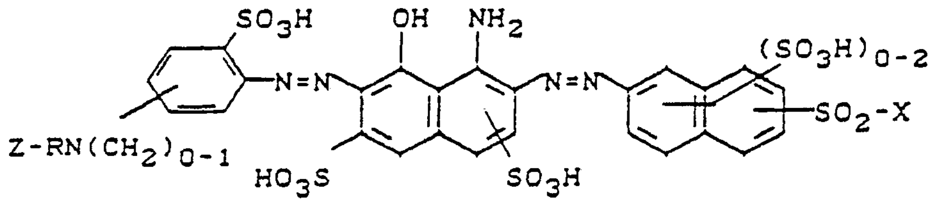

(23)

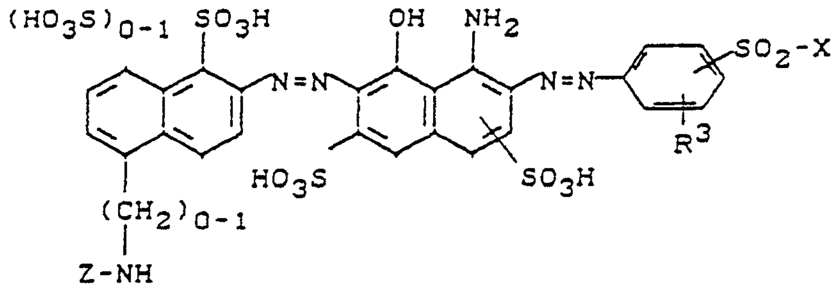

(24)

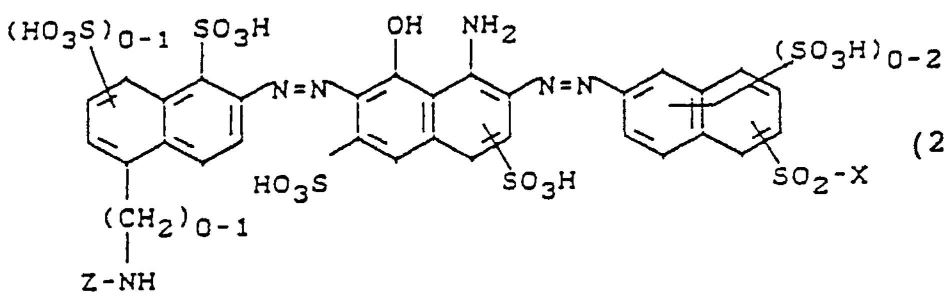

(25)

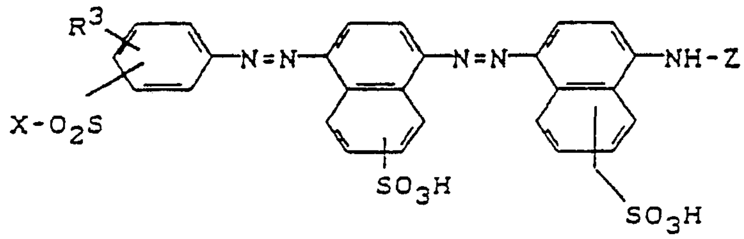

(26)

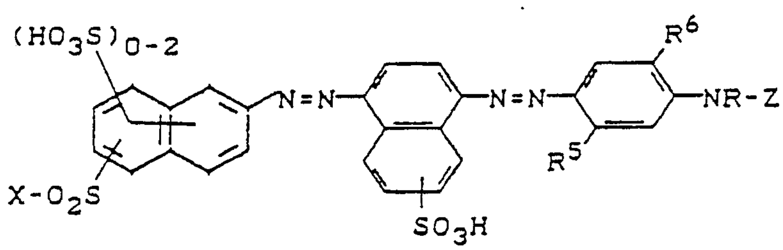

(27)

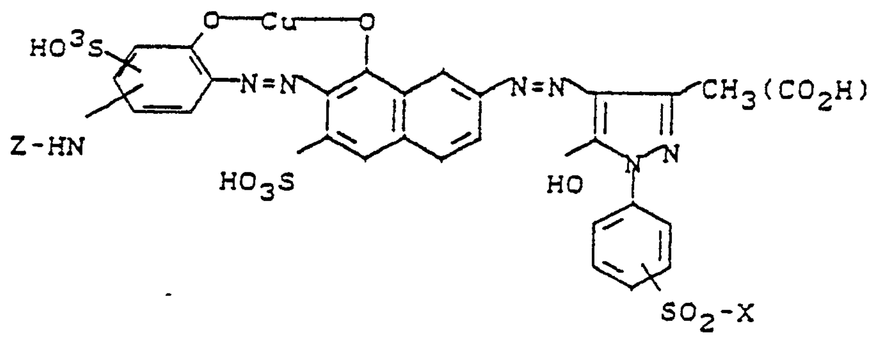

(28)

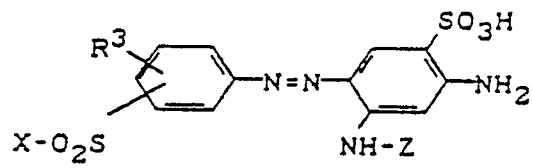

(29)

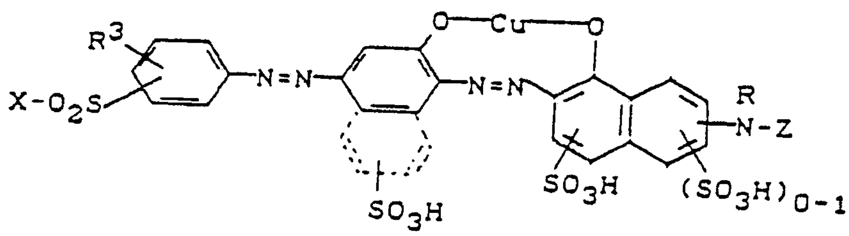

(30)

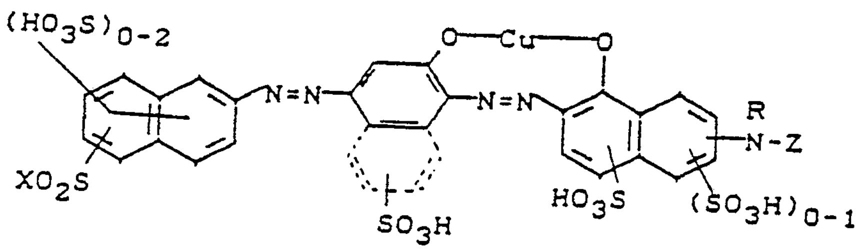

(31)

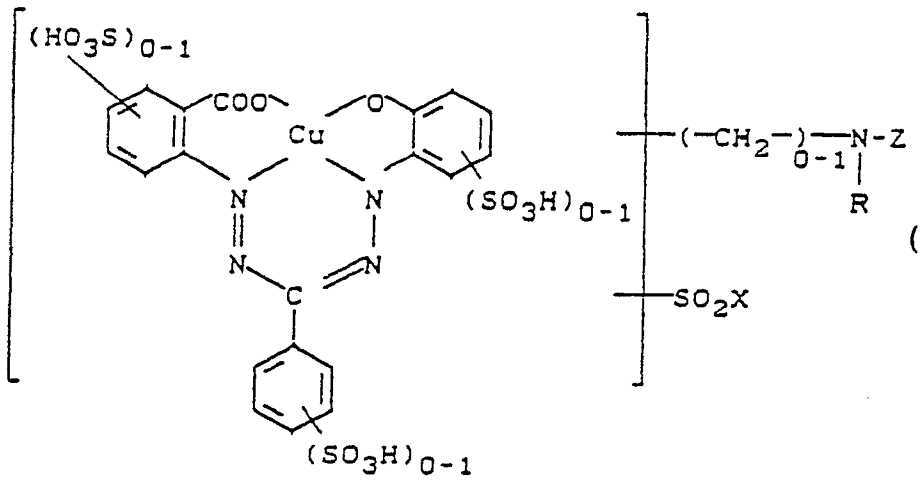

(32)

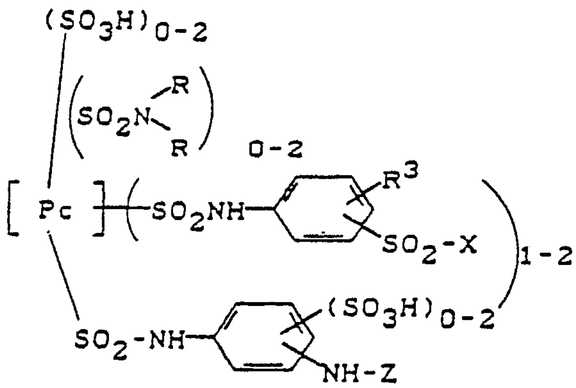

(33)

in which
Pc represents a Cu or Ni phthalocyanine radical and the total number of substituents on the Pc structure is a maximum of 4, and

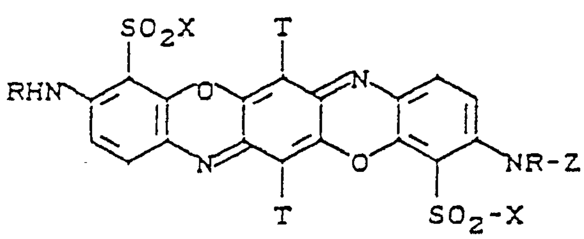

(34)

where
T = Cl, Br or $OCH_3$.

**3.** Dyestuffs of Claim 2 of the formulae (36) to (58a)

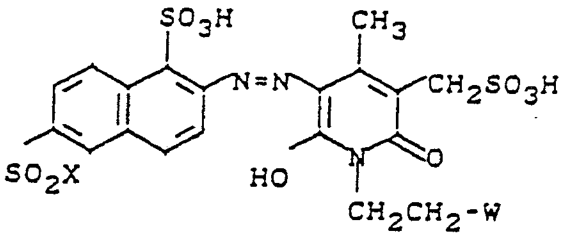

(36)

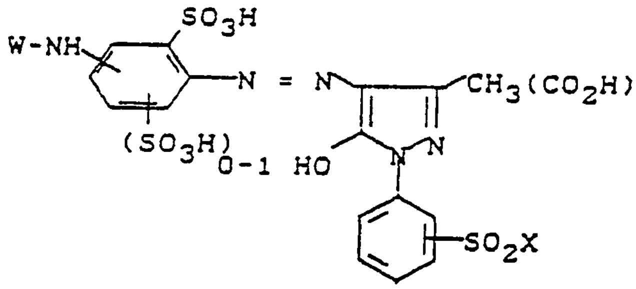

(37)

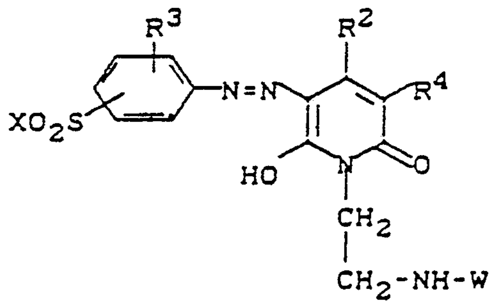

(38)

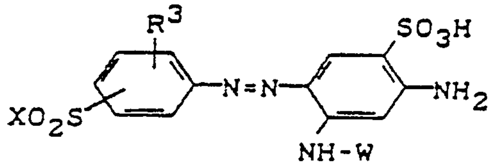

(39)

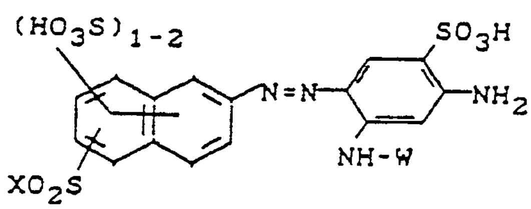

(40)

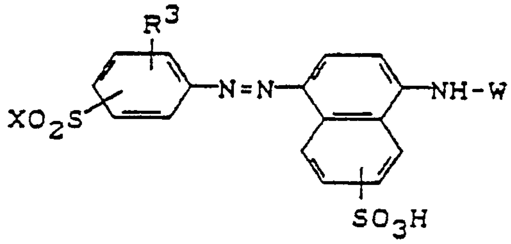

(41)

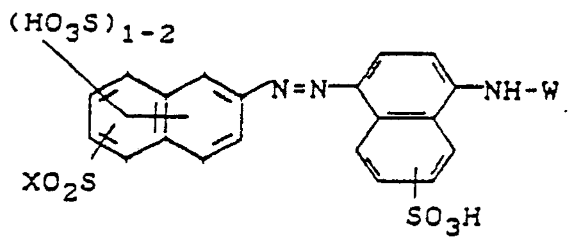

(42)

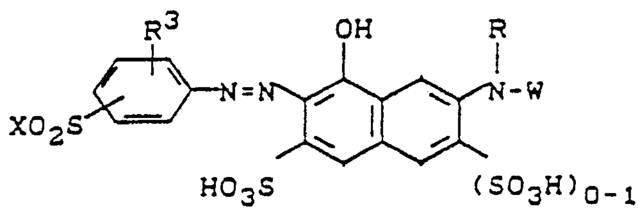

(43)

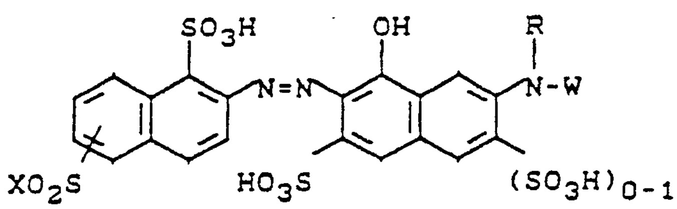

(44)

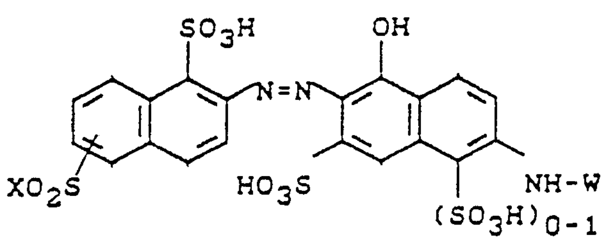

(45)

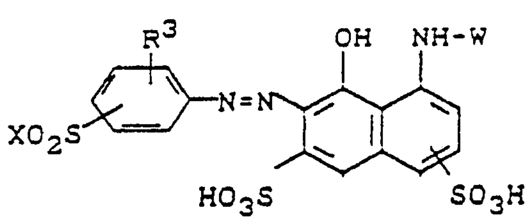

(46)

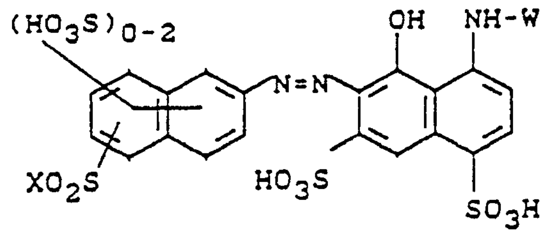

(47)

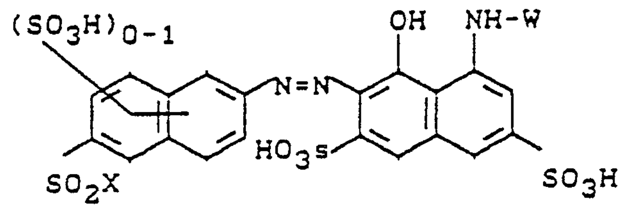

(47a)

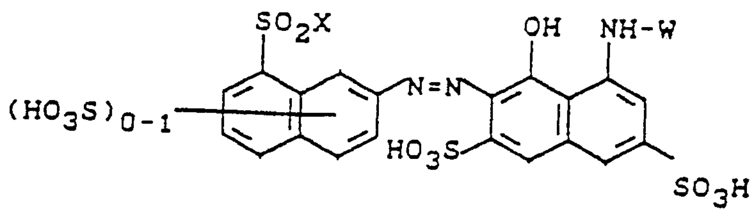

(47b)

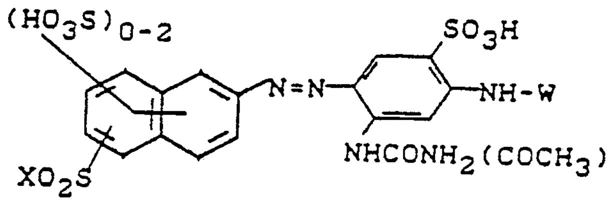

(48)

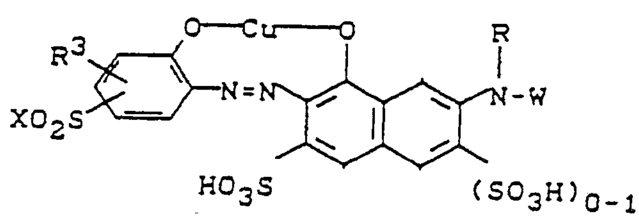

(49)

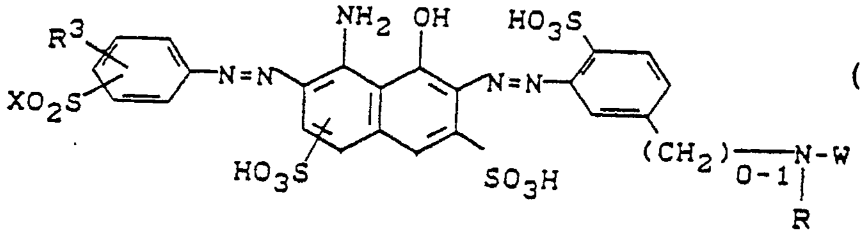

(50)

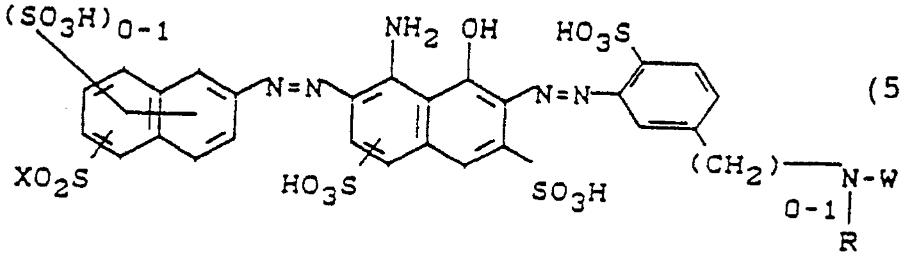

(51)

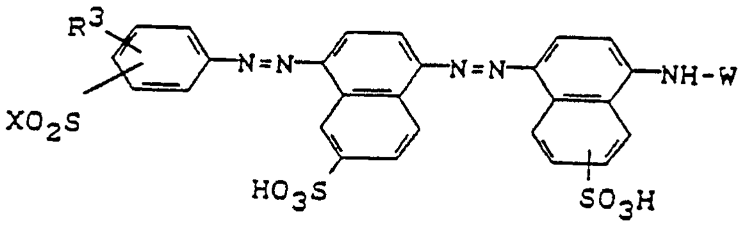

(52)

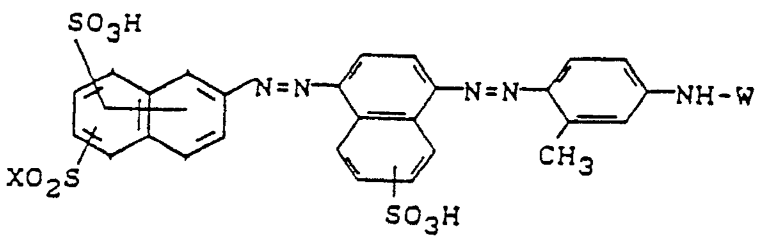

(53)

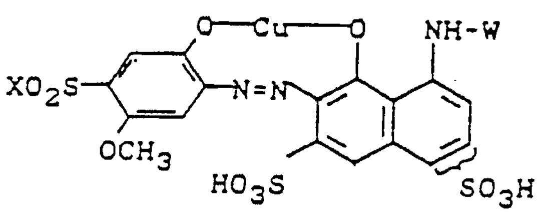

(54)

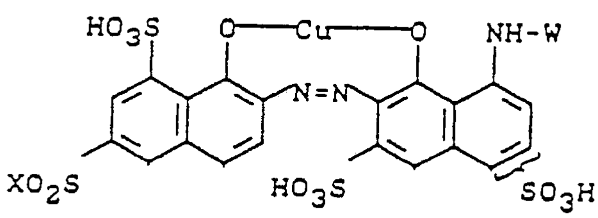

(55)

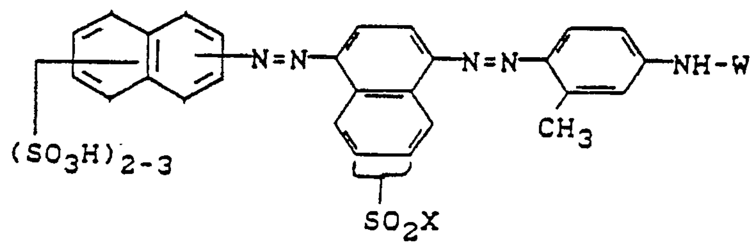

(56)

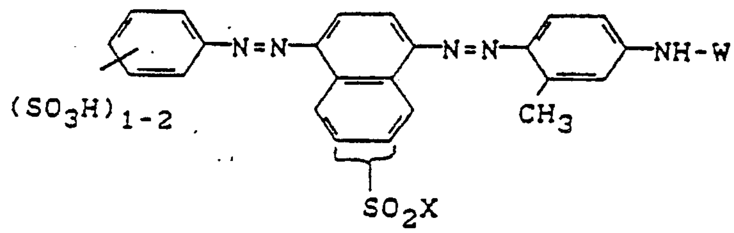

(57)

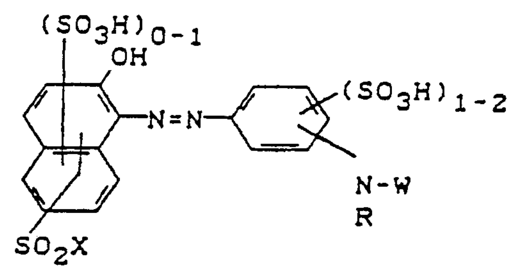

(58)

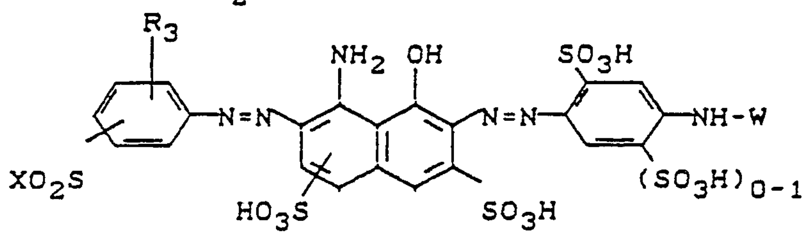

(58a)

where X = $-CH_2CH_2OSO_3H$ and

W =

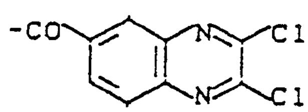

4. Dyestuffs of Claims 1 and 2 of the formulae (59) to (63)

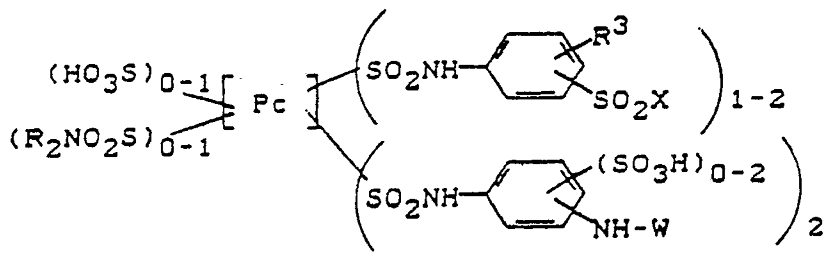

(59)

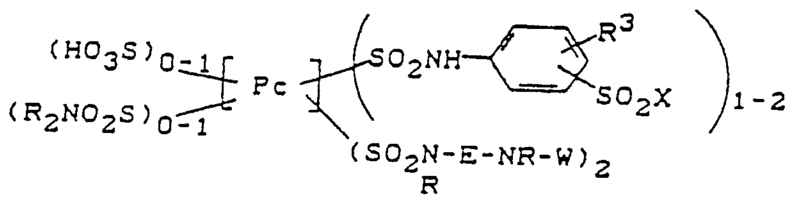

(59a)

in which Pc represents a Cu or Ni phthalocyanine radical and the total number of substituents on the Pc structure is a maximum of 4; E = an aliphatic bridging member, in particular $C_2$-$C_4$-alkylene,

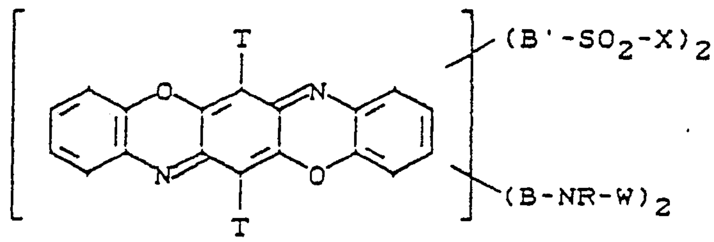

(60)

preferably

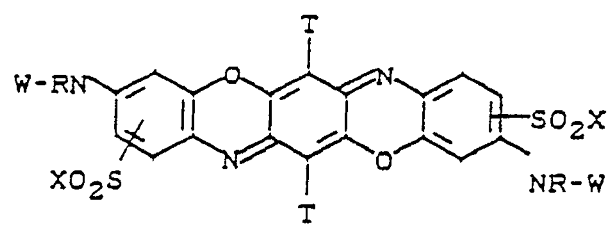

(61)

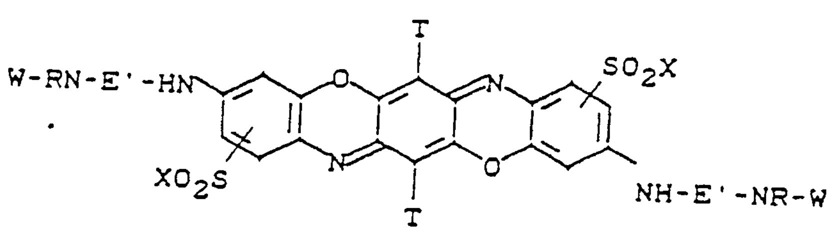

(62)

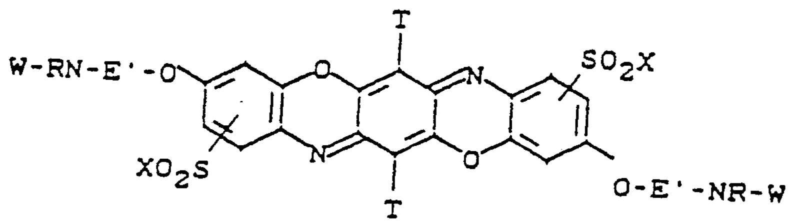

(63)

where
E' = an aliphatic or aromatic bridging member, in particular $C_2$-$C_4$-alkylene or phenylene.

5. Use of the dyestuffs of Claims 1-4 for dyeing and printing natural and synthetic OH- or amido-containing materials.

6. OH- or amido-containing materials dyed or printed using the dyestuffs of Claims 1-4.

**Revendications**

1. Colorants exempts de métal, de formule :

$$(X-O_2S-B-)_{1\ ou\ 2}\!-\![Fb]-B-\underset{}{\overset{R}{\overset{|}{N}}}-Z \qquad (1)$$

et leurs complexes métalliques
et colorants exempts de métal, de formule :

$$(X-O_2S-B-)_{1\ ou\ 2}[Fb']-(-B-\overset{R}{\overset{|}{N}}-Z)_2 \qquad (2)$$

et leurs complexes métalliques,
les symboles des formules (1) et (2) ayant les significations suivantes :

Fb' = radical d'un colorant de la série des colorants monoazoïques, anthraquinoniques, de phtalocyanines, de formazanes, d'azométhines, de dioxazines, de phénazines, de xanthènes, de thioxanthones, de naphtoquinones, stilbéniques ou du triphénylméthane,

Fb = radical d'un colorant de la série des colorants mono- ou poly-azoïques, anthraquinoniques, de phtalocyanines, de formazanes, d'azométhines, de dioxazines, de phénazines, de xanthènes, de thioxanthones, de naphtoquinones, stilbéniques ou du triphénylméthane ;

les radicaux Fb' et Fb pouvant contenir un ou plusieurs groupes acides sulfonique,

B et B' = liaison directe ou pont sur un atome de carbone cyclique d'un noyau aromatique-carbocyclique ou sur un atome de carbone ou d'azote cyclique d'un noyau aromatique-hétérocyclique dans Fb et Fb' respectivement,

X = $CH=CH_2$ ou $CH_2CH_2$-Y, avec

Y = substituant éliminable par les alcalis, par exemple $OSO_3H$, $SSO_3H$ $OCOCH_3$, $OPO_3H_2$, $OSO_2CH_3$, SCN, $NHSO_2CH_3$, Cl, Br, F, $OCOC_6H_5$, $OSO_2$-$C_6H_4CH_3$, $N(CH_3)_3]^+A^-$ ou

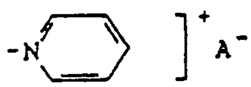, 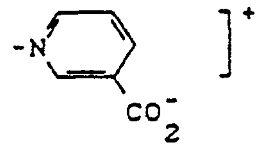

(A = halogénure ou sulfate)

R = H ou alkyle en $C_1$-$C_4$ éventuellement substitué par des halogènes, des groupes hydroxy, cyano, alcoxy en $C_1$-$C_4$, carboxy, sulfo ou sulfato,

Z = groupe réactif avec les fibres, de formule :

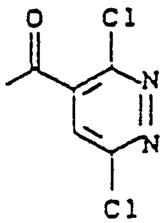 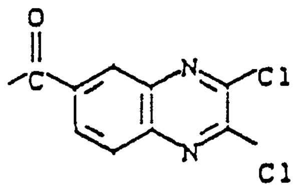, 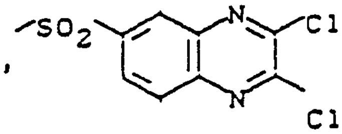,

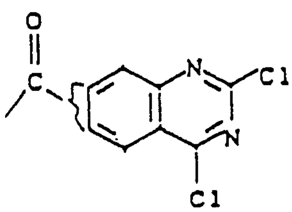, 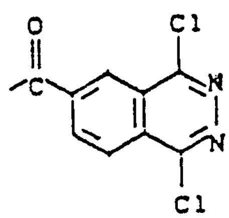, 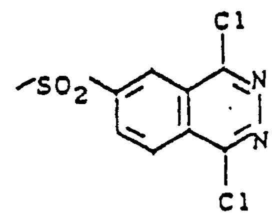,

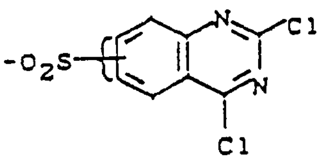, 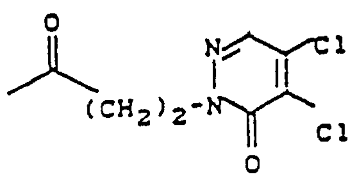, 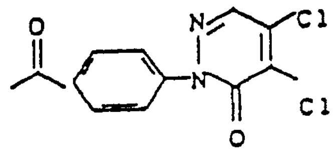,

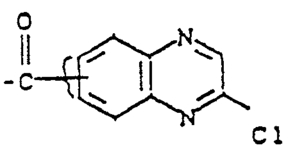, 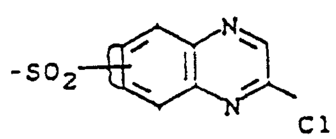,

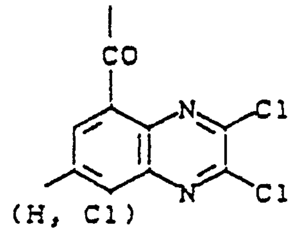
,
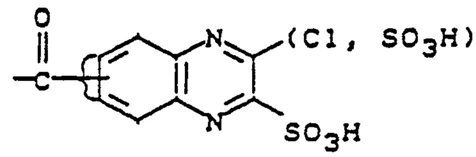
,

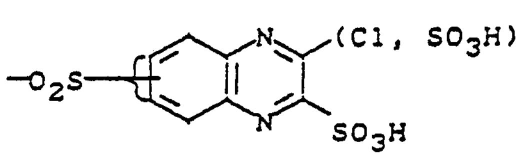
,
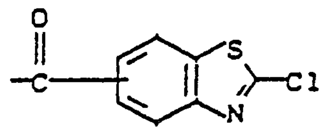
ou

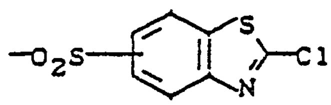

à l'exception des colorants du tableau 2, exemples 3 et 4 de la demande de brevet japonais publiée sous n° 45-10 789, de formules :

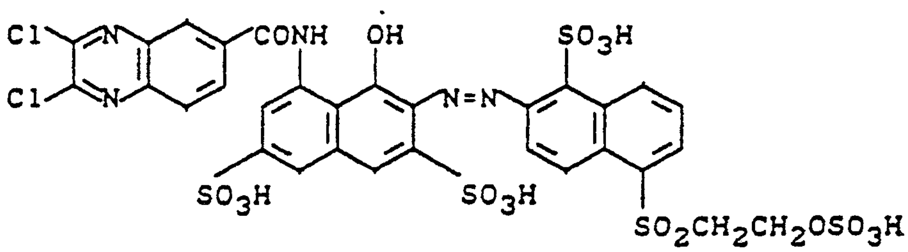

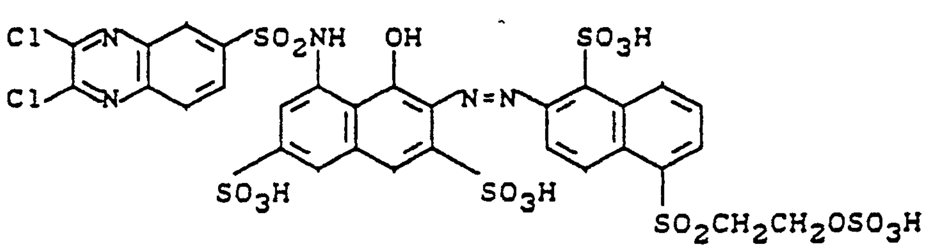

et de l'exemple 25 de la demande de brevet européen publiée sous n° 0 197 418, de formule :

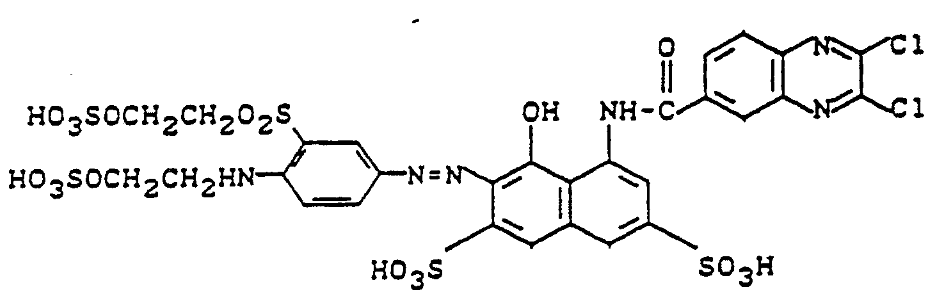

**2.** Colorants de la revendication 1, répondant aux formules (3) à (34) :

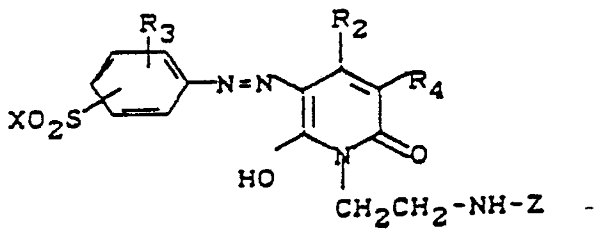

(3)

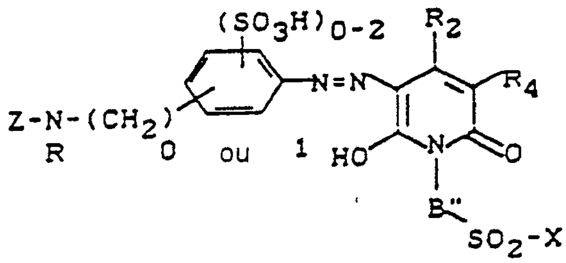

(3a)

B" = $-(CH_2)_{2-3}-$ , 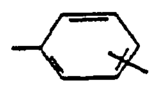

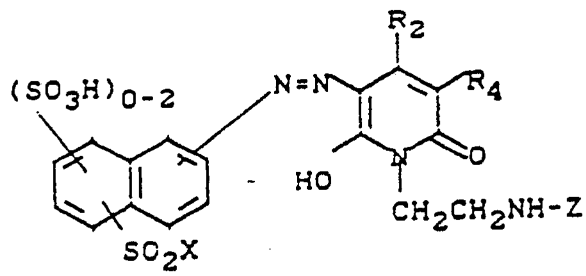

(4)

avec

$R_2$ = H, alkyle en $C_1$-$C_4$, plus spécialement $CH_3$ et $CH_2SO_3H$, COOH,

$R_3$ = H, alkyle en $C_1$-$C_4$, alcoxy en $C_1$-$C_4$, Cl, Br, COOH, $SO_3H$,

$R_4$ = H, $SO_3H$, $CH_2SO_3H$, Cl, alkylsulfonyle en $C_1$-$C_4$, carboxamide, en particulier $CONH_2$, ou carboxymono- et -di-(alkyle en $C_1$-$C_4$)-amide,

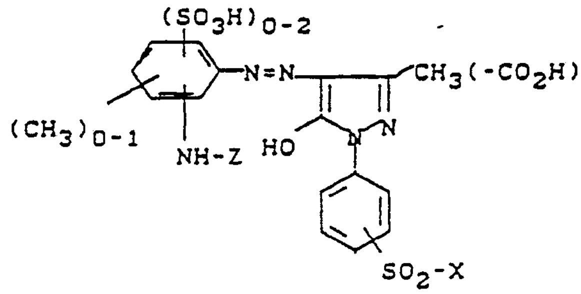

(5)

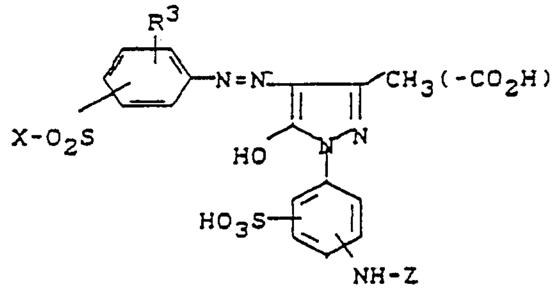

(6)

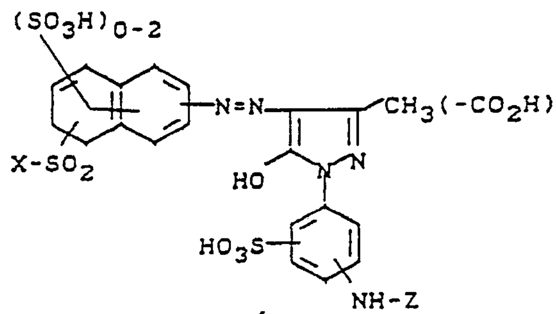

(7)

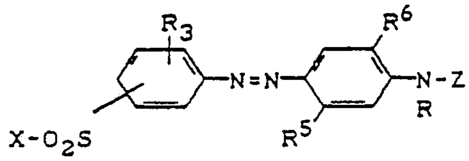

(8)

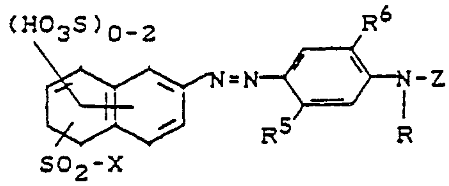

(9)

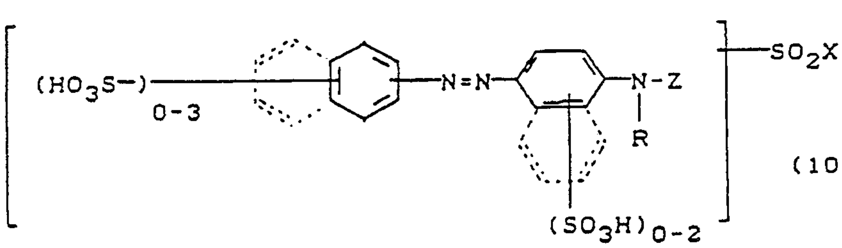

(10)

avec

$R_5$ = H, alkyle en $C_1$-$C_4$, alcoxy en $C_1$-$C_4$, acylamino, en particulier (alkyle en $C_1$-$C_4$)-carbonylamino, ou arylcarbonylamino, alkylsuflonylamino en $C_1$-$C_4$, Cl, Br, aminocarbonylamino, alkylsuflonylamino en $C_1$-$C_4$, arylsulfonylamino,

$R_6$ = H, alkyle en $C_1$-$C_4$, alcoxy en $C_1$-$C_4$, OH, $SO_3H$

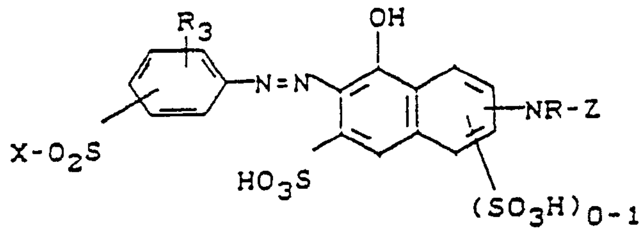

(11)

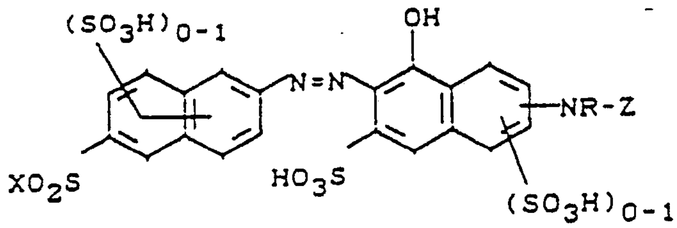

(12a)

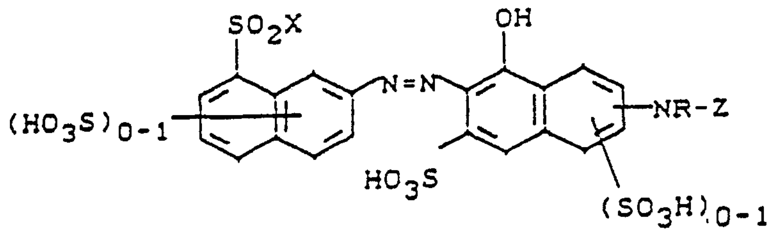

(12b)

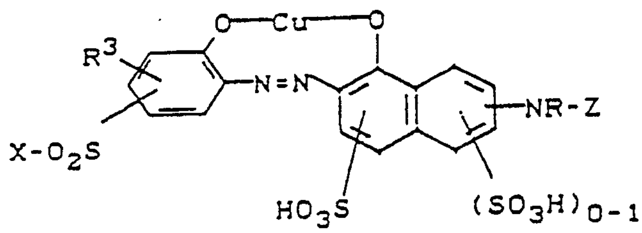

(13)

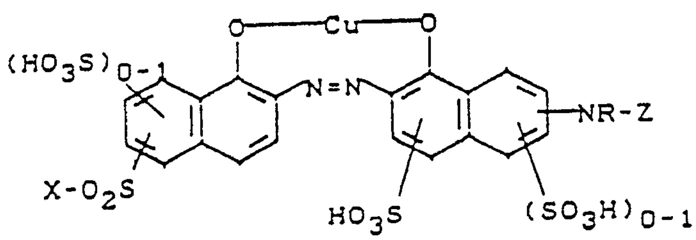

(14)

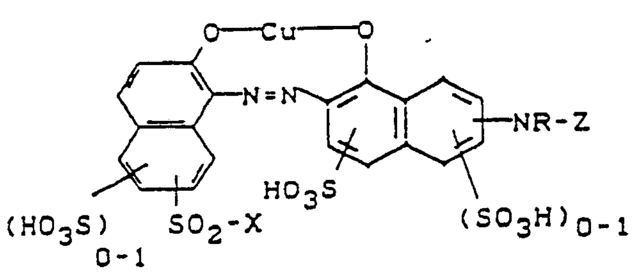

(15)

complexes métalliques 1 : 2 des colorants

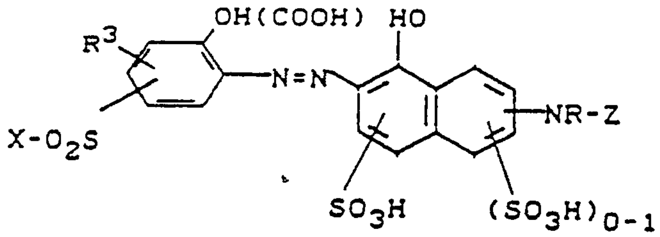

(16)

en particulier les complexes de Cr et de CO, contenant deux colorants (16) ou un colorant (16) et un autre colorant quelconque formant des complexes métalliques, en particulier un colorant azoïque ou un colorant d'azométhine,

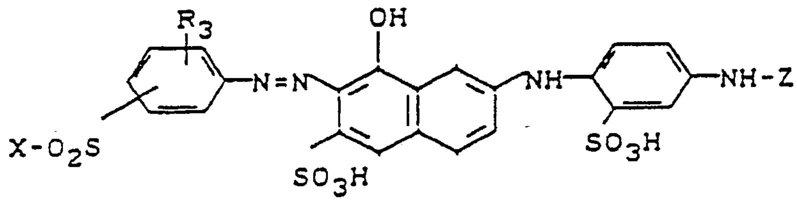

(17)

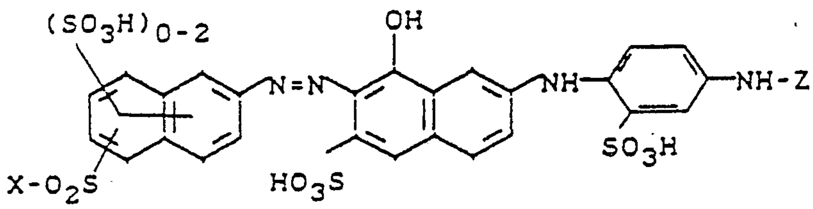

(18)

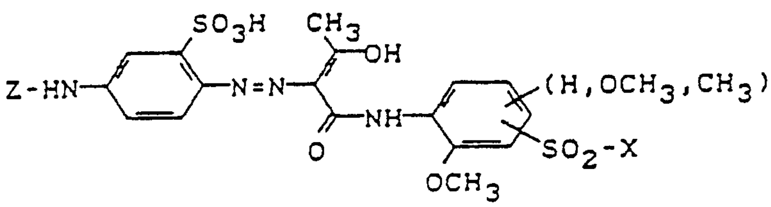

(19)

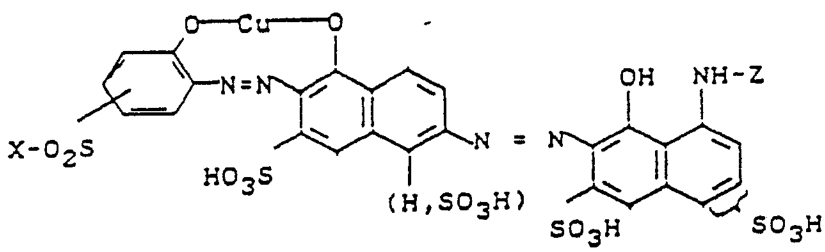

(20)

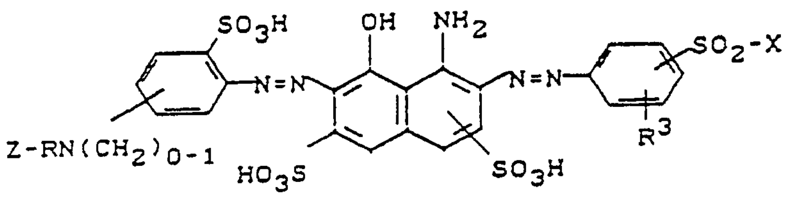

(21)

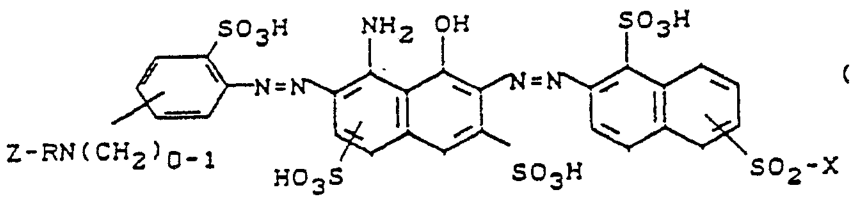

(22)

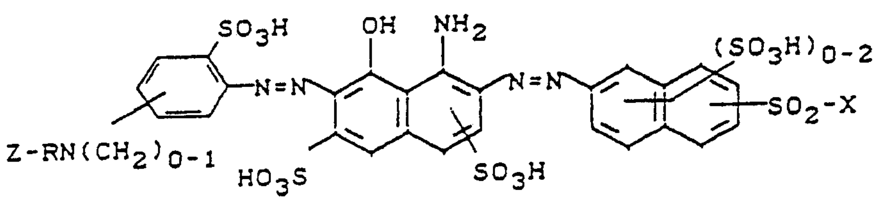

(23)

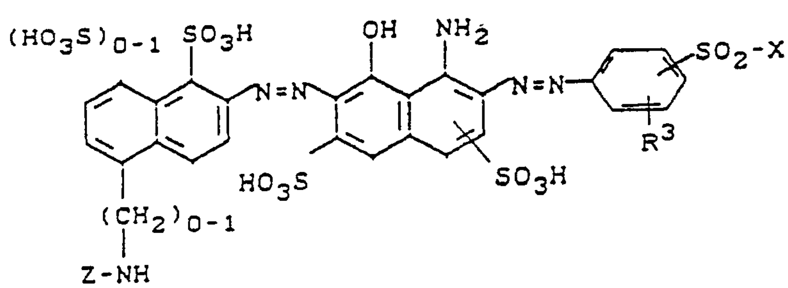

(24)

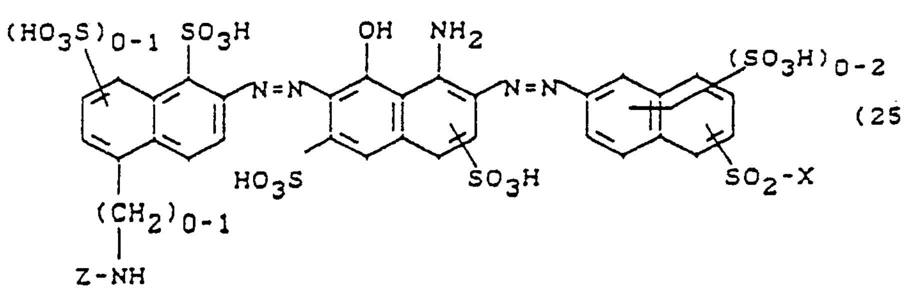

(25)

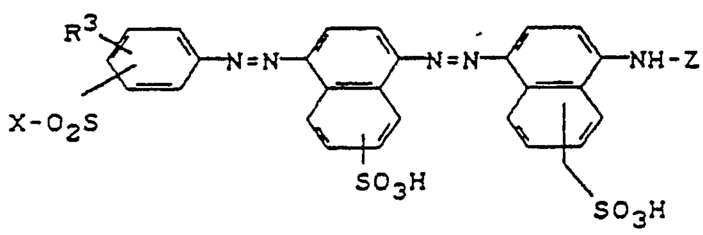

(26)

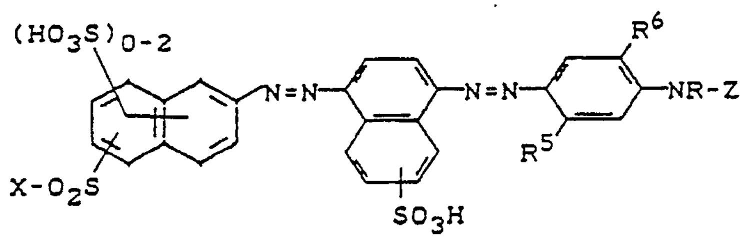

(27)

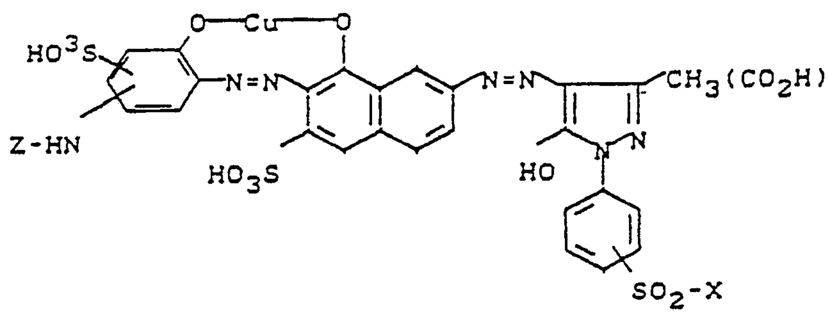

(28)

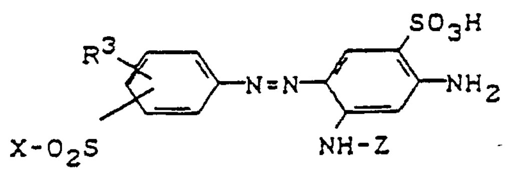

(29)

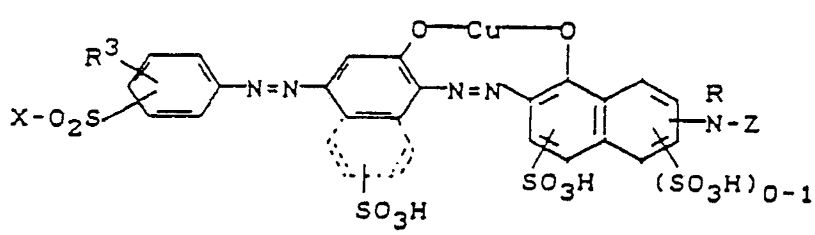

(30)

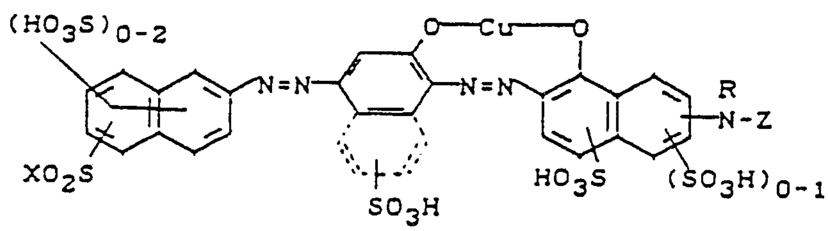

(31)

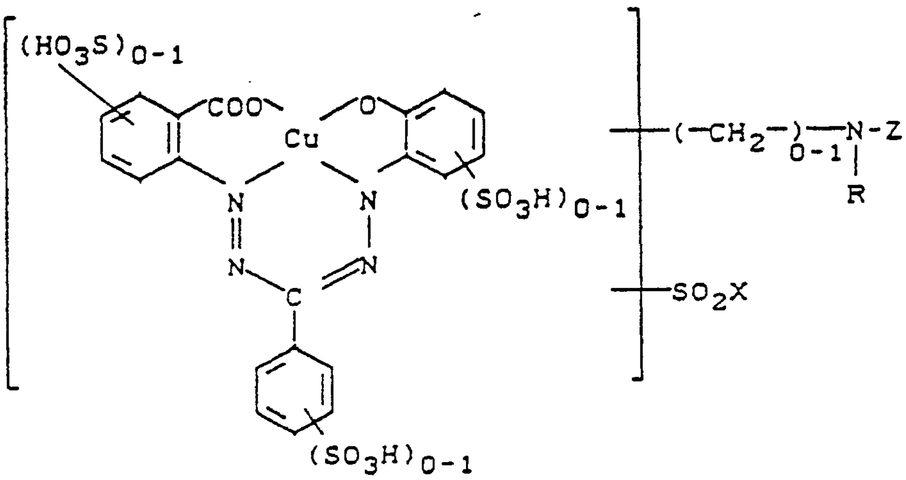

(32)

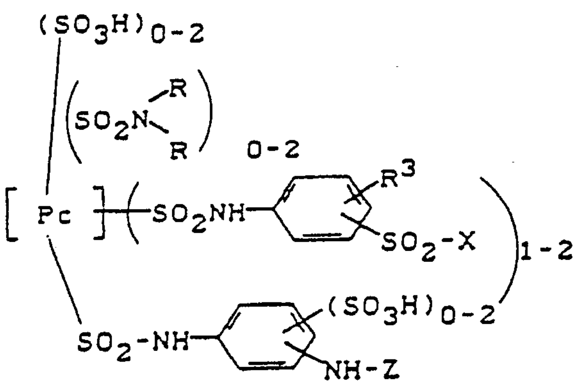

(33)

dans laquelle Pc représente un radical de phtalocyanine de Cu ou de Ni et le nombre total des substituants du squelette de Pc est de 4 au maximum,

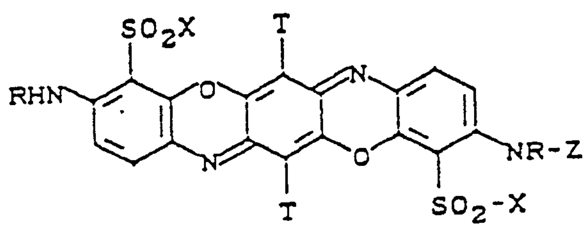

(34)

avec T = Cl, Br, $OCH_3$.

**3.** Colorants de la revendication 2, de formules (36) à (58a) :

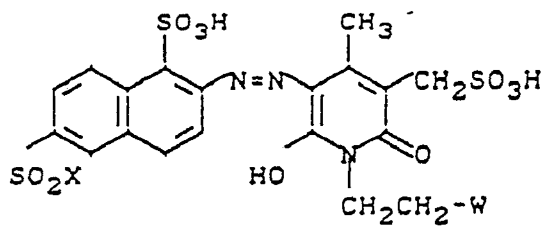

(36)

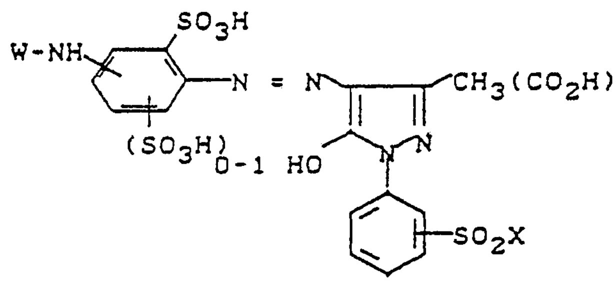

(37)

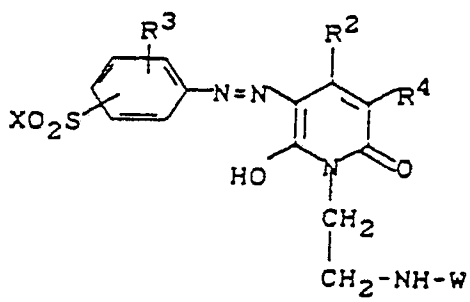

(38)

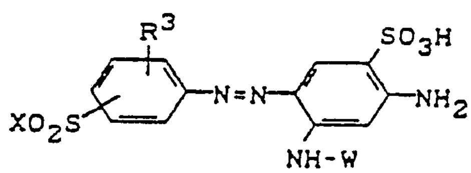

(39)

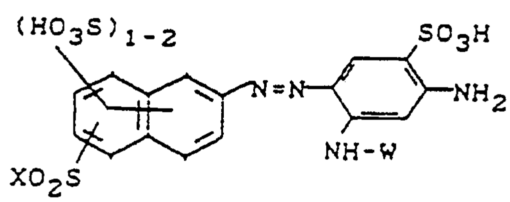

(40)

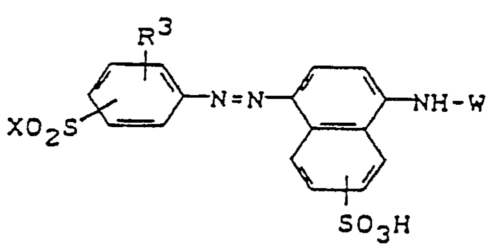

(41)

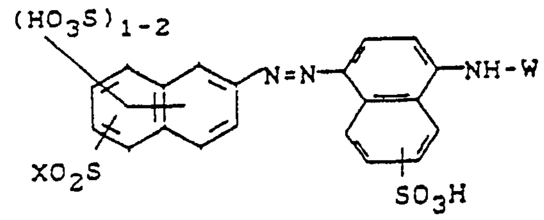

(42)

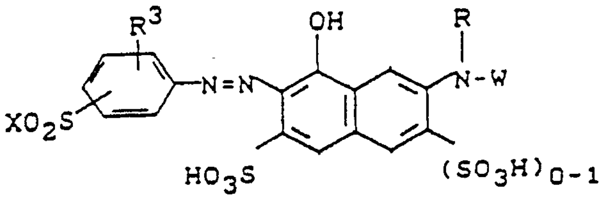

(43)

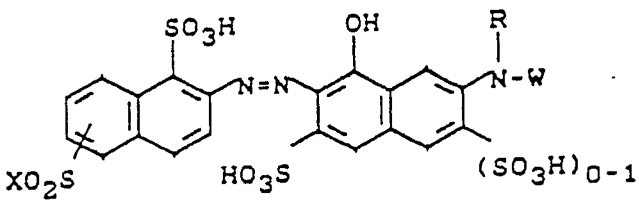

(44)

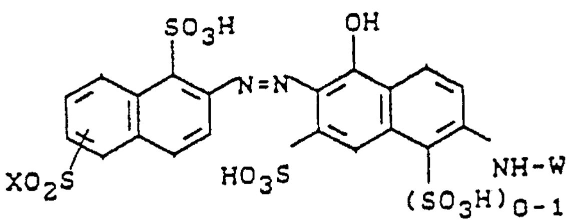

(45)

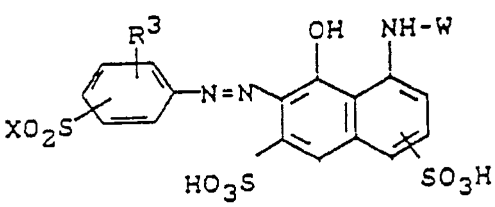

(46)

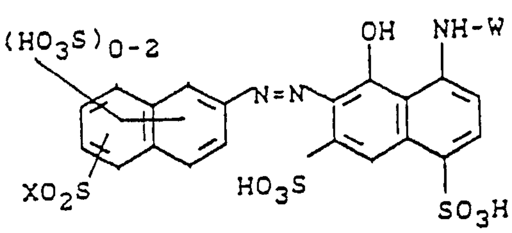

(47)

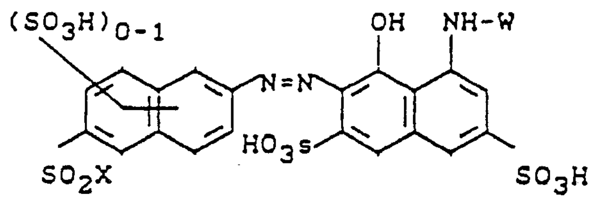

(47a)

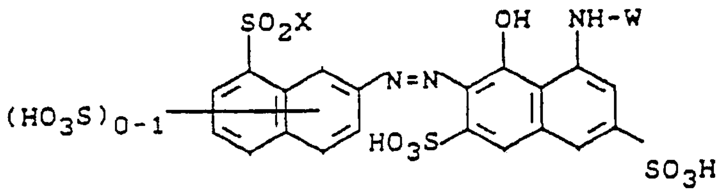

(47b)

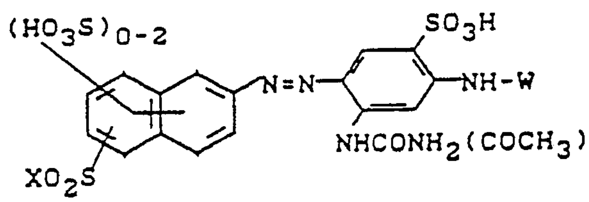

(48)

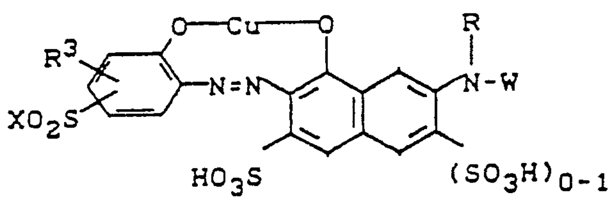

(49)

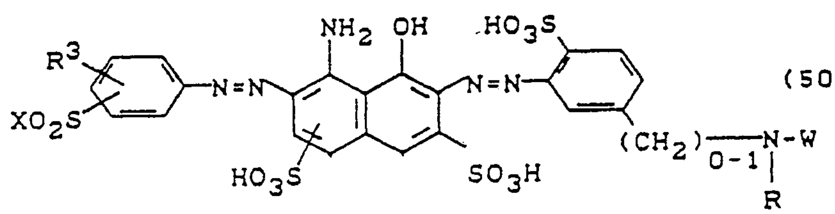

(50)

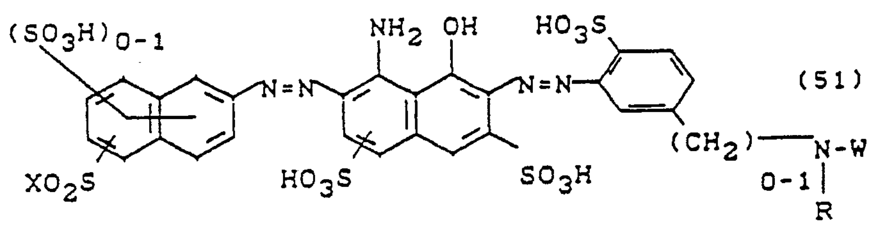

(51)

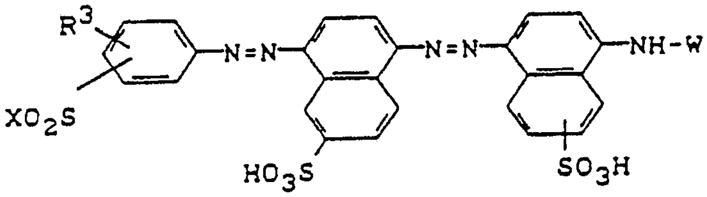

(52)

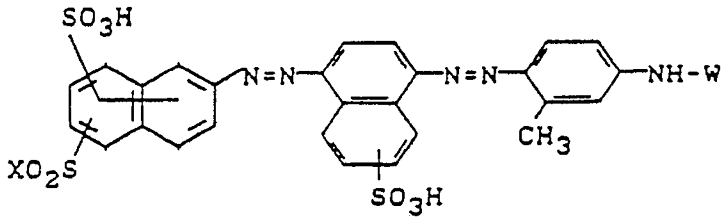

(53)

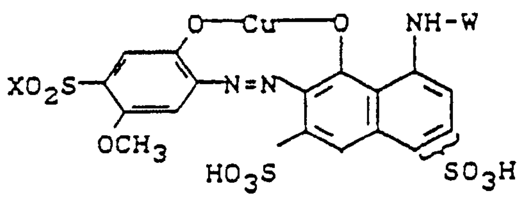

(54)

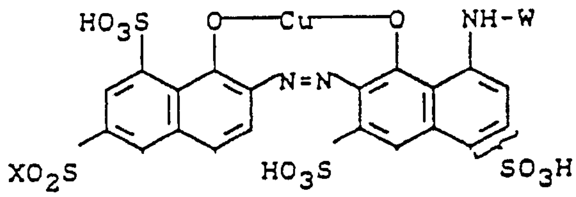

(55)

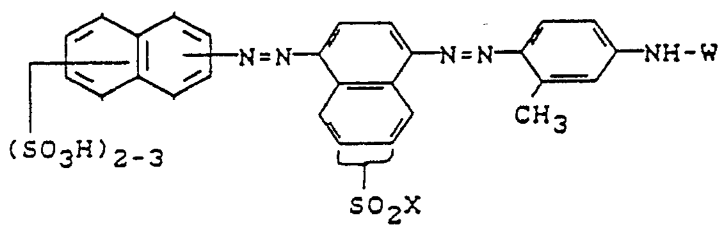

(56)

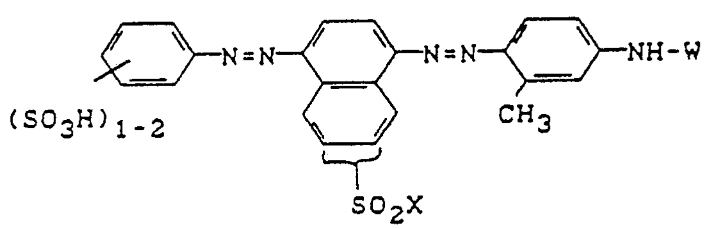

(57)

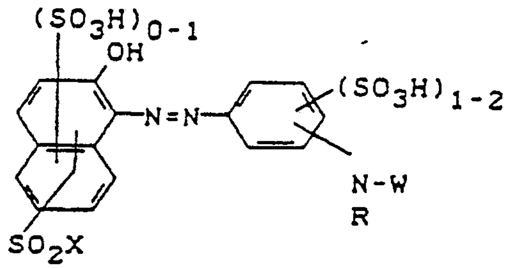

(58)

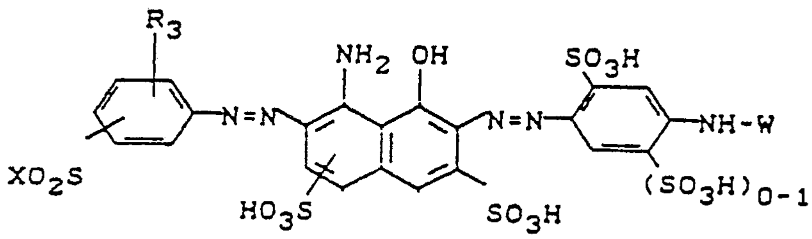

(58a)

avec $X = -CH_2CH_2OSO_3H$ et

W =

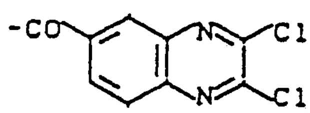

4. Colorants des revendications 1 et 2, de formules (59) à (63) :

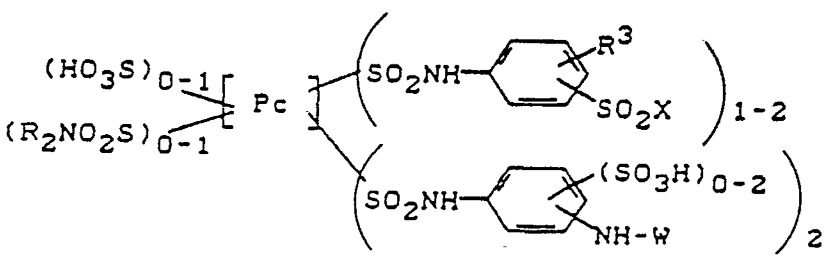

(59)

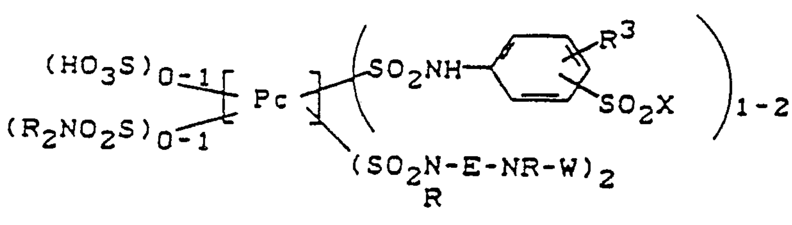

(59a)

dans lesquelles Pc représente un radical de phtalocyanine de Cu ou de Ni et le nombre total des substituants du squelette de Pc est au maximum de 4 ; E = pont aliphatique, en particulier alkylène en $C_2$-$C_4$,

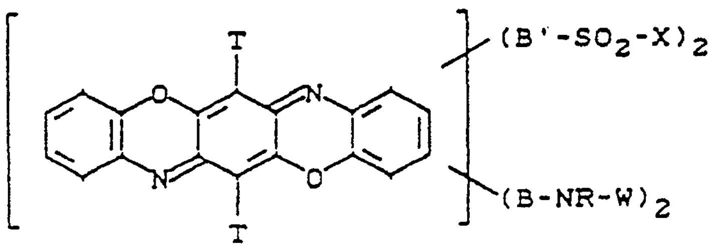

(60)

de préférence

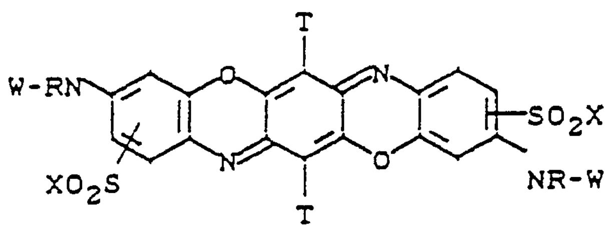

(61)

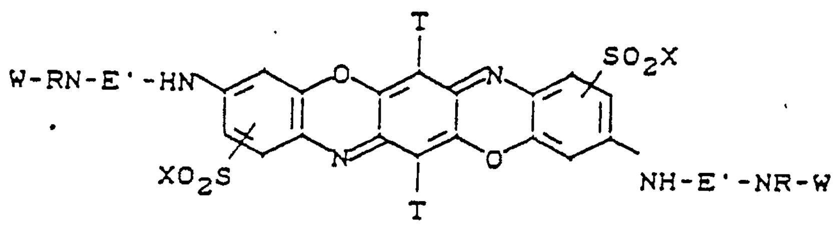

(62)

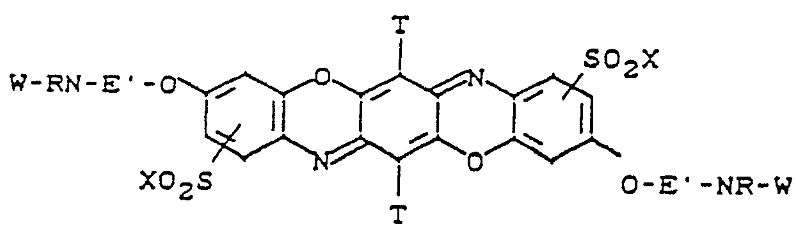

(63)

avec E' = pont aliphatique ou aromatique, en particulier alkylène en $C_2$-$C_4$ ou phénylène.

5. Utilisation des colorants des revendications 1 à 4 pour la teinture et l'impression de matières naturelles et synthétiques contenant des groupes OH ou des groupes amide.

6. Les matières contenant des groupes OH ou amide, teintes ou imprimées par des colorants des revendications 1 à 4.